# EUROPÄISCHE PATENTSCHRIFT

(11) **EP 0 531 258 B1**
(45) Veröffentlichungstag und Bekanntmachung des Hinweises auf die Patenterteilung: **10.09.1997**
(21) Anmeldenummer: 92810658.2
(22) Anmeldetag: 27.08.1992
(51) Int. Cl.: G03C 1/815

(54) **UV-Absorber enthaltendes photographisches Material**
Photographic material containing a UV-absorber
Matériau photographique contenant un absorbant UV

(30) Priorität: 05.09.1991 CH 2607/91
(43) Veröffentlichungstag der Anmeldung: 10.03.1993
(73) Patentinhaber: Ciba Specialty Chemicals Holding Inc., 4057 Basel (CH)
(72) Erfinder: Leppard, David G., Dr., CH-1723 Marly (CH); Toan, Vien Van, Dr., CH-1745 Lentigny (CH); Slongo, Mario, Dr., CH-1712 Tafers (CH)

(56) Entgegenhaltungen:
- EP-A- 0 057 160
- CH-A- 484 695
- DE-A- 2 113 833
- US-A- 4 853 471

## Beschreibung

Die vorliegende Erfindung betrifft neues photographisches Material, das UV-Absorber, insbesondere vom Tris-2-hydroxyphenyltriazinyltyp enthält.

Die Verwendung von 2-Hydroxyphenyl-1,3,5-triazinen als Stabilisierungsrnittel gegen Ultraviolettstrahlung in photographischen Materialien ist bekannt, z. B. aus der DE-A-2 113 833.

Bisher in photographischen Materialien als UV-Absorber verwendete Hydroxyphenylbenztriazole zeigten den Nachteil, dass ihre eigene Stabilität gegen Licht unzureichend war. Aus diesem Grund nimmt die Wirksamkeit dieser UV-Absorber mit zunehmender Belichtung ab. Ferner haben in vielen Fällen mangelnde chemische Stabilität, geringe Löslichkeit, zu hohe Eigenfarbe oder zu niedriger Extinktionskoeffizient der Triazine ihre Anwendung in photographischen Materialien verhindert.

Es wurde nun eine Gruppe von Triazin-UV-Absorbern gefunden, die sich überraschenderweise weitgehend frei von solchen Nachteilen erweisen. Sie zeigen eine verbesserte Eigenlichtstabilität und besitzen die Eigenschaft, Bildfarbstoffe und Farbkuppler besser gegen Lichteinwirkung zu schützen als dies mit den üblicherweise in photographischen Materialien verwendeten Hydroxyphenylbenztriazolen und Triazinen möglich war. Insbesondere ist diese Gruppe von Triazinen geeignet, die Stabilität der Magenta- und Cyanschicht photographischer Materialien zu erhöhen, indem sie z.B. in Schichten, welche über der Magenta- oder Cyanschicht angebracht sind, oder direkt in die Cyanschicht eingelagert werden. Ferner können diese Triazine mit Vorteil mit UV-Absorbern vom Hydroxyphenylbenztriazoltyp, insbesondere bei Raumtemperatur flüssigen Vertretern hiervon (vgl. beispielsweise US-A-4,853,471, US-A-4,973,702, US-A-4,921,966 und US-A-4,973,701) kombiniert werden. Solche Kombinationen erlauben eine beträchtliche Reduktion der Oelmenge, die zur Einarbeitung der UV-Absorber in die betreffende photographische Schicht notwendig ist. Daraus resultiert eine geringe Schichtdicke oder, bei konstant gehaltener Schichtdicke, eine höhere Konzentration an UV-Absorber.

Auch Kombinationen der Triazine mit anderen Typen von UV-Absorbern wie Benzophenonen, Oxaniliden, Cyanoacrylaten, Salicylsäureestern, Acrylnitrile oder Thiazolinen eignen sich zur Verwendung in photographischen Materialien.

Insbesondere lassen sich photographische Materialien ähnlich solchen, wie sie in US-A-4,518,686 beschrieben sind, mit gutem Erfolg stabilisieren.

Gegenstand vorliegender Anmeldung ist somit photographisches Material enthaltend auf einem Träger eine blauempfindliche, eine grünempfindliche und/oder eine rotempfindliche Silberhalogenidemulsionsschicht sowie gegebenenfalls eine Protektionsschicht, wobei zwischen der obersten Silberhalogenidemulsionsschicht und der Protektionsschicht, beziehungsweise oberhalb der obersten Silberhalogenidschicht, eine Schicht mit einem UV-Absorber angeordnet ist, dadurch gekennzeichnet, dass der UV-Absorber der Formel 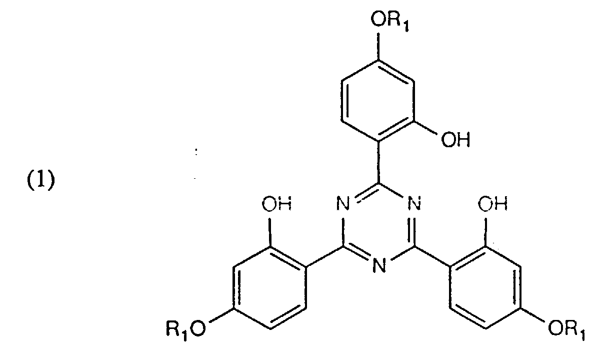 entspricht, worin
die Reste R₁ unabhängig voneinander Alkyl mit 1 bis 18 Kohlenstoffatomen substituiert mit Hydroxyl, Alkenoxy mit 2 bis 18 Kohlenstoffatomen, -CO₂H, -CO₂R₂ und/oder -O-COR₃ durch Sauerstoff unterbrochenes Alkyl oder Hydroxyalkyl oder Glycidyloxyalkyl mit 3 bis 50 Kohlenstoffatomen, Glycidyl, eine Gruppe der Formel 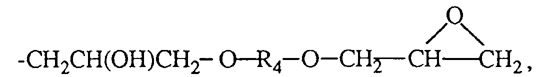 Phenylalkyl mit 1 bis 5 Kohlenstoffatomen im Alkylteil oder -CH₂CH(OH)R₇ sind, wobei
R₂ Alkyl mit 1 bis 18 Kohlenstoffatomen oder Sauerstoff, Schwefel oder Stickstoff unterbrochenes Alkyl oder Hydroxyalkyl mit 3 bis 30 Kohlenstoffatomen, Hydroxyalkyl mit 2 bis 18 Kohlenstoffatomen, Alkenyl mit 3 bis 18 Kohlenstoffatomen, Glycidyl, Cycloalkyl mit 5 bis 8 Kohlenstoffatomen, Benzyl, Alkylphenyl mit 1 bis 12 Kohlenstoffatomen im Alkylteil, Phenyl, Furfuryl oder ein Rest der Formel -CH₂CH(OH)R₇ ist,
R₃ Alkyl mit 1 bis 18 Kohlenstoffatomen, Alkenyl mit 2 bis 18 Kohlenstoffatomen oder Phenyl ist,
R₄ Alkylen mit 2 bis 10 Kohlenstoffatomen, Phenylen oder eine Gruppe der Formel 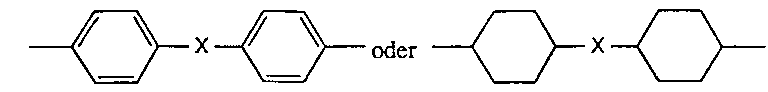 ist,
   und
R₇ Phenylalkyl mit 1 bis 6 Kohlenstoffatomen im Alkylteil oder ein Rest der Formel -CH₂OR₈ ist, wobei
X -O-, -S-, -SO₂-, -CH₂- oder -C(CH₃)₂- ist und
R₈ Cyclohexyl, Benzyl, Phenyl oder Tolyl ist;
   oder die Reste R₁ unabhängig voneinander ein Rest der Formel -CH₂-CH(ORₓ)R_{y}, -CH₂CH(ORₓ)CH₂OR_{z}, 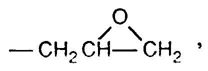 -CH₂COR_{y} oder -CH₂COCH₂OR_{z} sind, wobei
Rₓ H, -CORₛ, -COOR_{w} oder -SiRₚR_{q}Rᵣ,
R_{y} C₁-C₁₈-Alkyl oder Phenyl-C₁-C₄-Alkyl,
R_{z} C₁-C₁₈-Alkyl, C₂-C₁₈-Alkenyl, Phenyl-C₁-C₄-Alkyl, -CORₛ oder durch Sauerstoff
unterbrochenes C₂-C₂₄-Alkyl oder C₂-C₂₄-Hydroxyalkyl,
Rₛ C₁-C₁₈-Alkyl, C₂-C₁₈-Alkenyl oder Phenyl,
R_{w} C₁-C₄-Alkyl und
Rₚ, R_{q} und Rᵣ unabhängig voneinander C₁-C₆-Alkyl oder Phenyl bedeuten; oder
die Reste R₁ unabhängig voneinander eine Gruppe G-II sind,
wobei II eine Gruppe der Formel 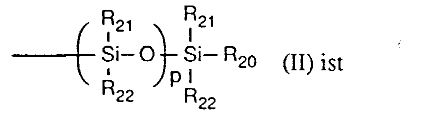 und
G eine direkte Bindung oder eine zweiwertige Gruppe einer der folgenden Formeln ist:

-(CH₂)_{q}-, -(CH₂)_{q}-O-, -(CH₂)_{q}-O-R₂₆-, -(CH₂)_{q}-CO-X-(CH₂)ᵣ-, -(CH₂)_{q}-CO-X-(CH₂)ᵣ-O-,

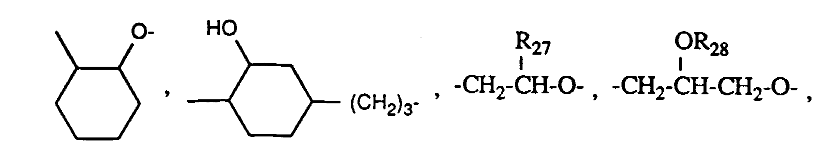

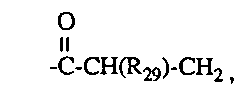

-CH₂-CH(OH)-CH₂-Y-(CH₂)_{q}-,

worin q und r unabhängig voneinander 1-4 und p 0-50 sind,
R₂₆ C₁-C₁₂-Alkylen, Cyclohexylen oder Phenylen bedeutet,
R₂₇ C₁-C₁₂-Alkyl, C₅-C₈-Cycloalkyl, Phenyl, C₂-C₁₃-Alkoxymethyl, C₆-C₉-Cycloalkoxymethyl oder Phenoxymethyl bedeutet,
R₂₈ eine Gruppe der Formel G-II bedeutet,
R₂₉ Wasserstoff oder Methyl ist,
X -O- oder -NR₂₃- bedeutet, worin R₂₃ Wasserstoff, C₁-C₁₂-Alkyl oder eine Gruppe -(CH₂)₃-G-II oder -(CH₂)₃-O-G-II bedeutet,
Y -O- oder -NH- bedeutet,
R₂₀, R₂₁ und R₂₂ unabhängig voneinander C₁-C₁₈-Alkyl, Cyclohexyl, Phenyl oder C₁-C₁₈-Alkoxy bedeuten.

Bedeuten Substituenten in den Verbindungen der Formel (1) Alkyl mit 1 bis 18 Kohlenstoffatomen, so kommen hierfür Reste wie Methyl, Aethyl, Propyl, Butyl, Pentyl, Hexyl, Heptyl, Octyl, Nonyl, Decyl, Undecyl, Dodecyl, Tehadecyl, Hexadecyl und Octadecyl sowie entsprechende verzweigte Isomeren in Frage. Alkylreste mit 3 bis 50 Kohlenstoffatomen, die durch Sauerstoff, Schwefel oder Stickstoff unterbrochen sind, sind beispielsweise 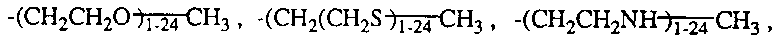 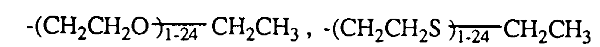 und 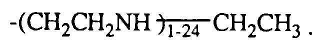 Alkenylreste mit 2 bis 18 Kohlenstoffatomen können ein oder, ab 4 Kohlenstoffatomen, mehrfach ungesättigt sein. Dialkylaminoalkylreste mit insgesamt 4 bis 16 Kohlenstoffatomen können beispielsweise durch die Formel 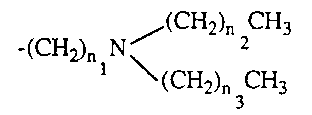 wiedergegeben werden, wobei die Summe von n₁, n₂ und n₃ 4 bis 16 ergibt. Alkylenreste mit 2 bis 10 Kohlenstoffatomen können von entsprechenden Alkylresten abgeleitet werden. Durch Sauerstoff unterbrochene Alkylenreste mit 4 bis 50 Kohlenstoffatomen können z.B. der Formel 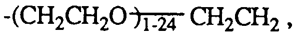 entsprechen.

Phenyl ist,
R₄ Alkylen mit 2 bis 10 Kohlenstoffatomen, Phenylen oder eine Gruppe der Formel 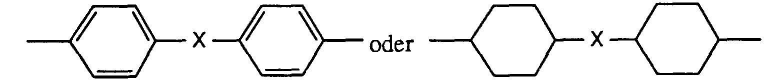 ist,
R₅ Alkyl mit 1 bis 18 Kohlenstoffatomen, Alkenyl mit 2 bis 18 Kohlenstoffatomen oder Phenyl ist,
R₆ Alkyl mit 1 bis 12 Kohlenstoffatomen, Phenyl, Naphthyl oder Alkylphenyl mit 1 bis 18 Kohlenstoffatomen im Alkylteil und
R₇ Phenylalkyl mit 1 bis 6 Kohlenstoffatomen im Alkylteil oder ein Rest der Formel -CH₂OR₈ ist, wobei
X -O-, -S-, -SO₂-, -CH₂- oder -C(CH₃)₂- ist und
R₈ Cyclohexyl, Benzyl, Phenyl oder Tolyl ist;
oder die Reste R₁ unabhängig voneinander ein Rest der Formel -CH₂-CH(ORₓ)R_{y}, -CH₂CH(ORₓ)CH₂OR_{z}, 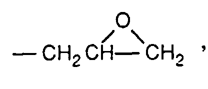 -CH₂COR_{y} oder -CH₂COCH₂OR_{z} sind, wobei
Rₓ H, -CORₛ, -COOR_{w} oder -SiRₚR_{q}Rᵣ,
R_{y} C₁-C₁₈-Alkyl oder Phenyl-C₁-C₄-Alkyl,
R_{z} C₁-C₁₈-Alkyl, C₂-C₁₈-Alkenyl, Phenyl-C₁-C₄-Alkyl, -CORₛ oder durch Sauerstoff unterbrochenes C₂-C₂₄-Alkyl oder C₂-C₂₄-Hydroxyalkyl,
Rₛ C₁-C₁₈-Alkyl, C₂-C₁₈-Alkenyl oder Phenyl,
R_{w} C₁-C₄-Alkyl und
Rₚ, R_{q} und Rᵣ unabhängig voneinander C₁-C₆-Alkyl oder Phenyl bedeuten; oder
die Reste R₁ unabhängig voneinander eine Gruppe G-II sind,
wobei II eine Gruppe der Formel 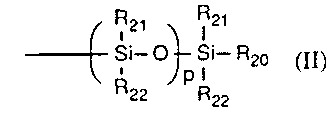 ist und G eine direkte Bindung oder eine zweiwertige Gruppe einer der folgenden Formeln ist:

-(CH₂)_{q}-, -(CH₂)_{q}-O-, -(CH₂)_{q}-O-R₂₆-, -(CH₂)_{q}-CO-X-(CH₂)ᵣ-, -(CH₂)_{q}-CO-X-(CH₂)ᵣ-O-,

Vorzugsweise werden solche Verbindungen der Formel (1) verwendet, worin die Reste R₁ unabhängig voneinander ein Rest der Formel -CH₂-CH(ORₓ)R_{y}, -CH₂CH(ORₓ)CH₂OR_{z}, 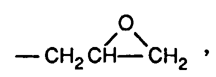 -CH₂COR_{y} oder -CH₂COCH₂OR_{z} sind, wobei
Rₓ H, -CORₛ, -COOR_{w} oder -SiRₚR_{q}Rᵣ,
R_{y} C₁-C₁₈-Alkyl oder Phenyl-C₁-C₄-Alkyl,
R_{z} C₁-C₁₈-Alkyl, C₂-C₁₈-Alkenyl, Phenyl-C₁-C₄-Alkyl, -CORₛ oder durch Sauerstoff unterbrochenes C₂-C₂₄-Alkyl oder C₂-C₂₄-Hydroxyalkyl,
Rₛ C₁-C₁₈-Alkyl, C₂-C₁₈-Alkenyl oder Phenyl,
R_{w} C₁-C₄-Alkyl und
Rₚ, R_{q} und Rᵣ unabhängig voneinander C₁-C₆-Alkyl oder Phenyl bedeuten; oder
die Reste R₁ unabhängig voneinander eine Gruppe G-II sind,
wobei II eine Gruppe der Formel 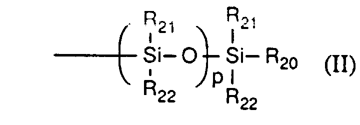 ist und
G eine direkte Bindung oder eine zweiwertige Gruppe einer der folgenden Formeln ist:

-(CH₂)_{q}-, -(CH₂)_{q}-O,-(CH₂)_{q}-O-R₂₆-,-(CH₂)_{q}-CO-X-(CH₂)ᵣ-,-(CH₂)_{q}-CO-X-(CH₂)ᵣ-O-,

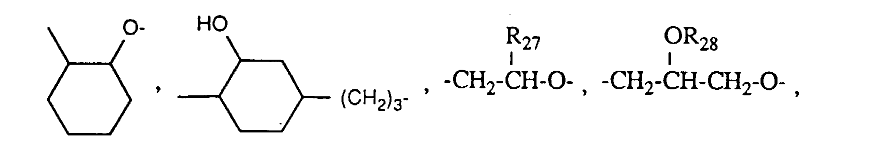

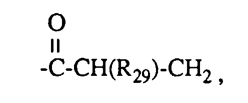

-CH₂-CH(OH)-CH₂-Y-(CH₂)_{q}-,

worin q und r unabhängig voneinander 1-4 und p 0-50 sind,
R₂₆ C₁-C₁₂-Alkylen, Cyclohexylen oder Phenylen bedeutet,
R₂₇ C₁-C₁₂-Alkyl, C₅-C₈-Cycloalkyl, Phenyl, C₂-C₁₃-Alkoxymethyl, C₆-C₉-Cycloalkoxymethyl oder Phenoxymethyl bedeutet,
R₂₈ eine Gruppe der Formel G-II bedeutet,
R₂₉ Wasserstoff oder Methyl ist,
X -O- oder -NR₂₃- bedeutet, worin R₂₃ Wasserstoff, C₁-C₁₂-Alkyl oder eine Gruppe -(CH₂)₃-G-II oder -(CH₂)₃-O-G-II bedeutet,
Y -O- oder -NH- bedeutet,
R₂₀, R₂₁ und R₂₂ unabhängig voneinander C₁-C₁₈-Alkyl, Cyclohexyl, Phenyl oder C₁-C₁₈-Alkoxy bedeuten.

Bevorzugt sind weiterhin Verbindungen der Formel (1), bei welchen die Reste R₁ unabhängig voneinander Reste der Formel -CH₂-CH(ORₓ)R_{y}, -CH₂CH(ORₓ)CH₂OR_{z}, -CH₂COR_{y} oder -CH₂COCH₂OR_{z} bedeuten, wobei
Rₓ H, -CORₛ, -COOR_{w} oder -SiRₚR_{q}Rᵣ,
R_{y} C₁-C₈-Alkyl,
R_{z} C₁-C₁₈-Alkyl, C₂-C₁₈-Alkenyl, Benzyl, -CORₛ oder durch Sauerstoff unterbrochenes C₂-C₂₄-Alkyl oder C₂-C₂₄-Hydroxyalkyl,
Rₛ C₁-C₁₈-Alkyl, C₂-C₁₈-Alkenyl oder Phenyl,
R_{w} C₁-C₄-Alkyl und
Rₚ, R_{q} und Rᵣ unabhängig voneinander C₁-C₆-Alkyl
bedeuten; oder
R₁ eine Gruppe G-II bedeuten,
wobei II eine Gruppe der Formel 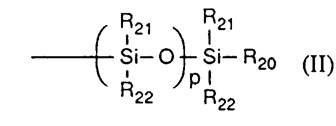 ist und
G eine direkte Bindung oder eine zweiwertige Gruppe einer der folgenden Formeln ist: -(CH₂)_{q}-, -(CH₂)_{q}-O-, -(CH₂)_{q}-CO-X-(CH₂)ᵣ-, 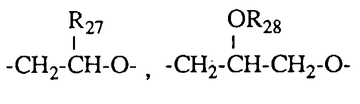 oder -CH₂-CH(OH)-CH₂-Y-(CH₂)_{q}-,
worin q und r unabhängig voneinander 1, 2 oder 3 und p 0-50 sind,
R₂₇ Methyl, Phenyl, C₃-C₉-Alkoxymethyl oder Phenoxymethyl bedeutet,
R₂₈ eine Gruppe der Formel G-II bedeutet,
X und Y -O- bedeuten,
R₂₀, R₂₁ und R₂₂ unabhängig voneinander C₁-C₈-Alkyl, Phenyl oder C₁-C₈-Alkoxy bedeuten.

Besonders bevorzugt werden solche Verbindungen der Formel (1) verwendet, worin die Reste R₁ unabhängig voneinander einen Rest der Formel -CH₂-CH(ORₓ)R_{y} oder
-CH₂CH(ORₓ)CH₂OR_{z} bedeuten, wobei
Rₓ H, -CORₛ, -COOCH₃ oder -Si(CH₃)₂Rᵣ,
R_{y} C₁-C₈-Alkyl,
R_{z} C₁-C₁₈-Alkyl, C₂-C₁₈-Alkenyl, -CORₛ oder durch Sauerstoff unterbrochenes
C₂-C₂₄-Alkyl oder C₂-C₂₄-Hydroxyalkyl,
Rₛ C₁-C₄-Alkyl oder C₂-C₄-Alkenyl und
Rᵣ C₁-C₆-Alkyl
bedeuten; oder
R₁ eine Gruppe G-II ist,
wobei II eine Gruppe der Formel 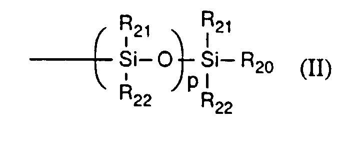 ist und
p 0 ist,
G eine zweiwertige Gruppe einer der folgenden Formeln ist: -(CH₂)₃-, -(CH₂)₂-O-, -CH₂-CO-O-CH₂-, -CH₂-CH(CH₂-O-C₄H₉)-O-, 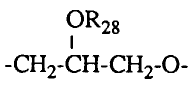 oder -CH₂-CH(OH)-CH₂-O-(CH₂)₃-,
R₂₈ -Si(CH₃)₂R₂₂ bedeutet,
R₂₀ und R₂₁ unabhängig voneinander Methyl oder Ethyl und
R₂₂ C₁-C₈-Alkyl bedeuten.

Ganz besonders bevorzugt werden solche Verbindungen der Formel (1) verwendet, worin die Reste R₁ unabhängig voneinander einen Rest der Formel -CH₂CH(ORₓ)CH₂OR_{z} bedeuten, wobei
Rₓ H, -CORₛ, -COOCH₃ oder -Si(CH₃)₂Rᵣ,
R_{z} C₁-C₁₈-Alkyl, C₂-C₁₈-Alkenyl, -CORₛ oder durch Sauerstoff unterbrochenes C₁-C₂₄-Alkyl oder C₂-C₂₄-Hydroxyalkyl,
Rₛ C₁-C₄-Alkyl oder C₂-C₄-Alkenyl und
Rᵣ C₁-C₆-Alkyl
bedeuten.

Vorzugsweise enthält das erfindungsgemässe Material zwischen den Silberhalogenidemulsionsschichten Gelatinezwischenschichten.

In einer weiteren bevorzugten Ausführungsform enthält das erfindungsgemässe Material eine weitere Schicht mit einem UV-Absorber der Formel (1), welche zwischen der grün- und rotempfindlichen Silberhalogenidemulsionsschicht angeordnet ist.

Gute Ergebnisse werden auch erzielt, wenn der UV-Absorber der Formel (1) zusätzlich in der rotempfindlichen Silberhalogenidemulsionsschicht enthalten ist.

In der Schicht zwischen der grün- und rotempfindlichen Schicht und/oder in der rotempfindlichen Schicht können mit Vorteil anstelle der UV-Absorber der Formel (1) Benztriazolverbindungen verwendet werden.

Vorzugsweise entsprechen diese Benztriazolverbindungen der Formel 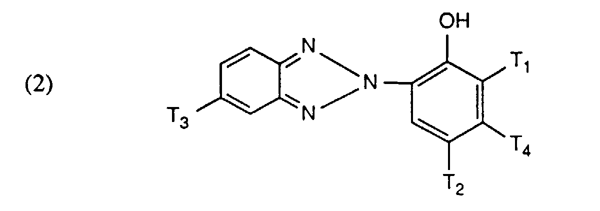 worin T₁, T₂ und T₃ unabhängig voneinander Wasserstoff, Halogen, Alkyl, Alkyl substituiert mit einer Carbonsäureestergruppe, Alkoxy, Aryloxy, Hydroxyl oder Acyloxy sind, und T₄ Wasserstoff, Alkoxy, Aryloxy oder Acyloxy ist.

Besonders bevorzugt sind solche Verbindungen der Formel (2), welche bei Zimmertemperatur flüssig sind.

In einem weiteren Aspekt betrifft die vorliegende Erfindung auch photographisches Material enthaltend auf einem Träger eine blauempfindliche, eine grünempfindliche und/oder eine rotempfindliche Silberhalogenidemulsionsschicht sowie eine Protektionsschicht, wobei zwischen der obersten Silberhalogenidemulsionsschicht und der Protektionsschicht eine Schicht mit einem UV-Absorber angeordnet ist, dadurch gekennzeichnet, dass (a) der UV-Absorber der Formel 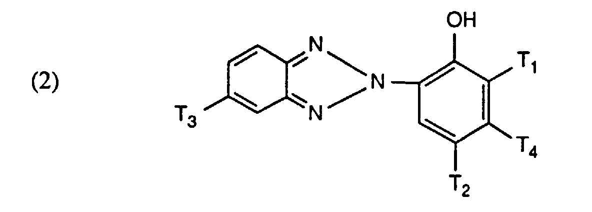 entspricht, worin T₁, T₂ und T₃ unabhängig voneinander Wasserstoff, Halogen, Alkyl, Alkyl substituiert mit einer Carbonsäureestergruppe, Alkoxy, Aryloxy, Hydroxyl oder Acyloxy sind und T₄ Wasserstoff, Alkoxy, Aryloxy oder Acyloxy ist, und (b) das Material mindestens eine weitere Schicht aufweist, welche einen UV-Absorber der Formel (1) enthält.

Vorzugsweise ist die weitere Schicht zwischen der grün- und rotempfindlichen Silberhalogenidemulsionsschicht angeordnet.

In einer weiteren bevorzugten Ausführungsform enhält das photographische Material zusätzlich in der rotempfindlichen Schicht einen UV-Absorber der Formel (1). Es kann ferner vorteilhaft sein, wenn in der weiteren Schicht oder in der rotempfindlichen Schicht der UV-Absorber der Formel (1) durch einen solchen der Formel (2) ersetzt wird; dabei soll aber wenigstens eine Schicht einen UV-Absorber der Formel (1) enthalten.

Bevorzugte photographische Materialien enthalten zwischen den Silberhalogenidemulsionsschichten Gelatinezwischenschichten.

In einer weiteren Ausführungsform der vorliegenden Erfindung enthält das photographische Material auf einem Träger mindestens 2 Silberhalogenidemulsionsschichten mit einer zwischen diesen Schichten liegenden Schicht mit einem UV-Absorber, dadurch gekennzeichnet, dass der UV-Absorber der Formel (1) entspricht. Vorzugsweise handelt es sich bei den beiden Silberhalogenidemulsionsschichten um eine grünempfindliche und eine rotempfindliche Silberhalogenidemulsionsschicht. Ferner wird ein entsprechendes Material bevorzugt, worin zusätzlich die rotempfindliche Silberhalogenidemulsionsschicht einen UV-Absorber der Formel (1) oder (2) enthält.

Eine andere Ausführungsform der vorliegenden Erfindung betrifft photographisches Material, das auf einem Träger eine rotempfindliche Silberhalogenidemulsionsschicht sowie gegebenenfalls eine blauempfindliche und/oder grünempfindliche Silberhalogenidemulsionsschicht enthält, dadurch gekennzeichnet, dass die rotempfindliche Silberhalogenidemulsionsschicht einen UV-Absorber der Formel (1) enthält. Vorzugsweise enthält es zwischen der rotempfindlichen Silberhalogenidemulsionsschicht und dem Träger eine Schicht mit einem UV-Absorber der Formel (2).

Des weiteren kann es vorteilhaft sein, wenn alle oder ein Teil der besagten Schichten, welche einen UV-Absorber enthalten können, eine Mischung aus den UV-Absorbern der Formeln (1) und (2) aufweisen.

Die erfindungsgemässen photographischen Materialien bieten gegenüber Materialien mit Benztriazol-UV-Absorbern den Vorteil, dass die UV-Absorber der Formel (1) in einer vergleichsweise geringen Menge benötigt werden, um einen ausreichenden Schutz gegen UV-Strahlung zu gewährleisten. Dies bedeutet, dass die Dicke der Schichten, in die die UV-Absorber der Formel (1) eingelagert werden, sehr dünn sein können, was sich z.B. auf die Schärfe der mit diesem Material hergestellten Abbildungen positiv auswirkt. Offensichtlich ergibt dann die Verwendung einer vergleichbaren Menge UV-Absorber einen noch besseren Schutz.

Typische und bevorzugte Verbindungen der Formel (1) sind in der folgenden Tabelle zusammengestellt:

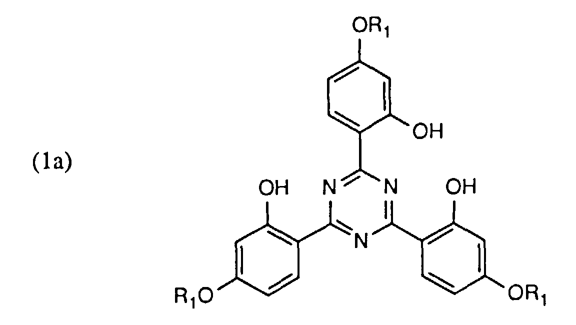

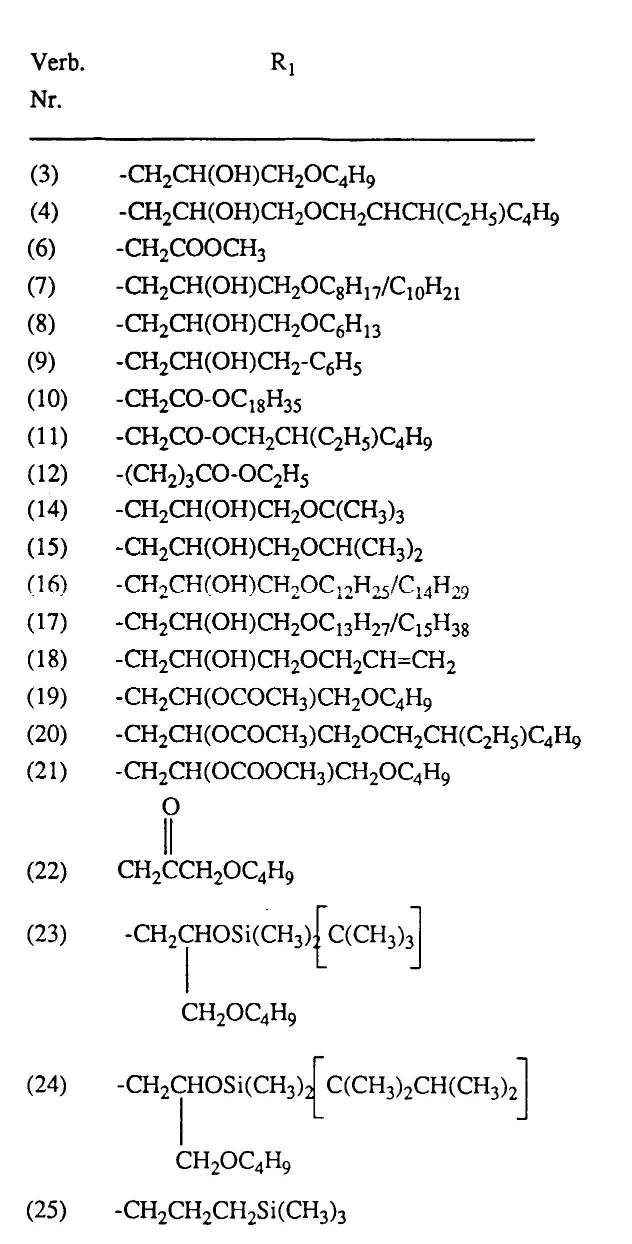

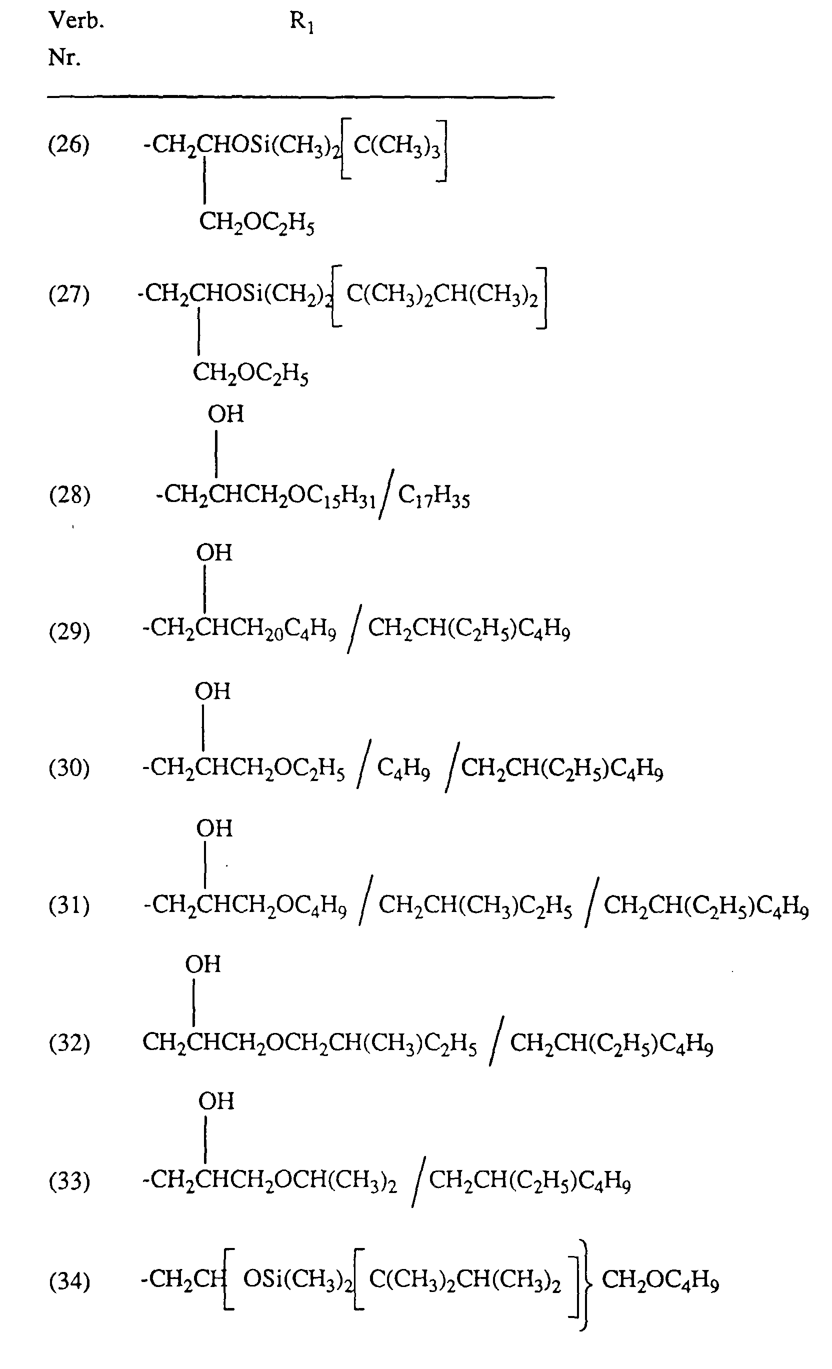

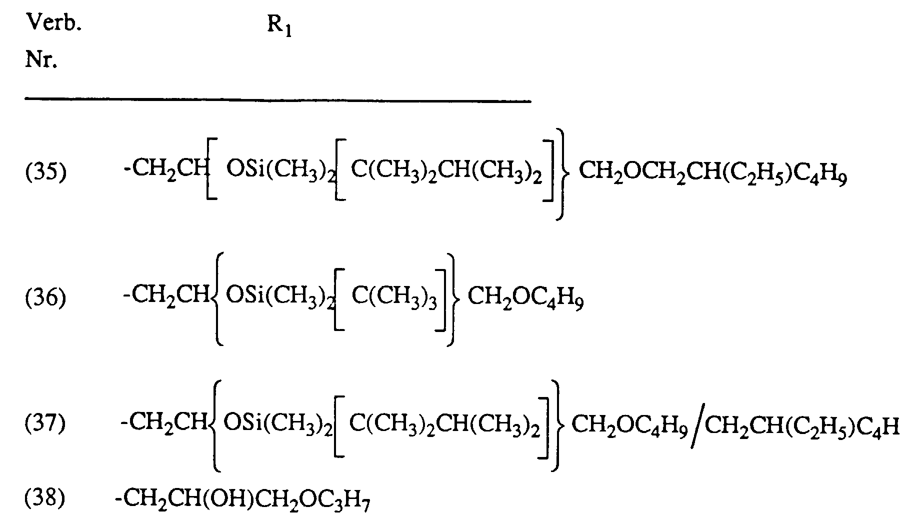

Beispiele der Verbindung der Formel (2) sind:

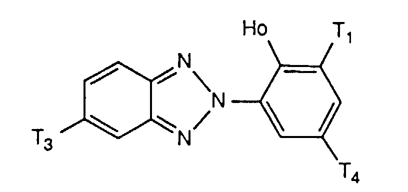

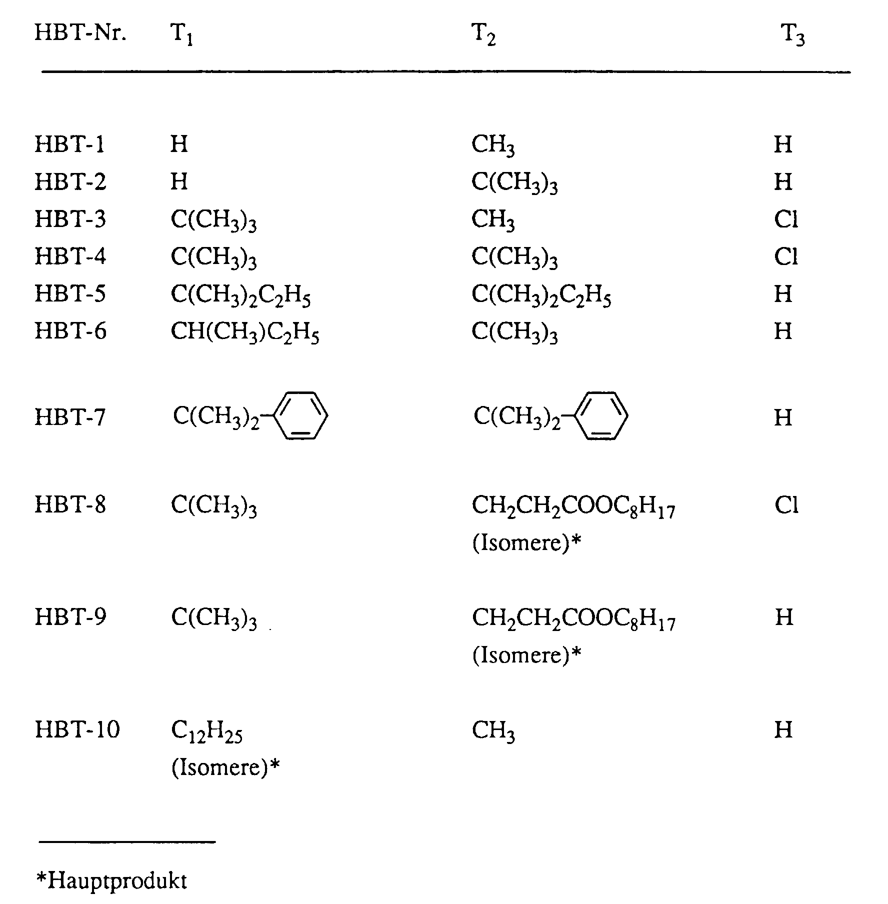

Im erfindungsgemässen Material verwendbare Gelbkuppler sind vorzugsweise Verbindungen der Formel A 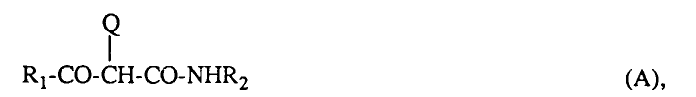 worin R₁ Alkyl oder Aryl ist, R₂ Aryl ist und Q Wasserstoff oder eine Gruppe ist, die durch Reaktion mit dem oxidierten Entwickler abgespaltet werden kann.

Eine Gruppe von Gelbkupplern sind solche Verbindungen der Formel A, in denen R₁ t-Butyl ist und R₂ eine Gruppe der Formel 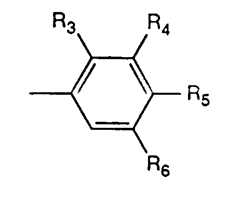 ist, worin R₃ Wasserstoff, Halogen, Alkyl oder Alkoxy bedeutet und R₄, R₅ und R₆ Wasserstoff, Halogen, Alkyl, Alkenyl, Alkoxy, Aryl, Carboxy, Alkoxycarbonyl, eine Carbamoylgruppe, eine Sulfon- oder Sulfamoylgruppe, eine Alkylsulfonaminogruppe, Acylaminogruppe, Ureidogruppe oder Aminogruppe bedeuten.

Vorzugsweise sind R₃ Chlor, R₄ und R₅ Wasserstoff und R₆ eine Acylaminogruppe. Hierzu gehören auch die Verbindungen der Formel 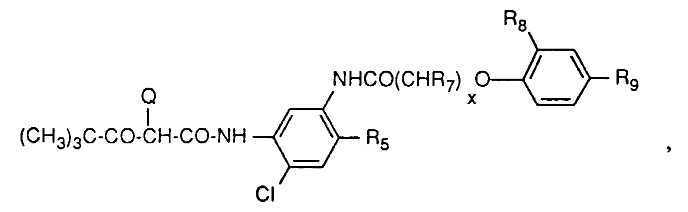 worin x O-4 ist, R₇ Wasserstoff oder Alkyl bedeutet und R₈ und R₉ Alkyl sind.

Eine andere Gruppe von Gelbkupplern entspricht der Formel B 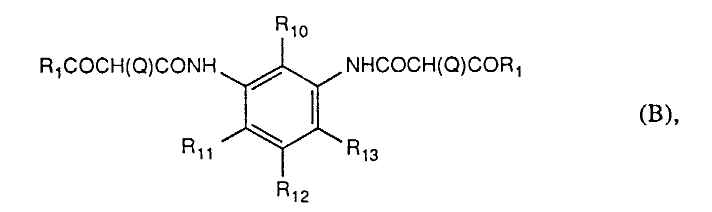 worin R₁₀ Wasserstoff, Halogen oder Alkoxy ist,
R₁₁, R₁₂ und R₁₃ Wasserstoff, Halogen, Alkyl, Alkenyl, Alkoxy, Aryl, Carboxyl, Alkoxycarbonyl, eine Carbamoylgruppe, eine Sulfongruppe, Sulfamoylgruppe, Sulfonamidogruppe, Acylaminogruppe, Ureidogruppe oder Aminogruppe bedeuten und R₁ und Q die oben angegebene Bedeutung haben.

Dazu gehören Verbindungen der Formel B, in denen R₁ t-Butyl ist, R₁₀ Chlor ist, R₁₁ und R₁₃ Wasserstoff sind und R₁₂ Alkoxycarbonyl ist.

In den Verbindungen der Formel A und B kann die Abgangsgruppe Q Wasserstoff sein oder sie ist eine heterocyclische Gruppe 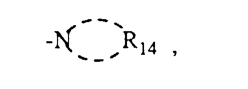 worin R₁₄ eine organische zweiwertige Gruppe ist, die den Ring zu einem 4-7-gliedrigen Ring ergänzt, oder Q ist eine Gruppe -OR₁₅, worin R₁₅ Alkyl, Aryl, Acyl oder ein heterocyclischer Rest ist.

Typische Beispiele für gebräuchliche Gelbkuppler sind die Verbindungen der folgenden Formeln:

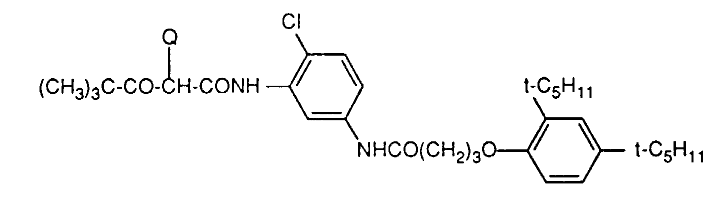

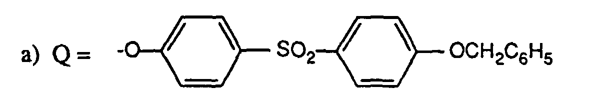

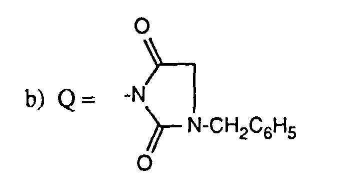

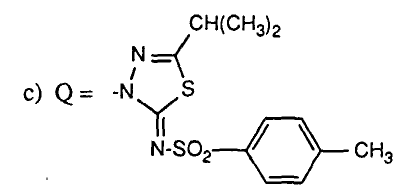

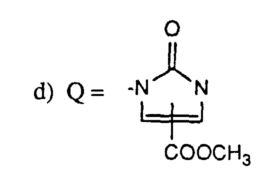

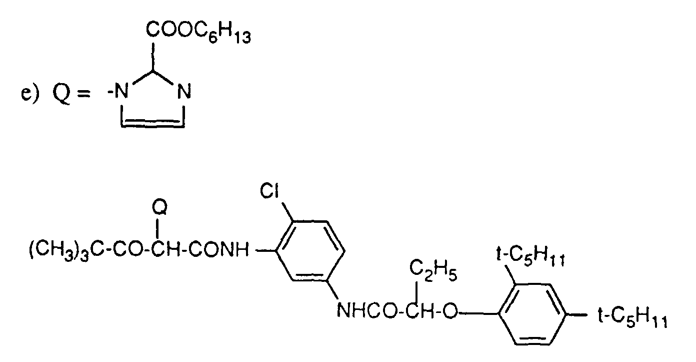

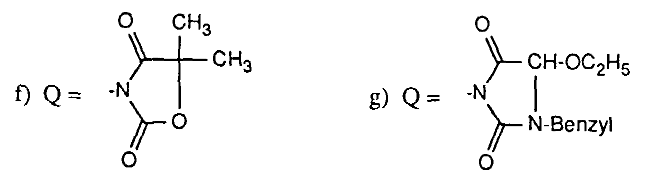

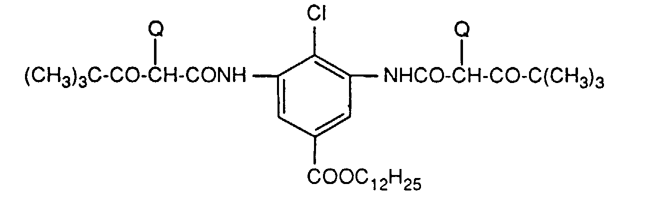

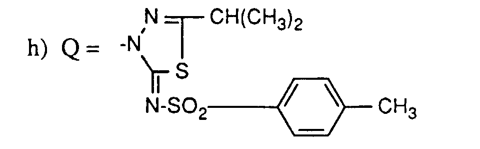

Weitere Beispiele für Gelbkuppler sind zu finden in den US-A 2,407,210, 2,778,658, 2,875,057, 2,908,513, 2,908,573, 3,227,155, 3,227,550, 3,253,924, 3,265,506, 3,277,155, 3,408,194, 3,341,331, 3,369,895, 3,384,657, 3,415,652, 3,447,928, 3,551,155, 3,582,322, 3,725,072, 3,891,445, 3,933,501, 4,115,121, 4,401,752 und 4,022,620, in den DE-A 1,547,868, 2,057,941, 2,162,899, 2,163,813, 2,213,461, 2,219,917, 2,261,361, 2,261,362, 2,263,875, 2,329,587, 2,414,006 und 2,422,812, in den GB-A 1,425,020 und 1,077,874 und in JP-A-88/123,047 und in EP-A-447,969.

Die Gelbkuppler werden üblicherweise in einer Menge von 0,05-2 Mol und vorzugsweise 0,1-1 Mol pro Mol Silberhalogenid verwendet.

Typische und bevorzugte Gelbkuppler entsprechen den Formeln:

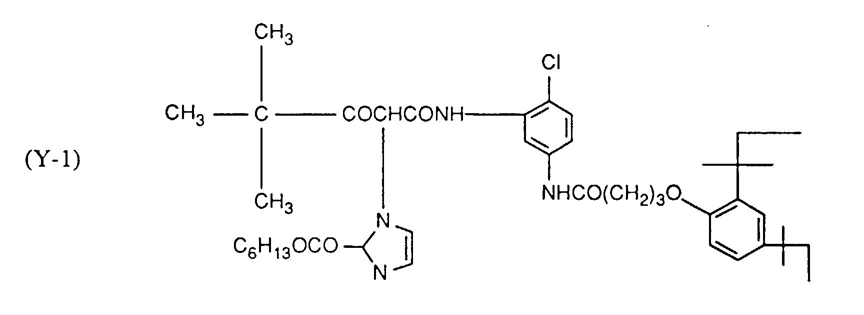

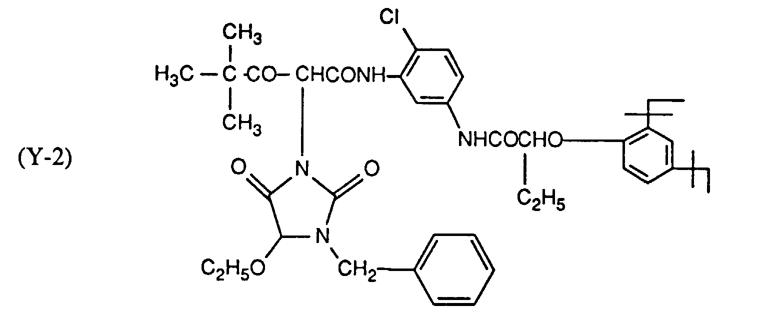

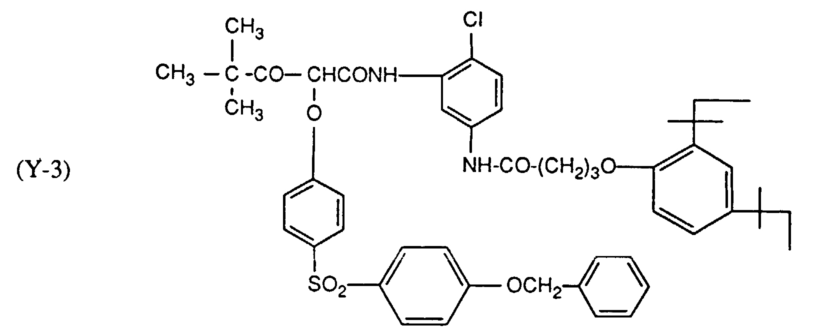

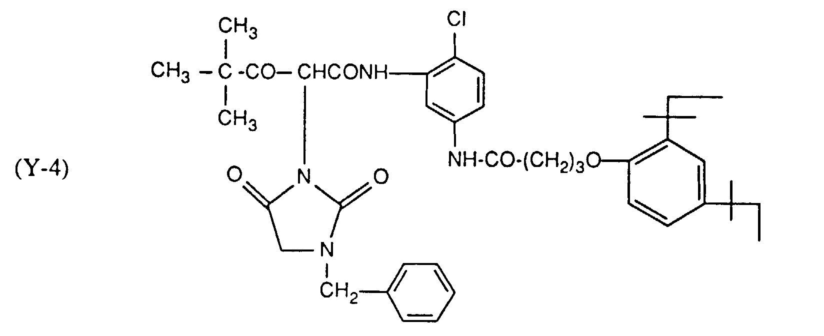

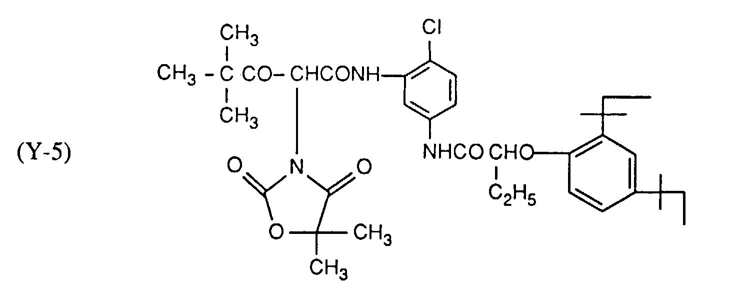

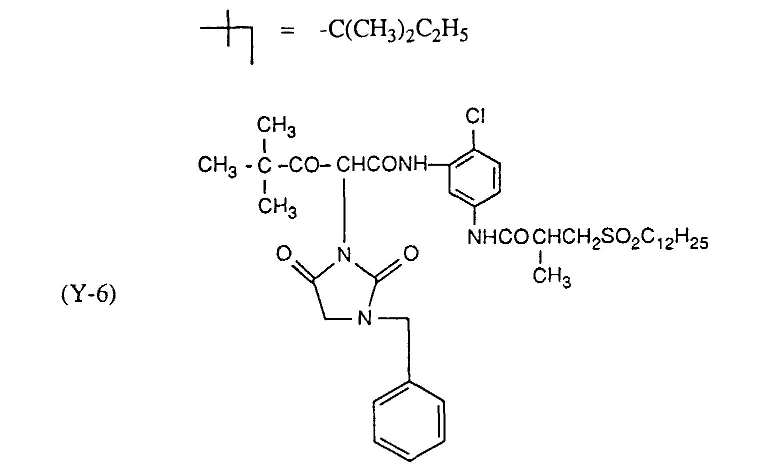

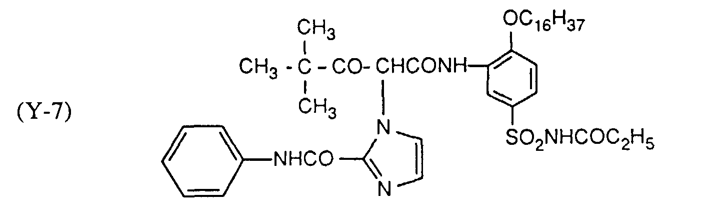

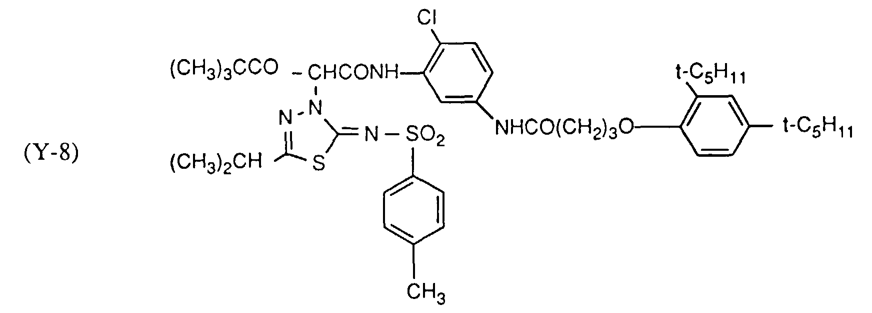

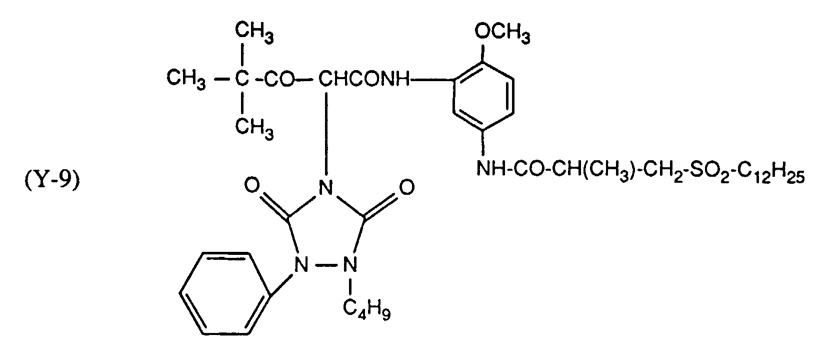

Magentakuppler können z.B. einfache 1-Aryl-5-pyrazolone sein oder mit 5-gliedrigen Heteroringen kondensierte Pyrazolderivate wie z.B. Imidazopyrazole, Pyrazolopyrazole, Pyrazolotriazole oder Pyrazolotetrazole.

Eine Gruppe von Magentakupplern sind 5-Pyrazolone der Formel C, 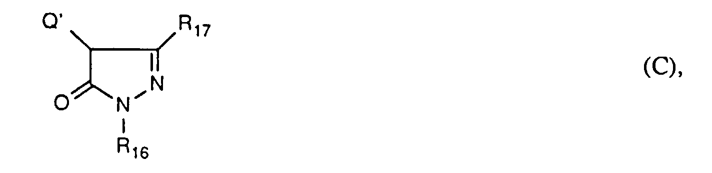 wie sie in der Britischen Patentschrift 2,003,473 beschrieben sind. Darin ist R₁₆ Wasserstoff, Alkyl, Aryl, Alkenyl oder eine heterocyclische Gruppe. R₁₇ ist Wasserstoff, Alkyl Aryl, eine heterocyclische Gruppe, eine Estergruppe, Alkoxygruppe, Alkylthiogruppe, Carboxylgruppe, Arylaminogruppe, Acylaminogruppe, (Thio)-harnstoffgruppe, (Thio)-carbamoylgruppe, Guanidinogruppe oder Sulfonamidogruppe.

Bevorzugt ist R₁₇ eine Gruppe 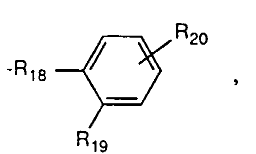 worin R₁₈ Imino, Acylamino oder Ureido ist, R₁₉ Wasserstoff, Halogen, Alkyl oder Alkoxy ist, R₂₀ Wasserstoff, Alkyl, Acylamino, Carbamoyl, Sulfamoyl, Sulfonamido, Alkoxycarbonyl, Acyloxy oder eine Urethangruppe ist.

Wenn Q' Wasserstoff ist, so ist der Magentakuppler tetraäquivalent in bezug auf das Silberhalogenid.

Typische Beispiele für diesen Typ von Magentakupplern sind Verbindungen der Formel 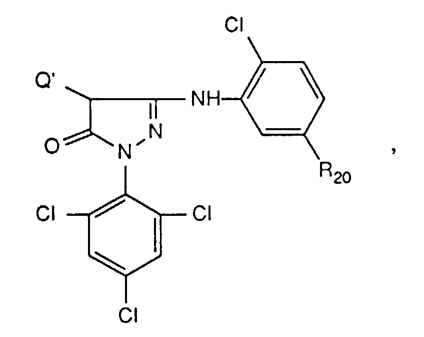 worin R₂₀ die oben genannten Bedeutungen hat, und Q', wie oben beschrieben, eine Abgangsgruppe ist. Diese Verbindungen liegen bevorzugt im erfindungsgemässen Material vor.

Weitere Beispiele solcher tetraäquivalenter Magentakuppler sind zu finden in den US-A 2,983,608, 3,061,432, 3,062,653, 3,127,269, 3,152,896, 3,311,476, 3,419,391, 3,519,429, 3,558,319, 3,582,322, 3,615,506, 3,684,514, 3,834,908, 3,888,680, 3,891,445, 3,907,571, 3,928,044, 3,930,861, 3,930,866 und 3,933,500 und in JP-A-89/309,058.

Wenn Q' in Formel C nicht Wasserstoff ist sondern eine Gruppe, die bei der Reaktion mit dem oxidierten Entwickler eliminiert wird, so handelt es sich um einen diäquivalenten Magentakuppler. Q kann in diesem Fall z.B. Halogen oder eine über O, S oder N an den Pyrazolring gebundenen Gruppe sein. Solche diäquivalenten Kuppler ergeben eine höhere Farbdichte und sind reaktiver gegenüber dem oxidierten Entwickler als die entsprechenden tetraäquivalenten Magentakuppler.

Beispiele für diäquivalente Magentakuppler sind beschrieben in den US-A 3,006,579, 3,419,391, 3,311,476, 3,432,521, 3,214,437, 4,032,346, 3,701,783, 4,351,897, 3,227,554, in den EP-A-133,503, DE-A-2,944,601, JP-A-78/34044, 74/53435, 74/53436, 75/53372 und 75/122935.

Typische und bevorzugte Magentakuppler entsprechen der Formeln

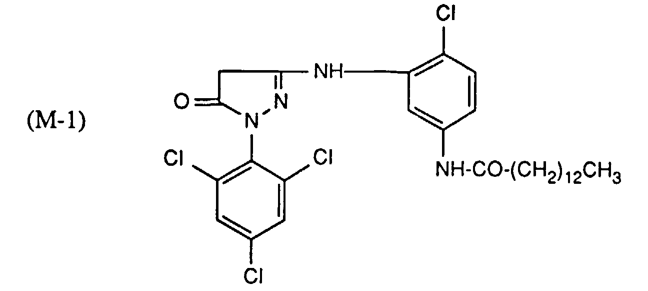

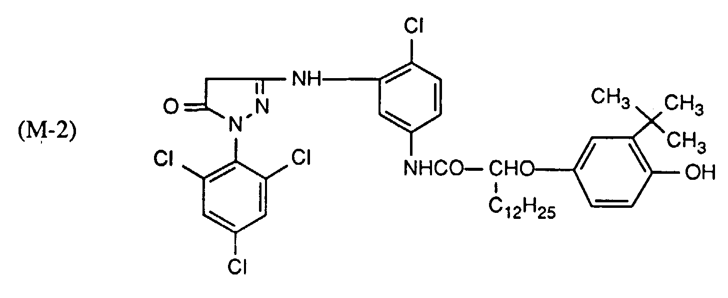

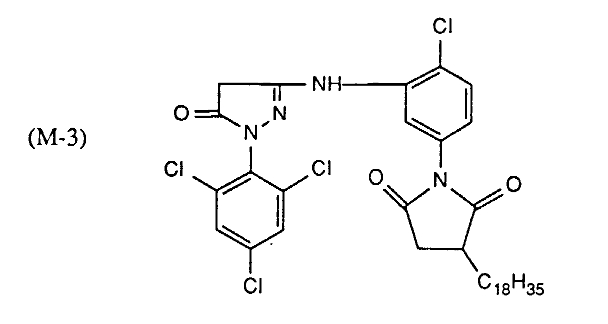

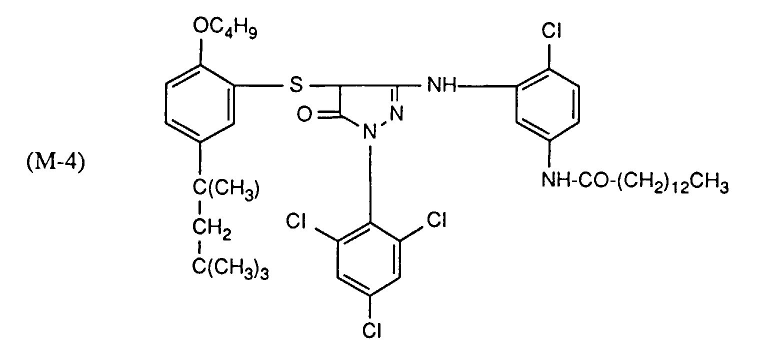

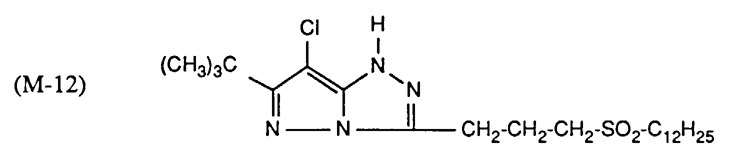

Ueber ein zweiwertiges Q' können 2 Pyrazolonringe verknüpft werden und man erhält dann sogenannte Bis-Kuppler. Solche sind z.B. beschrieben in den US-A-2,632,702, US-A-2,618,864, GB-A-968,461, GB-A-786,859, JP-A-76/37646, 59/4086, 69/16110, 69/26589, 74/37854 und 74/29638. Bevorzugt ist Y eine O-Alkoxyarylthio-Gruppe.

Wie vorstehend erwähnt, können als Magentakuppler auch mit 5-gliedrigen Heterocyclen kondensierte Pyrazole - sogenannte Pyrazoloazole - verwendet werden. Deren Vorteile gegenüber einfachen Pyrazolen ist, dass sie Farben von grösserer Formalin-Beständigkeit und reineren Absorptionsspektren aufweisen.

Magentakuppler vom Pyrazoloazoltyp, welche ebenfalls bevorzugt sind, können durch die Formeln 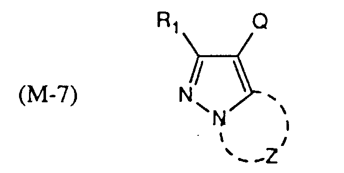 dargestellt werden, worin R₁ Wasserstoff oder ein Substituent ist, Z die zur Vervollständigung eines 5-gliedrigen Ringes mit 2 oder 3 Stickstoffatomen notwendigen nichtmetallischen Atome darstellt, wobei dieser Ring substituiert sein kann, und Q Wasserstoff oder eine Abgangsgruppe ist.

Bevorzugt hiervon sind Magentakuppler der Formeln

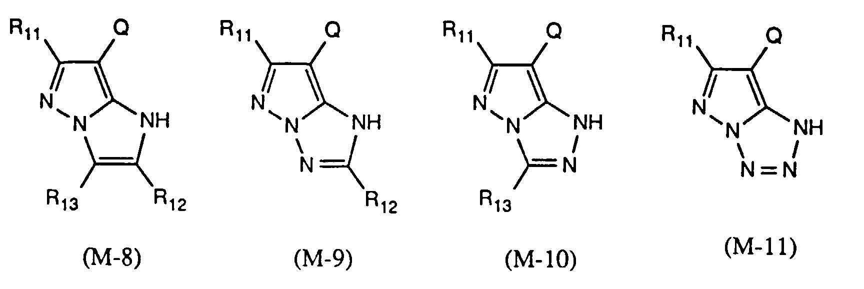

R₁₁, R₁₂ und R₁₃ bedeuten unabhängig voneinander beispielsweise Wasserstoff, Halogen, eine Gruppe der Formel -CR₃, worin die Reste R unabhängig voneinander Wasserstoff oder Alkyl sind, Aryl, Heterocyclyl, Cyano, Hydroxy, Nitro, Carboxyl, Amino, Alkoxy, Aryloxy, Acylamino, Alkylamino, Anilino, Ureido, Sulfamoylamino, Alkylthio, Arylthio, Alkoxycarbonylamino, Sulfonamido, Carbamoyl, Sulfamoyl, Sulfonyl, Alkoxycarbonyl, Heterocyclyl-oxy, Azo, Acyloxy, Carbamoyloxy, Silyloxy, Aryloxycarbonylamino, Imido, heterocyclische Ring-thio, Sulfinyl, Phosphonyl, Aryloxycarbonyl, Acyl oder Azolyl, und vorzugsweise Wasserstoff; Halogen (z.B. Chlor, Brom), eine Gruppe der Formel -CR₃, worin die Reste R unabhängig voneinander Wasserstoff oder Alkyl sind, Aralkyl, Alkenyl, Alkinyl, Cycloalkyl oder Cycloalkenyl und besonders bevorzugt Methyl, Ethyl, Propyl, Isopropyl, t-Butyl, Tridecyl, 2-Methansulfonylethyl, 3-(3-Pentadecylphenoxy)propyl, 3-(4-(2-(4-(4-Hydroxyphenylsulfonyl)phenoxy)dodecanamido)phenyl)propyl, 2-Ethoxytridecyl, Trifluoromethyl, Cyclopentyl, 3-(2,4-Di-t-Amylphenoxy)propyl); Aryl (z.B. Phenyl, 4-t-Butylphenyl, 2,4-Di-t-amylphenyl, 4-Tetradecaneamidophenyl); Heterocyclyl (z.B. 2-Furyl, 2-Thienyl, 2-Pyrimidinyl, 2-Benzothiazolyl); Cyano; Hydroxy, Nitro; Carboxy; Amino; Alkoxy (z.B. Methoxy, Ethoxy, 2-Methoxyethoxy; 2-Dodecyl-ethoxy, 2-Methansulfonylethoxy); Aryloxy (z.B. Phenoxy, 2-Methylphenoxy, 4-t-Butylphenoxy, 3-Nitrophenoxy, 3-t-Butyloxycarbamoylphenoxy, 3-Methoxycarbamoyl); Acylamino (z.B. Acetoamido, Benzamido, Tetradecanamido, 2-(2,4-Di-t-amylphenoxy)-butanamido, 4-(3-t-Butyl-4-hydroxyphenoxy)butanamido, 2-(4-(4-Hydroxyphenylsulfonyl)phenoxy)decanamido); Methylbutylamino); Anilino (z.B. Phenylamino, 2-Chloranilino, 2-Chloro-5-tetradecanaminoanilino, 2-Chloro-5-dodecyloxycarbonylanilino, N-Acetylanilino, 2-Chloro-5-(alpha-(3-t-butyl-4-hydroxyphenoxy)dodecanamidoanilino); Ureido (z.B. Phenylureido, Methylureido, N,N-Dibutylureido); Sulfamoylamino (z.B. N,N-Dipropylsulfamoylamino, N-Methyl-N-decylsulfamoylamino); Alkylthio (z.B. Methylthio, Octylthio, Tetradecylthio, 2-Phenoxyethylthio, 3-Phenoxypropylthio, 3-(4-t-Butylphenoxy)propylthio); Arylthio (z.B. Phenylthio, 2-Butoxy-5-t-octylphenylthio, 3-Pentadecylphenylthio, 2-Carboxyphenylthio, 4-Tetradecanamidophenylthio); Alkoxycarbonylamino (z.B. Methoxycarbonylamino, Tetradecyloxycarbonylamino); Sulfonamido (z.B. Methansulfonamido, Hexadecansulfonamido, Benzolsulfonamido, p-Toluolsulfonamido, Octadecansulfonamido, 2-Methyloxy-5-t-butylbenzolsulfonamido); Carbamoyl (z.B. N-Ethylcarbamoyl, N,N-Dibutylcarbamoyl, N-(2-Dodecyloxyethyl)-carbamoyl, N-Methyl-N-dodecylcarbamoyl, N-(3-(2,4-Di-t-Amylphenoxy)propyl)-carbamoyl); Sulfamoyl (z.B. N-Ethylsulfamoyl, N,N-Dipropylsulfamoyl, N-2(-Dodecyl-oxyethyl)sulfamoyl, N-Ethyl-N-dodecylsulfamoyl, N,N-Diethylsulfamoyl); Sulfonyl (z.B. Methansulfonyl, Octansulfonyl, Benzolsulfonyl, Toluolsulfonyl); Alkoxycarbonyl (z.B. Methoxycarbonyl, Butoxycarbonyl, Dodecyloxycarbonyl, Octadecyloxycarbonyl); heterocyclische Ringoxy (z.B. 1-Phenyltetrazol-5-oxy, 2-Tetrahydropyranyloxy); Azo (z.B. Phenylazo, 4-Methoxyphenylazo, 4-Pivaloylaminophenylazo, 2-Hydroxy-4-propanoylphenylazo); Acyloxy (z.B. Acetoxy); Carbamoyloxy (z.B. N-Methylcarbamoyloxy, N-Phenylcarbamoyloxy); Silyloxy (z.B. Trimethylsilyloxy, Dibutylmethylsilyloxy); Aryloxycarbonylamino (z.B. Phenoxycarbonylamino); Imido (z.B. N-Succinimido, N-Phthalimido, 3-Octadecenylsuccinimido); heterocyclische Ring-thio (z.B. 2-Benzothiazolylthio, 2,4-Diphenyloxy- 1,3,5-triazol-6-thio, 2-Pyridylthio); Sulfinyl (z.B. Dodecansulfinyl, 3-Pentadecylphenylsulfinyl, 3-Phenoxypropylsulfinyl); Phosphonyl (z.B. Phenoxyphosphonyl, Octyloxyphosphonyl, Phenylphosphonyl); Aryloxycarbonyl (z.B. Phenoxycarbonyl); Acyl (z.B. Acetyl, 3-Phenylpropanoyl, Benzoyl, 4-Dodecyloxybenzoyl); Azolyl (z.B. Imidazolyl, Pyrazolyl, 3-Chloro-pyrazol-1-yl).

Diese Substituenten sind gegebenenfalls weiter substituiert, beispielsweise durch Halogen oder durch einen über ein C-, O-, N- oder S-Atom gebundenen organischen Rest.

Die bevorzugten Gruppen R₁₁ sind Alkyl, Aryl, Alkoxy, Aryloxy, Alkylthio, Ureido, Urethan und Acylaminogruppen.

R₁₂ kann die Bedeutung von R₁₁ besitzen und ist vorzugsweise Wasserstoff, Alkyl, Aryl, ein heterocyclischer Ring, Alkoxycarbonyl, Carbamoyl, Sulfamoyl, Sulfinyl, Acyl oder Cyano.

R₁₃ kann die Bedeutung von R₁₁ haben und ist vorzugsweise Wasserstoff, Alkyl, Aryl, Heterocyclic, Alkoxy, Aryloxy, Alkylthio, Arylthio, Alkoxycarbonyl, Carbamoyl oder Acyl, vorzugsweise Alkyl, Aryl, Heterocyclic, Alkylthio oder Arylthio.

Q ist Wasserstoff oder eine Abgangsgruppe wie Halogen, Alkoxy, Aryloxy, Acyloxy, Alkyl- oder Arylsulfonyloxy, Acylamino, Alkyl- oder Aryl-sulfonamido, Alkoxycarbonyloxy, Aryloxycarbonyloxy, Alkyl-, Aryl- oder Heterocyclyl-S-Carbamoylamino, ein 5- oder 6-gliedriger stickstoffhaltiger heterocyclischer Rest, Imido und Arylazo. Diese Gruppen sind gegebenenfalls wie für R₁₁ gezeigt weiter substituiert.

Vorzugsweise ist Q Halogen (z.B. Fluor, Chlor, Brom); Alkoxy (z.B. Ethoxy, Dodecyloxy, Methoxyethylcarbamoylmethoxy, Carboxypropyloxy, Methylsulfonylethoxy, Ethoxycarbonylmethoxy); Aryloxy (z.B. 4-Methylphenoxy, 4-Chlorphenoxy, 4-Methoxyphenoxy, 4-Carboxyphenoxy, 3-Ethoxycarboxyphenoxy, 3-Acetylaminophenoxy, 2-Carboxyphenoxy); Acyloxy (z.B. Acetoxy, Tetradecanoyloxy, Benzoyloxy); Alkyl- oder Aryl-sulfonyloxy (z.B. Methansulfonyloxy, Toluolsulfonyloxy); Acylamino (z.B. Dichloracetylamino, Heptafluorobutyrylamino); Alkyl- oder Arylsulfonamido (z.B. Methanesulfonamido, Trifluoromethansulfonamido, p-Toluolsulfonylamido); Alkoxycarbonyloxy (z.B. Ethoxycarbonyloxy, Benzyloxycarbonyloxy); Aryloxycarbonyloxy (z.B. Phenoxycarbonyloxy); Alkyl-, Aryl- oder Heterocyclyl-S- (z.B. Dodecylthio, 1-Carboxydodecylthio, Phenylthio, 2-Butoxy-5-t-octylphenylthio, Tetrazolylthio); Carbamoylamino (z.B. N-Methylcarbamoylamino, N-Phenylcarbamoylamino); 5- oder 6-gliedriger stickstoffhaltiger Ring (z.B. Imidazolyl, Pyrazolyl, Triazolyl, Tetrazolyl, 1,2-Dihydro-2-oxo-1-pyridyl); Imido (z.B. Succinimido, Hydantoinyl); Arylazo (z.B. Phenylazo, 4-Methoxyphenylazo).

Q kann auch entsprechende Bisverbindungen bilden durch Kondensation von 4 äquivalenten Kuppler mit einem Aldehyd oder Keton. Des weiteren kann Q photographisch wirksame Gruppen enthalten wie Entwicklungsinhibitoren oder Entwicklungsbeschleuniger. Vorzugsweise ist Q Halogen, Alkoxy, Aryloxy, Alkyl-, Aryl-thio, oder eine 5- oder 6-gliedrige stickstoffhaltige heterocyclische Gruppe, die an den Ort der Kupplung über ein Stickstoffatom gebunden ist.

Pyrazolo-tetrazole sind beschrieben in der JP-A-85/33552; Pyrazolo-pyrazole in der JP-A-85/43,695; Pyrazolo-imidazole in den JP-A-85/35732, JP-A-86/18949 und US-A-4,500,630; Pyrazolo-triazole in den JP-A-85/186,567, JP-A-86/47957, JP-A-85/215,687, JP-A-85/197,688, JP-A-85/172,982, EP-A-119,860, EP-A-173,256, EP-A-178,789, EP-A-178,788 und in Research Disclosure 84/24,624.

Weitere Pyrazoloazol-Magentakuppler sind beschrieben in: JP-A-86/28,947, JP-A-85/140,241, JP-A-85/262,160, JP-A-85/213,937, JP-A-87/278,552, JP-A-87/279,340, JP-A-88/100,457, EP-A-177,765, EP-A-176,804, EP-A-170,164, EP-A-164,130, EP-A-178,794, DE-A-3,516,996, DE-A-3,508,766 und Research Disclosure 81/20919, 84/24531 und 85/25758.

Geeignete Beispiele solcher Kuppler sind:

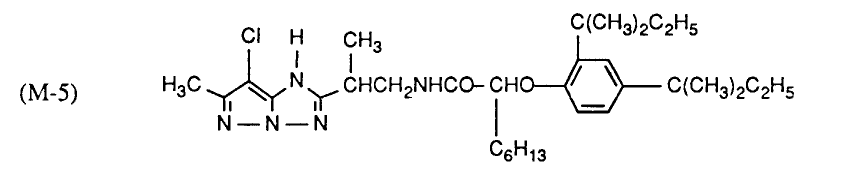

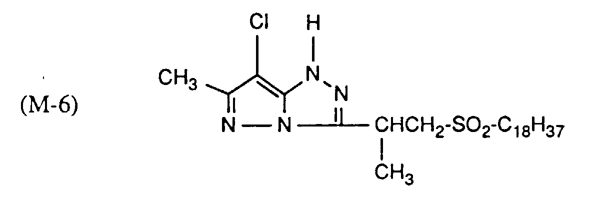

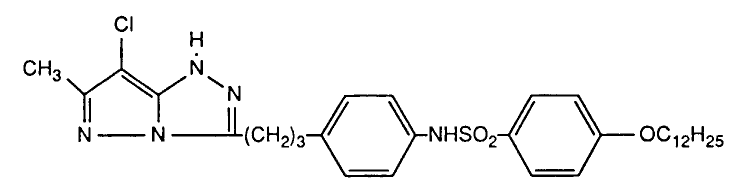

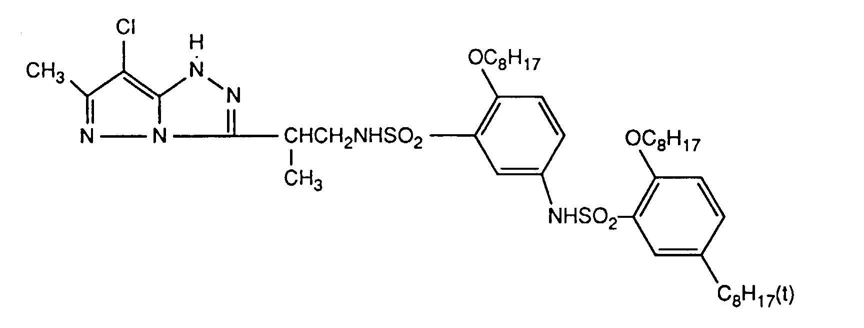

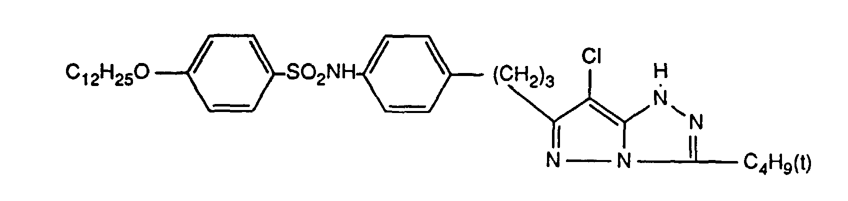

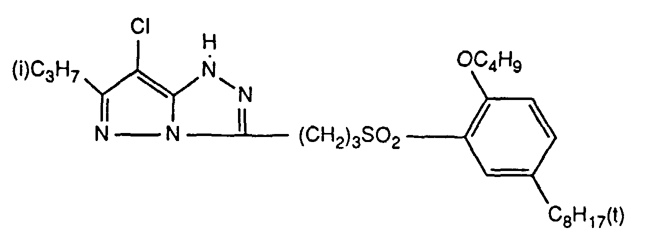

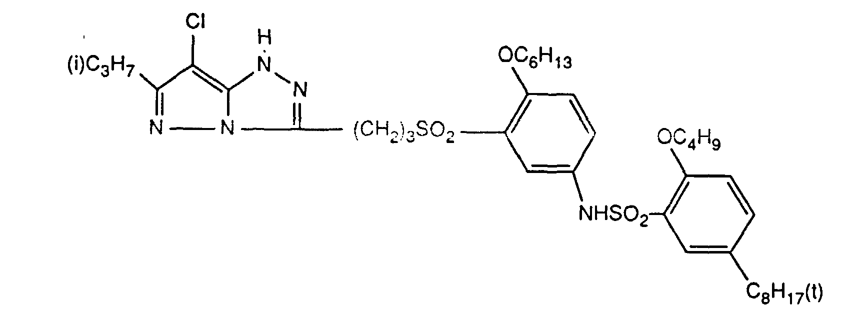

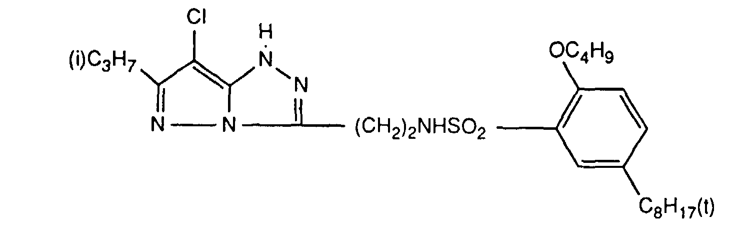

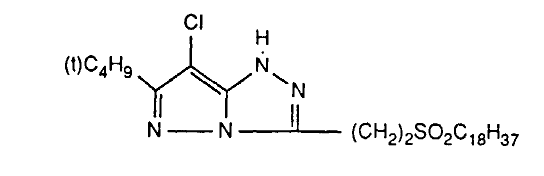

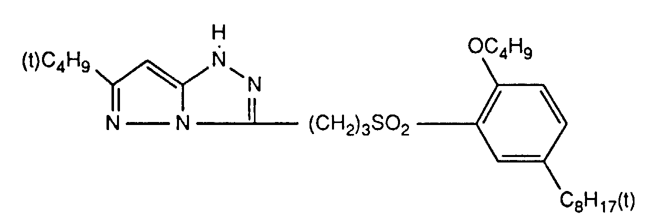

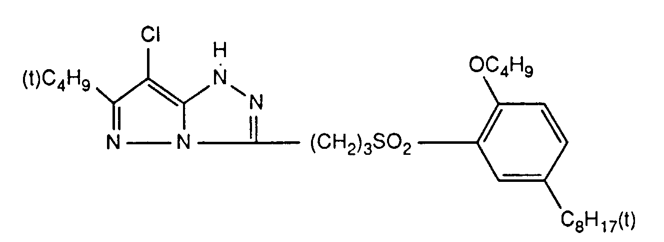

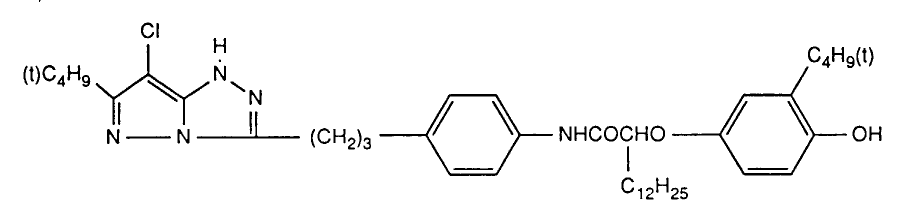

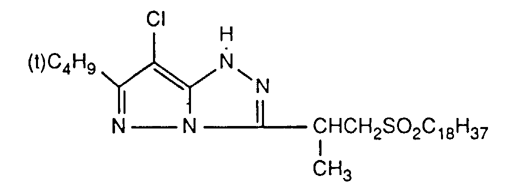

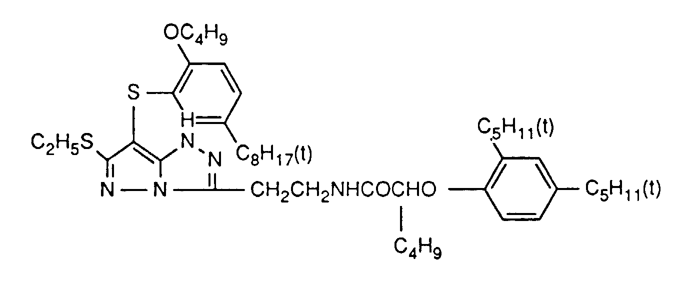

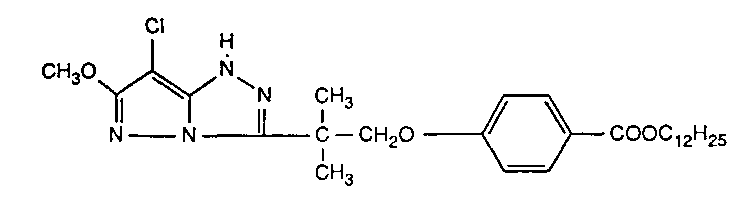

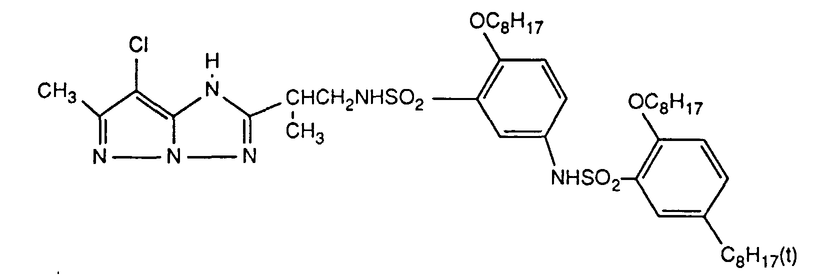

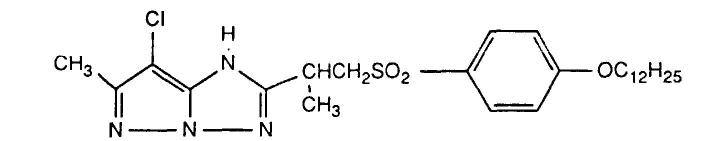

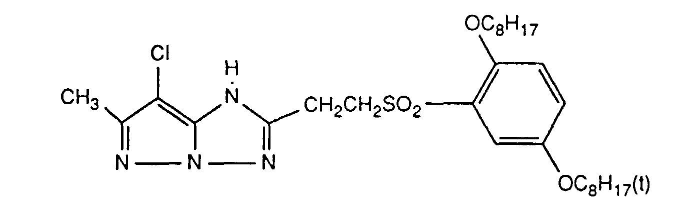

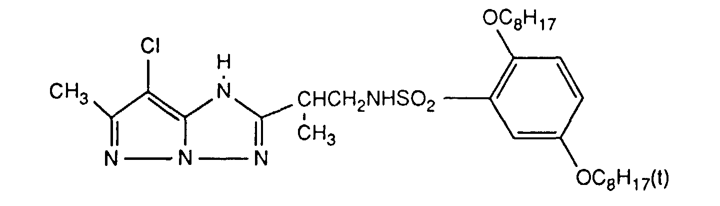

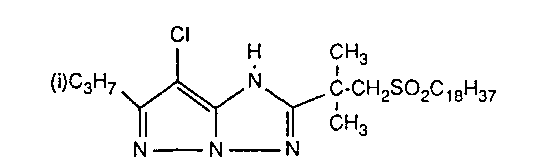

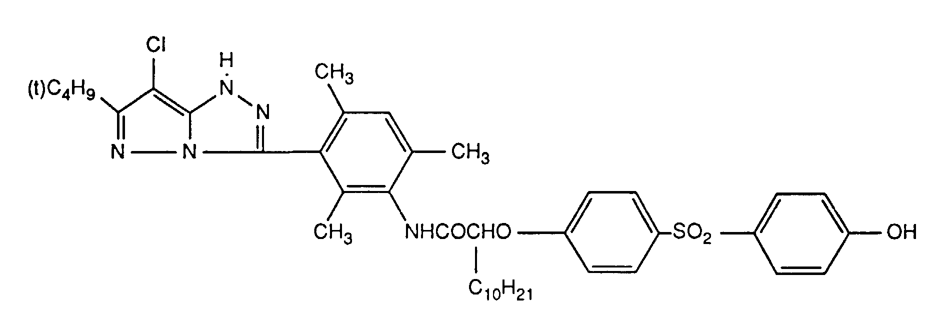

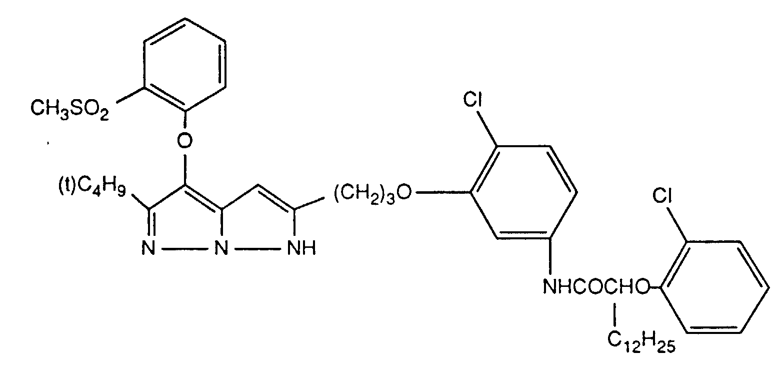

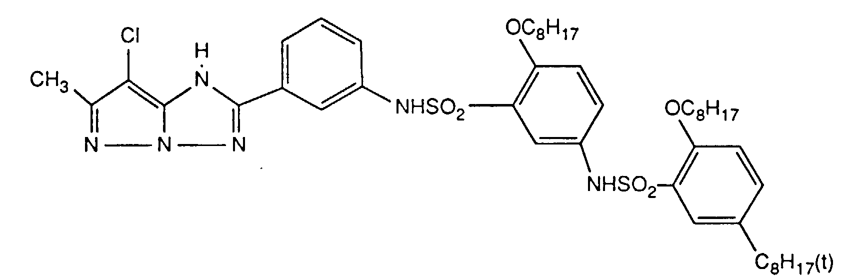

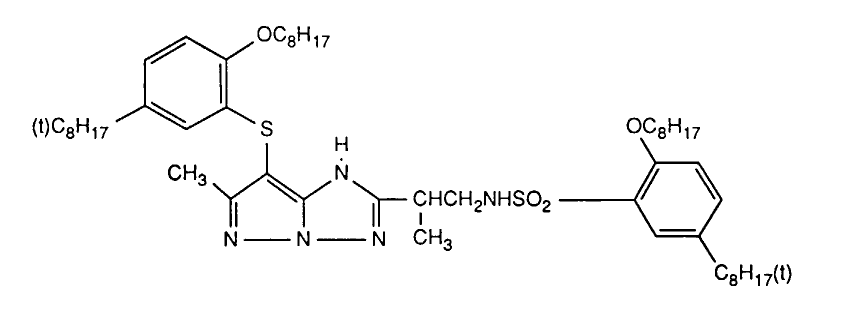

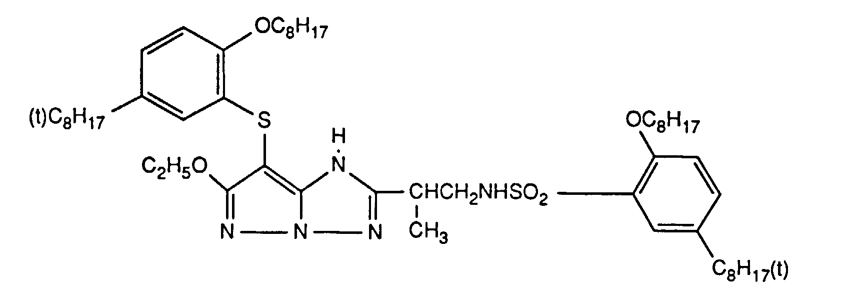

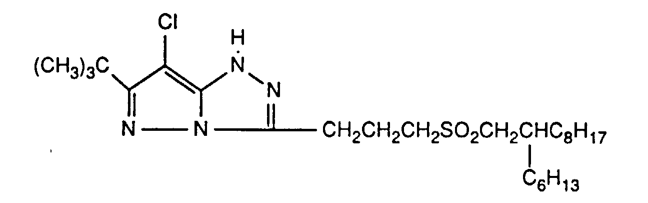

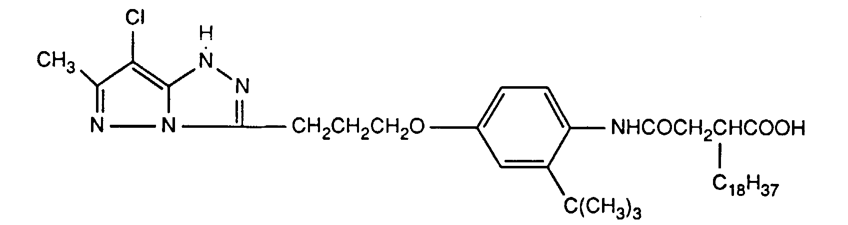

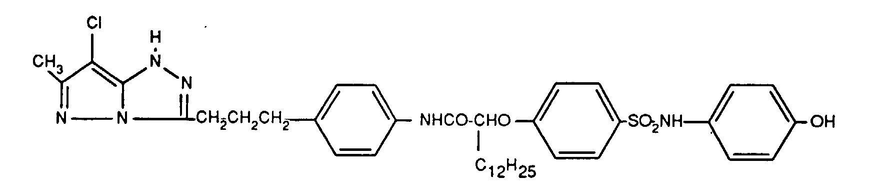

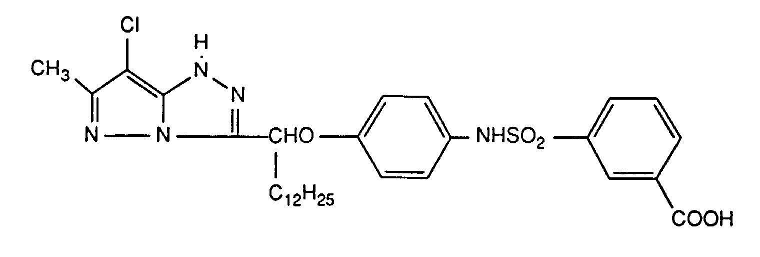

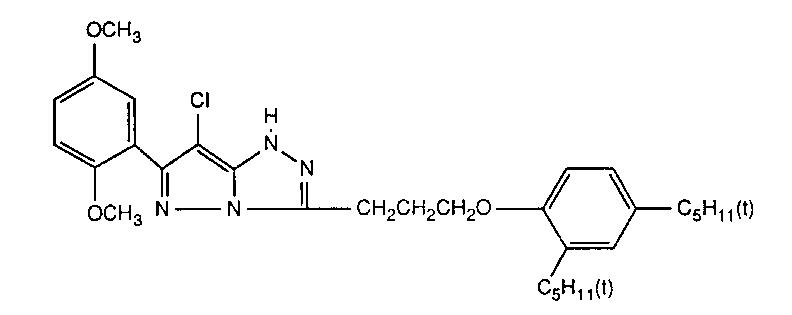

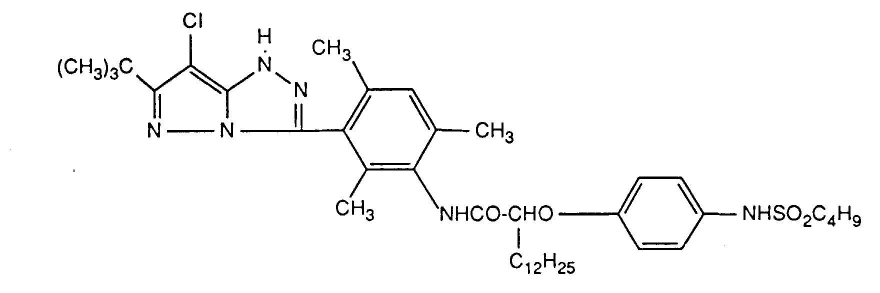

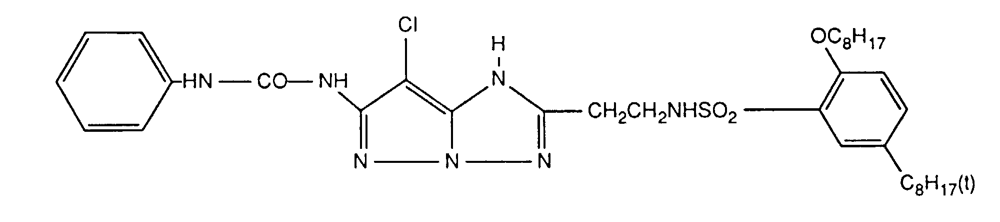

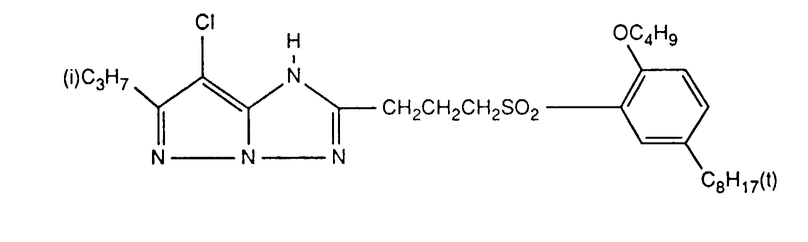

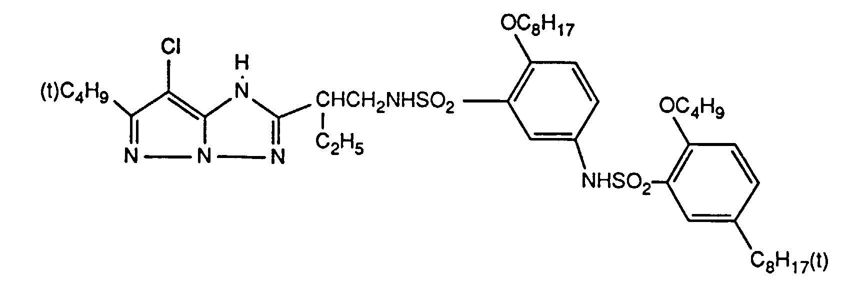

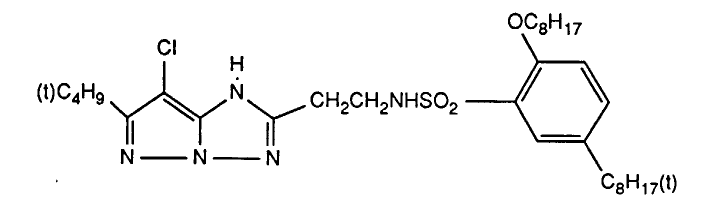

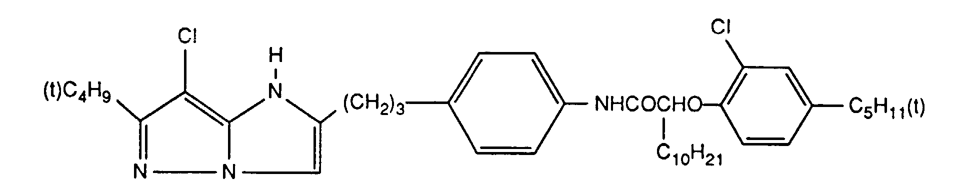

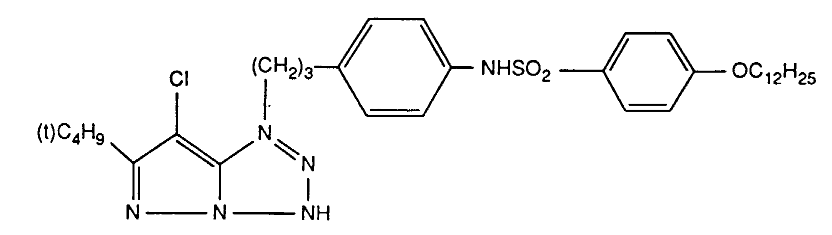

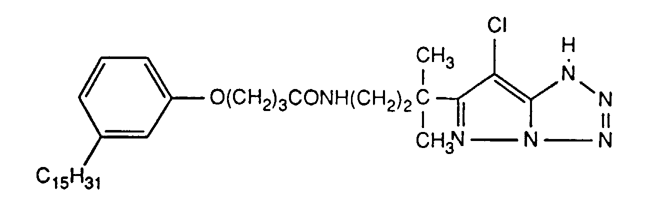

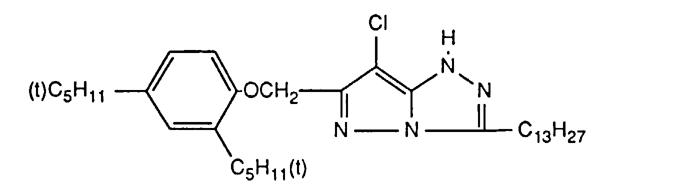

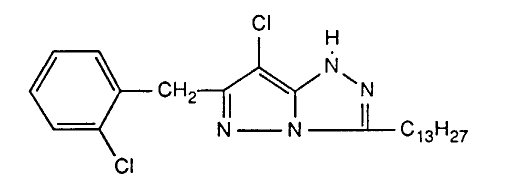

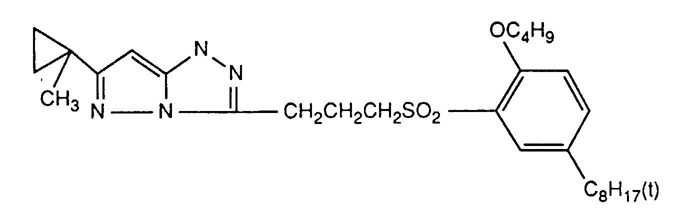

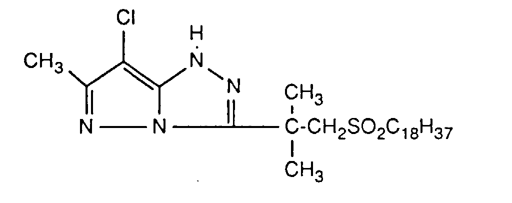

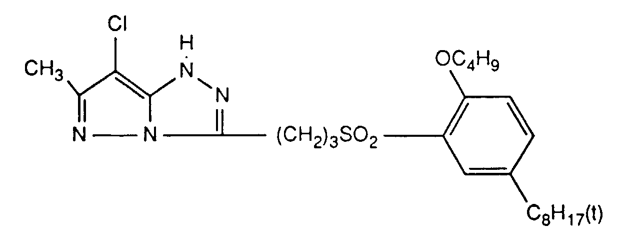

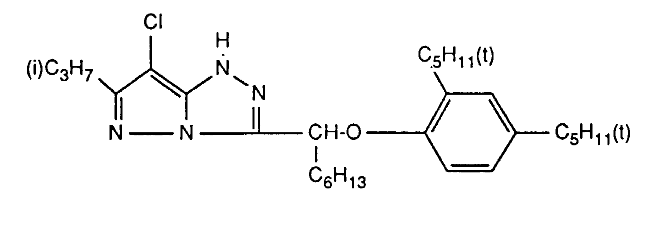

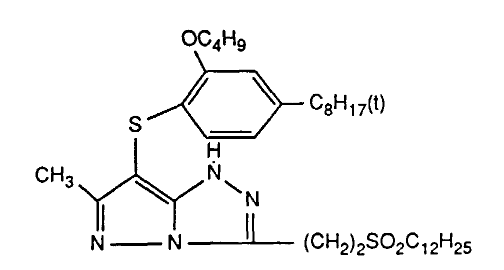

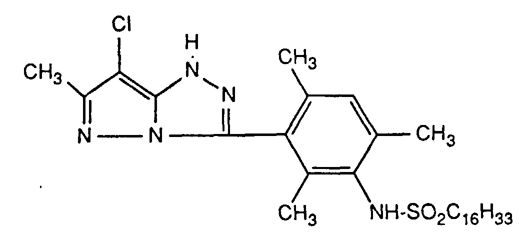

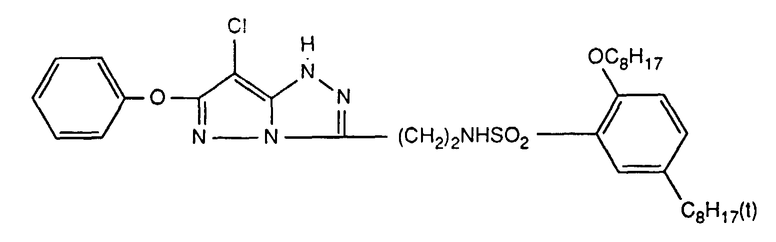

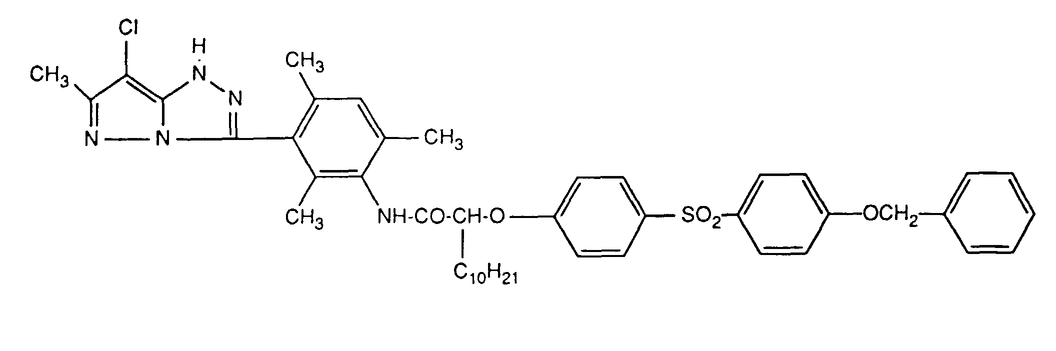

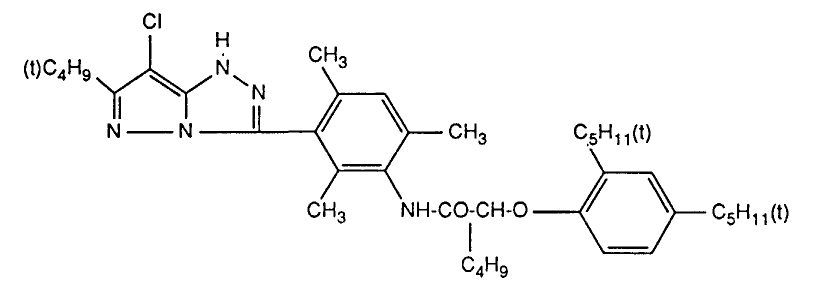

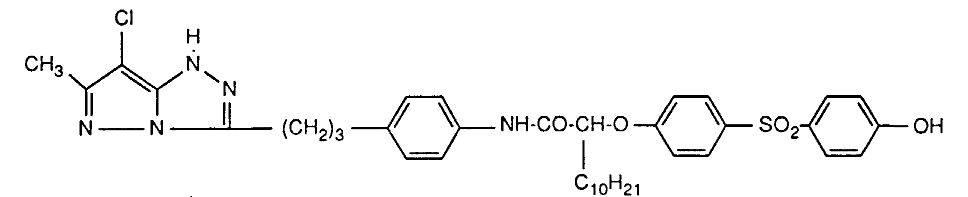

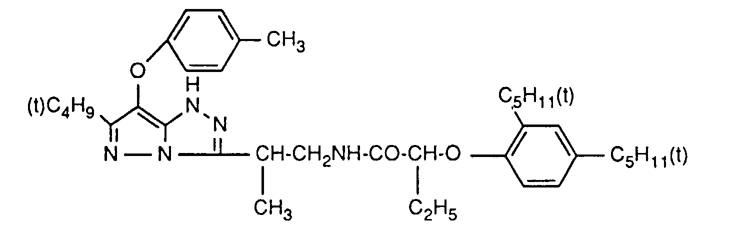

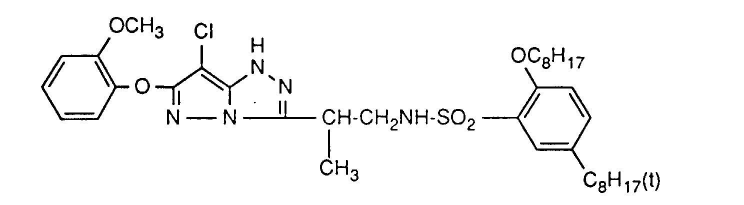

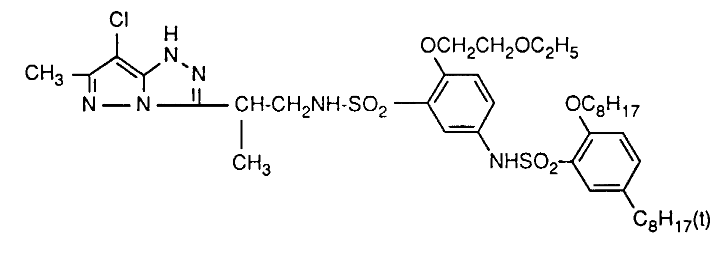

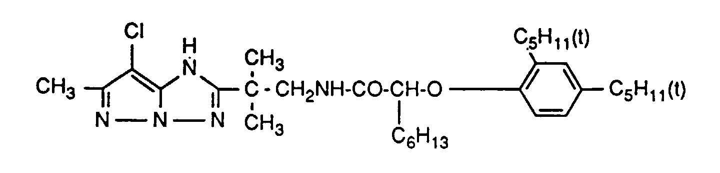

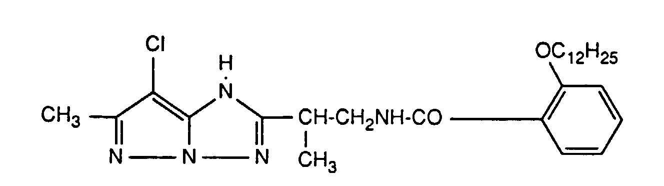

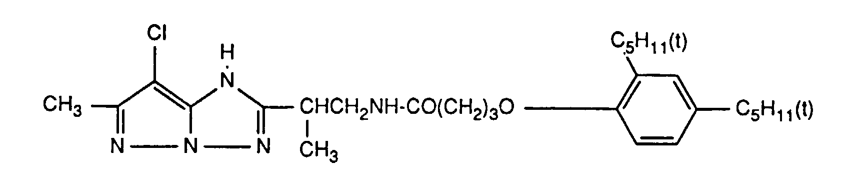

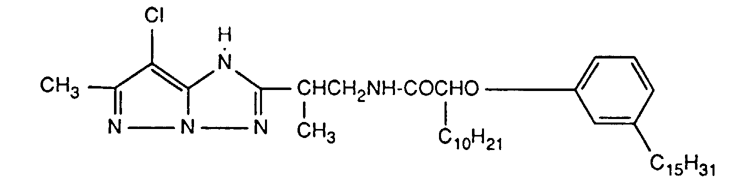

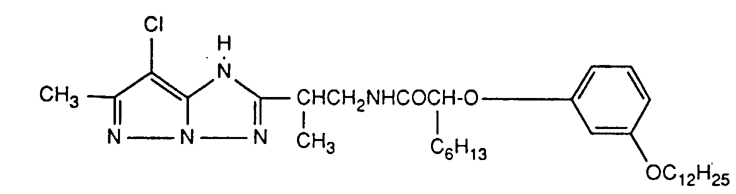

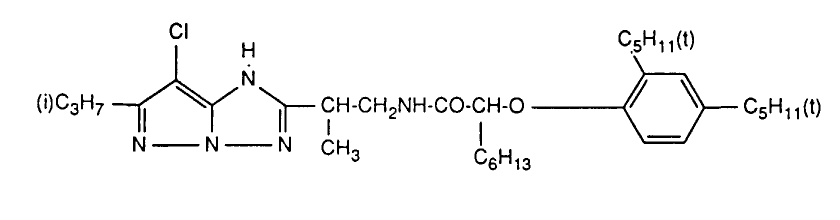

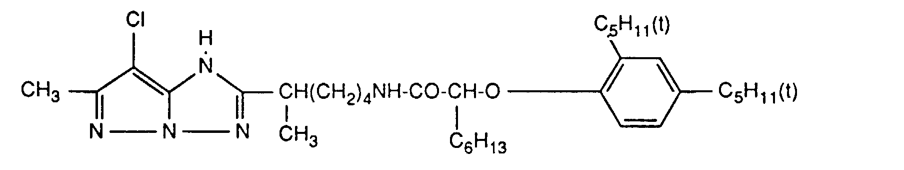

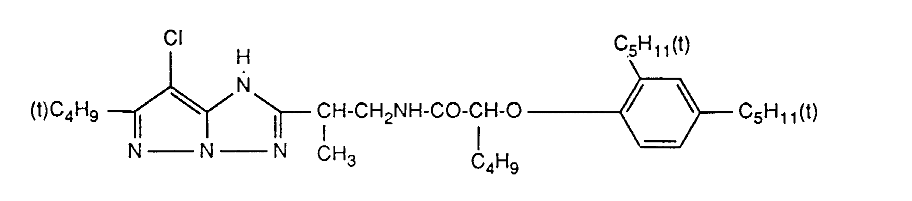

Cyankuppler können z.B. Derivate von Phenol, von 1-Naphthol oder von Pyrazolo-chinazolon sein. Bevorzugt sind Strukturen der Formel E, 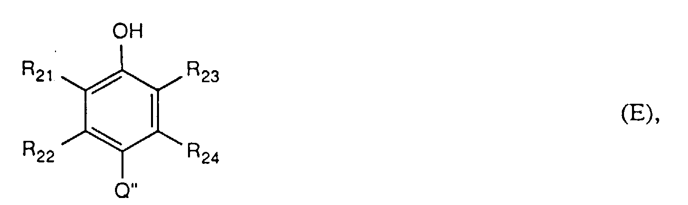 worin R₂₁, R₂₂, R₂₃ und R₂₄ Wasserstoff, Halogen, Alkyl, Carbamoyl, Amino, Sulfonamido, Phosphoramido oder Ureido sind. R₂₁ ist vorzugsweise H oder Cl, R₂₂ ist vorzugsweise eine Alkyl- oder Aminogruppe. R₂₃ ist vorzugsweise eine Aminogruppe und R₂₄ ist vorzugsweise Wasserstoff. Q" ist Wasserstoff oder eine Abgangsgruppe, die bei der Reaktion mit den oxidierten Entwickler abgespalten wird. Eine ausführliche Aufzählung von Cyankupplern ist im US-A-4,456,681 zu finden.

Beispiele von gebräuchlichen Cyankupplern sind die folgenden:

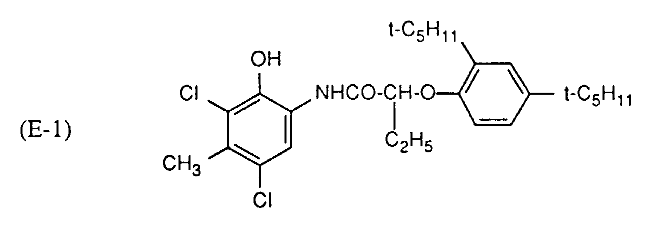

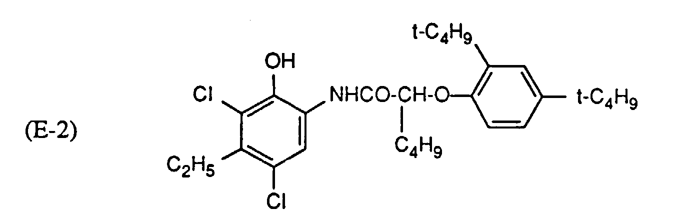

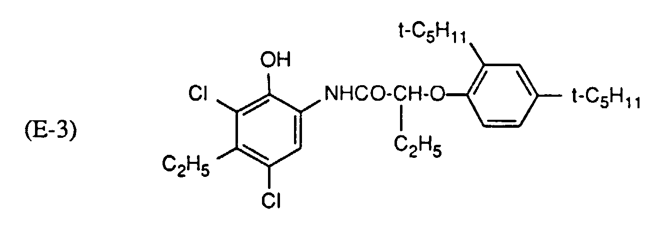

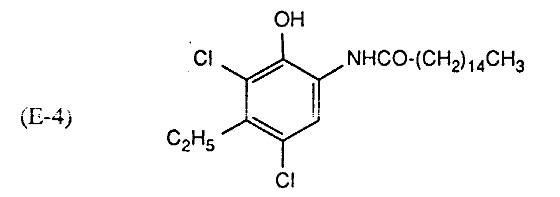

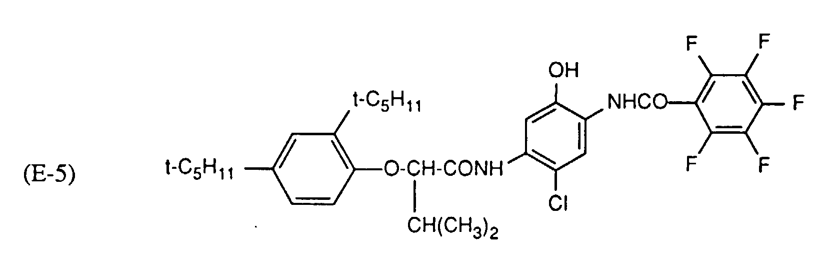

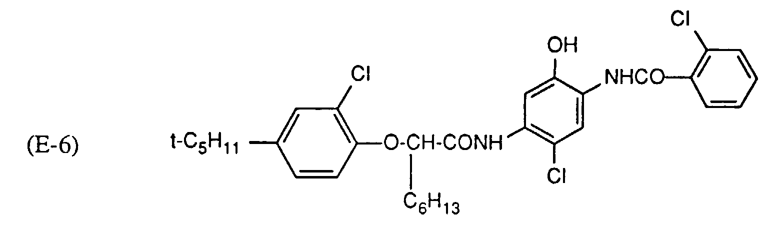

Weitere Beispiele von Cyankupplern sind in folgenden US-A- zu finden:
2,369,929, 2,423,730, 2,434,272, 2,474,293, 2,521,293, 2,521,908, 2,698,794, 2,706,684, 2,772,162, 2,801,171, 2,895,826, 2,908,573, 3,034,892, 3,046,129, 3,227,550, 3,253,294, 3,311,476, 3,386,301, 3,419,390, 3,458,315, 3,476,560, 3,476,563, 3,516,831, 3,560,212, 3,582,322, 3,583,971, 3,591,383, 3,619,196, 3,632,347, 3,652,286, 3,737,326, 3,758,308, 3,839,044, 3,880,661, 4,004,929, 4,124,396, 4,333,999, 4,463,086, 4,456,681, 4,873,183 und 4,923,791 und in den EP-A-354,549 und EP-A-398,664.

In der rotempfindlichen Silberhalogenidemulsionsschicht des erfindungsgemässen Materials kommen vorzugsweise Cyankuppler der Formel 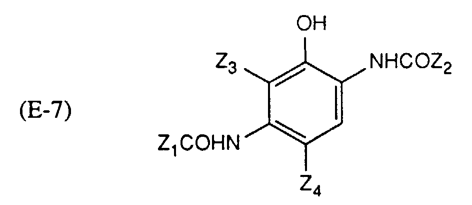 und/oder oder Formel 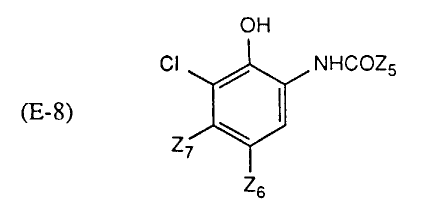 zum Einsatz, worin
Z₁ Alkyl, Aryl, Z₂ Alkyl, Cycloalkyl, Aryl, eine heterocyclische Gruppe, oder eine Ballastgruppe, Z₃ Wasserstoff oder Halogen ist, Z₁ und Z₃ zusammen einen Ring bilden können, und Z₄ Wasserstoff oder eine Abgangsgruppe ist, und Z₅ eine Ballastgruppe, Z₆ Wasserstoff oder eine Abgangsgruppe und Z₇ Alkyl ist.

Die für farbfotographische Materialien üblicherweise verwendeten Farbentwickler sind p-Dialkylaminoaniline. Beispiele hierfür sind 4-Amino-N,N-diethylanilin, 3-Methyl-4-amino-N,N-diethylanilin, 4-Amino-N-ethyl-N-α-hydroxyethylanilin, 3-Methyl-4-amino-N-ethyl-N-α-hydroxyethylanilin, 3-Methyl-4-amino-N-ethyl-N-α-hydroxyethyl-anilin, 3-Methyl-4-amino-N-ethyl-N-α-methansulphonamidoethylanilin, 3-Methyl-4-amino-N-ethyl-N-α-methoxyethyl-anilin, 3-α-Methansulphonamidoethyl-4-amino-N,N-diethylanilin, 3-Methoxy-4-amino-N-ethyl-N-α-hydroxyethylanilin, 3-Methoxy-4-amino-N-ethyl-N-α-methoxyethylanilin, 3-Acetamido-4-amino-N,N-diethylanilin, 4-Amino-N,N-dimethylanilin, N-Ethyl-N-α-[α'-(α"-methoxyethoxy)ethoxy]ethyl-3-methyl-4-aminoanilin, N-Ethyl-N-α-(α'-methoxyethoxy)ethyl-3-methyl-4-aminoanilin, sowie die Salze solcher Verbindungen, wie z.B. Sulfate, Hydrochloride oder Toluolsulfonate.

Die erfindungsgemäss verwendeten UV-Absorber der Formel (1) und (2) können allein oder zusammen mit dem Farbkuppler und gegebenenfalls weiteren Zusätzen in das farbphotographische Material eingearbeitet werden, indem man sie in hochsiedenden organischen Lösungsmitteln vorlöst. Vorzugsweise verwendet man Lösungsmittel, die höher als 160°C sieden. Typische Beispiele solcher Lösungsmittel sind die Ester von Phthalsäure, Phosphorsäure, Zitronensäure, Benzoesäure oder von Fettsäuren, sowie Alkylamide und Phenole.

Meist verwendet man zusätzlich noch ein niedrig siedendes Lösungsmittel, um das Einarbeiten der Zusätze in das farbphotographische Material zu erleichtern. Beispiele für solche Lösungsmittel sind Ester wie z.B. Ethylacetat, Alkohole wie z.B. Butanol, Ketone wie z.B. Methyl-isobutyl-keton, Chlorkohlenwasserstoffe wie z.B. Methylenchlorid, oder Amide wie z.B. Dimethylformamid. Sind die Zusätze selbst flüssig, so kann man sie auch ohne Zuhilfenahme von Lösungsmitteln in das Photomaterial einarbeiten.

Die erfindungsgemässen UV-Absorber können gegebenenfalls ohne Öl in der Gelatineschicht dispergiert werden; Research Disclosure 88/296017 und 89/303070.

Weitere Details über verwendbare hochsiedende Lösungsmittel sind in den folgenden Veröffentlichungen zu finden:
Phosphate: GB-A-791,219, BE-A-755,248, JP-A-76/76739, 78/27449, 78/218,252, 78/97573, 79/148,133, 82/216,177, 82/93323 und 83/216,177 und EP-A265,296.
Phthalate: GB-A-791,219, JP-A-77/98050, 82/93322, 82/216,176, 82/218,251, 83/24321, 83/45699, 84/79888.
Amide: GB-A-791,129, JP-A-76/105,043, 77/13600, 77/61089, 84/189,556, 87/239,149, US-A-928,741, EP-A-270,341, WO 88/00723.
Phenole: GB-A-820,329, FR-A-1,220,657, JP-A-69/69946, 70/3818, 75/123,026, 75/82078, 78/17914, 78/21166, 82/212,114 und 83/45699.

Andere sauerstoffhaltige Verbindungen: US-A-3,748,141, 3,779,765, JP-A-73/75126, 74/101,114, 74/10115, 75/101,625, 76/76740, 77/61089, EP-A-304,810 und BE-A-826,039.

Sonstige Verbindungen: JP-A-72/115,369, 72/130,258, 73/127,521, 73/76592, 77/13193, 77/36294, 79/95233, 91/2,748, 83/105,147 und Research Disclosure 82/21918.

Die Menge an hochsiedendem Lösungsmittel liegt z.B. im Bereich von 50 mg bis 2 g pro m² Träger, vorzugsweise von 200 mg bis 1 g pro m ².

Die photographischen Schichten können ferner Farbschleier-Inhibitoren enthalten. Diese verhindern das Entstehen von Farbschleiern, wie sie beispielsweise durch Reaktion des Kupplers mit unabsichtlich oxidiertem Entwickler oder mit Nebenprodukten des Farbbildungsprozesses entstehen. Solche Farbschleierinhibitoren sind meist Hydrochininderivate, können aber auch Derivate von Aminophenolen, von Gallussäure oder von Ascorbinsäure sein. Typische Beispiele hierfür sind in folgenden Veröffentlichungen zu finden:
US-A-2,360,290, 2,336,327, 2,403,721, 2,418,613, 2,675,314, 2,701,197, 2,704,713, 2,728,659, 2,732,300, 2,735,365; EP-A-124,877, EP-A-277,589, EP-A-338,785;
JP-A-75/92988, 75/92989, 75/93928, 75/110,337, 84/5,247 und 77/146,235.

Die photographischen Schichten können auch sogenannte DIR-Kuppler (DIR bedeutet Development Inhibition Release) enthalten, die mit dem oxidierten Entwickler farblose Verbindungen ergeben. Sie werden zugesetzt zur Verbesserung der Schärfe und der Körnigkeit der Farbbilder.

Die photographischen Schichten im erfindungsgemässen Material können auch weitere UV-Absorber enthalten. Beispiele für solche UV-Absorber sind Benztriazole, 2-Hydroxybenzophenone, Salicylsäureester, Acrylnitrilderivate oder Thiazoline. Solche UV-Absorber sind z.B. in folgenden Veröffenlichungen näher erläutert: US-A-3,314,794, 3,352,681, 3,705,805, 3,707,375, 4,045,229, 3,700,455, 3,533,794, 3,698,907, 3,705,805, 3,738,837, 3,762,272, 4,163,671, 4,195,999, 4,309,500, 4,431,726, 4,443,543, 4,576,908, 4,749,643, GB-A-1,564,089, EP-A-190,003 und JP-A-71/2784, 81/111,826, 81/27,146, 88/53,543 und 88/55,542. Bevorzugte UV-Absorber sind Benztriazole, insbesondere 2-(2-Hydroxyphenyl)-benztriazole und vorzugsweise solche der oben gezeigten Formel (2).

Die photographischen Schichten können auch phenolische Verbindungen enthalten, die als Lichtschutzmittel für das Farbbild sowie als Mittel gegen Farbschleier wirken. Sie können in einer lichtempfindlichen Schicht (Farbschicht) oder in einer Zwischenschicht enthalten sein, allein oder zusammen mit anderen Additiven. Solche Verbindungen sind z.B. in den folgenden Veröffentlichungen näher beschrieben: US-A-3,700,455, 3,591,381, 3,573,052, 4,030,931, 4,174,220, 4,178,184, 4,228,235, 4,279,990, 4,346,165, 4,366,226, 4,447,523, 4,528,264, 4,581,326, 4,562,146, 4,559,297, GB-A-1,309,277, 1,547,302, 2,023,862, 2,135,788, 2,139,370, 2,156,091; DE-A-2,301,060, 2,347,708, 2,526,468, 2,621,203, 3,323,448; DD-A-200,691, 214,468; EP-A-106,799, 113,124, 125,522, 159,912, 161,577, 164,030, 167,762, 176,845, 246,766, 320,776; JP-A-74/134,326, 76/127,730, 76/30462, 77/3822, 77/154,632, 78/10842, 79/48535, 79/70830, 79/73032, 79/147,038, 79/154,325, 79/155,836, 82/142,638, 83/224,353, 84/5246, 84/72443, 84/87456, 84/192,246, 84/192,247, 84/204,039, 84/204,040, 84/212,837, 84/220,733, 84/222,836, 84/228,249, 86/2540, 86/8843, 86/18835, 86/18836, 87/11456, 87/42245, 87/62157, 86/6652, 89/137,258 sowie in Research Disclosure 79/17804.

Die photographischen Schichten können auch gewisse Phosphor-III-Verbindungen, insbesondere Phosphite und Phosponite, enthalten. Diese fungieren als Lichtschutzmittel für die Farbbilder sowie als Dunkellager-Stabilisator für Magentakuppler. Man setzt sie vorzugsweise den hochsiedenden Lösungsmitteln zu, zusammen mit dem Kuppler. Solche Phosphor-III-Verbindungen sind z.B. in den folgenden Veröffentlichungen näher beschrieben: US-A-4,407,935, US-A-4,436,811, US-A-4,956,406, EP-A-181,289, JP-A-73/32728, JP-A-76/1420 und JP-A-55/66741.

Die photographischen Schichten können auch metallorganische Komplexe enthalten, die Lichtschutzmittel für die Farbbilder sind, insbesondere für die Magenta-Farbstoffe. Solche Verbindungen und deren Kombination mit anderen Additiven sind z.B. in folgenden Veröffentlichungen näher beschrieben: US-A-4,050,938, 4,239,843, 4,241,154, 4,242,429, 4,241,155, 4,242,430, 4,273,854, 4,246,329, 4,271,253, 4,242,431, 4,248,949, 4,245,195, 4,268,605, 4,246,330, 4,269,926, 4,245,018, 4,301,223, 4,343,886, 4,346,165, 4,590,153; JP-A-81/167,138, 81/168,652, 82/30834, 82/161,744; EP-A-137,271, 161,577, 185,506; DE-A-2,853,865.

Die photographischen Schichten können auch Hydrochinonverbindungen enthalten. Diese wirken als Lichtschutzmittel für die Farbkuppler und für die Farbbilder sowie als Abfänger von oxidiertem Entwickler in Zwischenschichten. Sie werden vor allem in der Magentaschicht verwendet. Solche Hydrochinon-Verbindungen und deren Kombinationen mit anderen Additiven sind z.B. in folgenden Veröffentlichungen näher beschrieben:
US-A-2,360,290, 2,336,327, 2,403,721, 2,418,613, 2,675,314, 2,701,197, 2,710,801, 2,732,300, 2,728,659, 2,735,765, 2,704,713, 2,937,086, 2,816,028, 3,582,333, 3,637,393, 3,700,453, 3,960,570, 3,935,016, 3,930,866, 4,065,435, 3,982,944, 4,232,114, 4,121,939, 4,175,968, 4,179,293, 3,591,381, 3,573,052, 4,279,990, 4,429,031, 4,346,165, 4,360,589, 4,346,167, 4,385,111, 4,416,978, 4,430,425, 4,277,558, 4,489,155, 4,504,572, 4,559,297,
FR-A-885,982; GB-A-891,158, 1,156,167, 1,363,921, 2,022,274, 2,066,975, 2,071,348, 2,081,463, 2,117,526, 2,156,091; DE-A-2,408,168, 2,726,283, 2,639,930, 2,901,520, 3,308,766, 3,320,483, 3,323,699; DD-A-216,476, 214,468, 214,469, EP-A-84290, 110,214, 115,305, 124,915, 124,877, 144,288, 147,747, 178,165, 161,577; JP-A-75/33733, 75/21249, 77/128,130, 77/146,234, 79/70036, 79/133,131, 81/83742, 81/87040, 81/109,345, 83/134,628, 82/22237, 82/112,749, 83/17431, 83/21249, 84/75249, 84/149,348, 84/182,785, 84/180,557, 84/189,342, 84/228,249, 84/101,650, 79/24019, 79/25823, 86/48856, 86/48857, 86/27539, 86/6652, 86/72040, 87/11455, 87/62157, sowie in Research Disclosure 79/17901, 79/17905, 79/18813, 83/22827 und 84/24014.

Die photographischen Schichten können auch Derivate von Hydrochinonethern enthalten. Diese Verbindungen wirken als Lichtschutzmittel und sind besonders geeignet zur Stabilisierung von Magenta-Farbstoffen. Solche Verbindungen und deren Kombination mit anderen Additiven sind z.B. in folgenden Veröffentlichungen näher beschrieben:
US-A 3,285,937, 3,432,300, 3,519,429, 3,476,772, 3,591,381, 3,573,052, 3,574,627, 3,573,050, 3,698,909, 3,764,337, 3,930,866, 4,113,488, 4,015,990, 4,113,495, 4,120,723, 4,155,765, 4,159,910, 4,178,184, 4,138,259, 4,174,220, 4,148,656, 4,207,111, 4,254,216, 4,134,011, 4,273,864, 4,264,720, 4,279,990, 4,332,886, 4,436,165, 4,360,589, 4,416,978, 4,385,111, 4,459,015, 4,559,297; GB-A 1,347,556, 1,366,441, 1,547,392, 1,557,237, 2,135,788; DE-A 3,214,567; DD-214,469, EP-A 161,577, 167,762, 164,130, 176,845;
JP-A 76/123,642, 77/35633, 77/147,433, 78/126, 78/10430, 78/53321, 79/24019, 79/25823, 79/48537, 79/44521, 79/56833, 79/70036, 79/70830, 79/73032, 79/95233, 79/145,530, 80/21004, 80/50244, 80/52057, 80/70840, 80/139,383, 81/30125, 81/151,936, 82/34552, 82/68833, 82/ 204,306 82/204,037, 83/134,634, 83/207,039, 84/60434, 84/101,650, 84/87450, 84/149,348, 84/182,785, 86/72040, 87/11455, 87/62157, 87/63149, 86/2151, 86/6652, 86/48855, 89/309,058 sowie in Research Disclosure 78/17051.

Als Stabilisatoren für die Magentakuppler kommen beispielsweise in Frage:

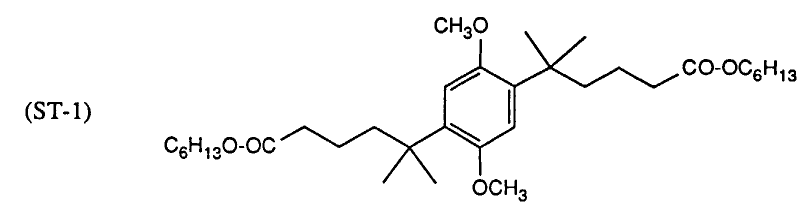

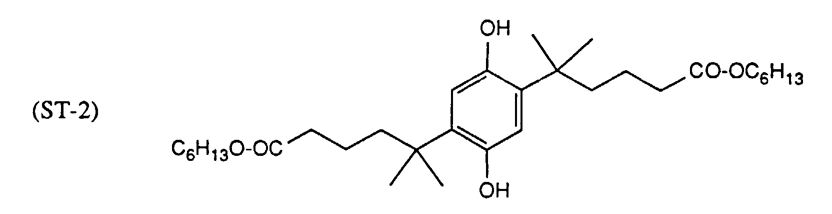

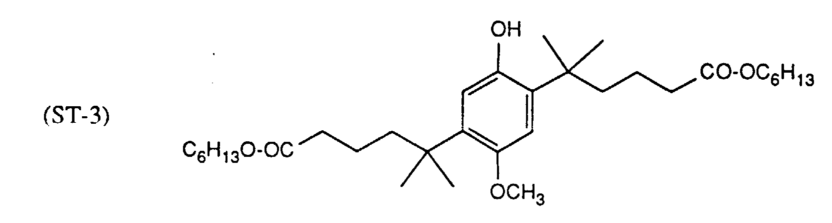

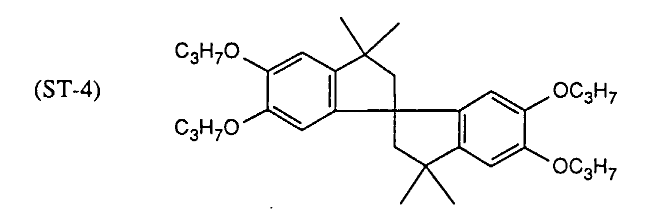

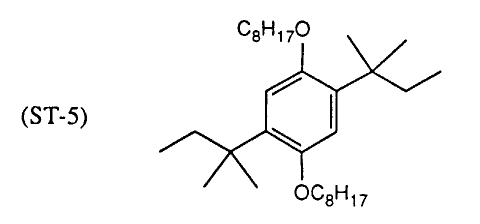

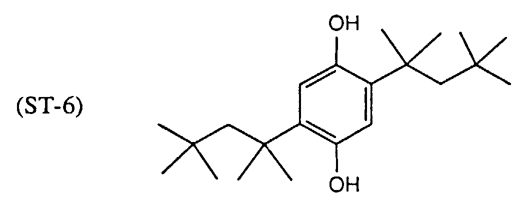

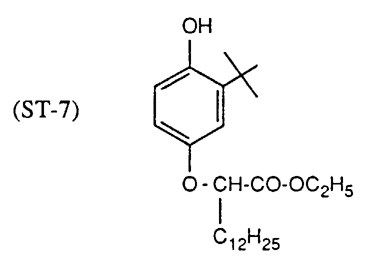

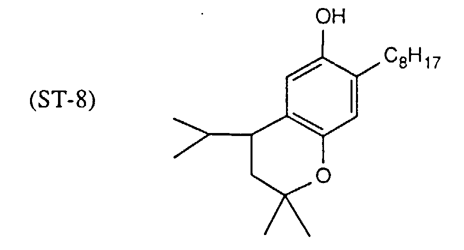

Als Silberhalogenidemulsionen können übliche Silberchlorid, -bromid oder -jodidemulsionen verwendet werden oder Mischungen hiervon wie Silberchlorobromid- und Silberchloriodidemulsionen, worin die Silberhalogenide alle bekannten Kistallformen aufweisen können. Der Verwendung von Silberchloridemulsionen kommt im erfindungsgemässen Material besondere Bedeutung zu. Die Herstellung solcher Emulsionen sowie deren Sensibilisierung sind in RESEARCH DISCLOSURE, November 1989, Nr. 307,105 beschrieben. Diese Publikation erwähnt ferner eine Reihe von Bindemitteln für die genannten Emulsionen, welche auch in den erfindungsgemässen Materialien Anwendung finden können. Dasselbe gilt für die in der Publikation genannten Träger.

Die Silberhalogenidemulsion, welche zur Durchführung dieser Erfindung verwendbar ist, kann für alle gewünschten Wellenlängen sensibilisiert werden mit Hilfe von Sensibilisierungspigmenten. Es können hierfür Cyanin-Pigmente, Merocyanin-Pigmente, holopolare Pigmente, Hemicyanin-Pigmente, Styryl-Pigmente oder Hemioxanol-Pigmente verwendet werden.

In dem photosensitiven Material können wasserlösliche Farbstoffe enthalten sein, um beispielsweise die Klarheit zu verbessern, indem sie die Strahlenschädigung verhindern. Es können hierfür Oxonol-Farbstoffe, Hemioxonol-Farbstoffe, Styryl-Farbstoffe, Merocyanin-Farbstoffe, Cyanin-Farbstoffe, Anthrachinon-Farbstoffe und Azo-Farbstoffe verwendet werden.

Es können mit dem erfindungsgemässen Material auch weitere Materialien wie beispielsweise in JP-A-87/215,272, 92/9,035, 92/21,840 und EP-A-429,240 beschrieben verwendet werden.

Gegenstand vorliegender Erfindung sind auch Verbindungen der Formel 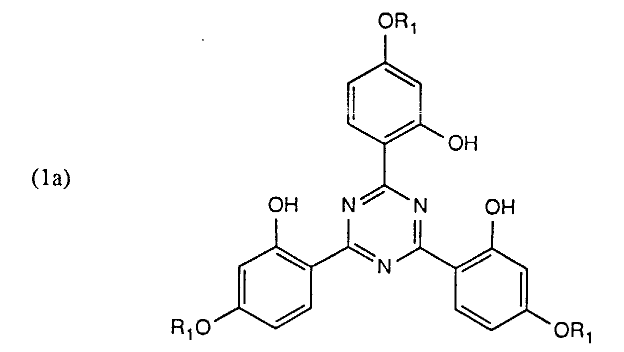 worin R₁ unabhängig voneinander einen Rest der Formel -CH₂-CH(ORₓ)R_{y} oder -CH₂CH(ORₓ)CH₂OR_{z} bedeuten, wobei
Rₓ-CORₛ, -COOR_{w} oder -SiRₚR_{q}Rᵣ,
R_{y} C₁-C₁₈-Alkyl oder Phenyl-C₁-C₄-Alkyl,
R_{z} C₁-C₁₈-Alkyl, C₂-C₁₈-Alkenyl, Phenyl-C₁-C₄-Alkyl, -CORₛ oder durch Sauerstoff unterbrochenes C₁-C₂₄-Alkyl oder C₂-C₂₄-Hydroxyalkyl,
Rₛ C₁-C₁₈-Alkyl, C₂-C₁₈-Alkenyl oder Phenyl,
R_{w} C₁-C₄-Alkyl und
Rₚ, R_{q} und Rᵣ unabhängig voneinander C₁-C₆-Alkyl oder Phenyl
bedeuten; oder
die Reste R₁ unabhängig voneinander eine Gruppe G-II bedeuten,
wobei II eine Gruppe der Formel 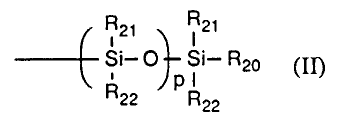 ist und
G eine direkte Bindung oder eine zweiwertige Gruppe einer der folgenden Formeln ist:

-(CH₂)_{q}-,-(CH₂)_{q}-O-,-(CH₂)_{q}-O-R₂₆-,-(CH₂)_{q}-CO-X-(CH₂)ᵣ-,-(CH₂)_{q}-CO-X-(CH₂)ᵣ-O-,

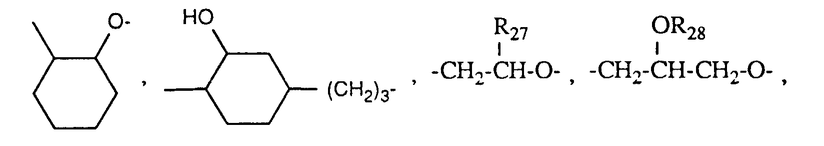

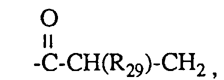

-CH₂-CH(OH)-CH₂-Y-(CH₂)_{q}-,

worin q und r unabhängig voneinander 1-4 und p 0-50 sind,
R₂₆ C₁-C₁₂-Alkylen, Cyclohexylen oder Phenylen bedeutet,
R₂₇ C₁-C₁₂-Alkyl, C₅-C₈-Cycloalkyl, Phenyl, C₂-C₁₃-Alkoxymethyl, C₆-C₉-Cycloalkoxymethyl oder Phenoxymethyl bedeutet,
R₂₈ eine Gruppe der Formel G-II bedeutet,
R₂₉ Waserstoff oder Methyl ist,
X -O- oder -NR₂₃- bedeutet, worin R₂₃ Wasserstoff, C₁-C₁₂-Alkyl oder eine Gruppe -(CH₂)₃-G-II oder -(CH₂)₃-O-G-II bedeutet,
Y -O- oder -NH- bedeutet,
R₂₀, R₂₁ und R₂₂ unabhängig voneinander C₁-C₁₈-Alkyl, Cyclohexyl, Phenyl oder C₁-C₁₈-Alkoxy bedeuten.

Weiter bevorzugte Verbindungen sind solche, wie sie bei der Beschreibung des fotografischen Materials erwähnt sind.

Die nachfolgenden Beispiele erläutern die Erfindung weiter.

Beispiel 1: Auf ein mit Polyethylen beschichtetes Trägermaterial wird zuerst eine Gelatineschicht aufgetragen, die Silberbromid, einen Magentakuppler und einen Stabilisator enthält, dann eine Gelatineschicht, die den UV-Absorber der Formel (1) enthält (Deckschicht).

Die Gelatineschichten enthalten folgende Komponenten (je m² Trägermaterial):

| Komponente | AgBr-Schicht | Deckschicht |
|---|---|---|
| Gelatine | 5.15 g | 1.2 g |
| | | |
| Härtungsmittel | 300 mg | 40 mg |
| | | |
| Netzmittel | 85 mg | 100 mg |
| | | |
| Silberbromid | 520 mg* | -- |
| | 260 mg** | -- |
| | | |
| Isononylphosphat | A | 510 mg |
| | | |
| Magentakuppler | 0.535 mM | -- |
| | | |
| UV-Absorber | -- | 300 mg |
| | | |
| Stabilisator | B | -- |

| | | |
|---|---|---|
| * bei Verwendung von 4-Aequivalentkupplern, | | |
| ** bei Verwendung von 2-Aequivalentkupplern | | |
| A (Oelmenge) = 50 % der Magentakuppler-Menge, | | |
| B (Stabilisatormenge) = 35 % der Magentakuppler-Menge | | |

Als Härter wird 2,4-Dichlor-6-hydroxytriazin verwendet, als Netzmittel das Natriumsalz der Diisobutylnaphthalinsulfonsäure.
Die Mengen von Magentakupper und Stabilisator sind in Tabelle 2 angegeben. Auf die so erhaltenen Proben wird jeweils ein Stufenkeil mit einem Dichteunterschied von 0,15 logE pro Stufe aufbelichtet und anschliessend gemäss den Vorschriften des Herstellers im Verarbeitungsprozess E+2 der Firma Kodak für Negativ-Farbpapiere verarbeitet.

Nach Belichtung und Verarbeitung wird die Remissionsdichte im grün für die Magentastufe mit einer Dichte zwischen 0,9 und 1,1 des Keils gemessen. Dann wird der Keil in einem Atlas-Belichungsgerät mit total 45 kJ/cm² belichtet und erneut die Remissionsdichte gemessen.

Der Farbstoffverlust (-ΔD) in % ist in Tabelle 2 angegeben.

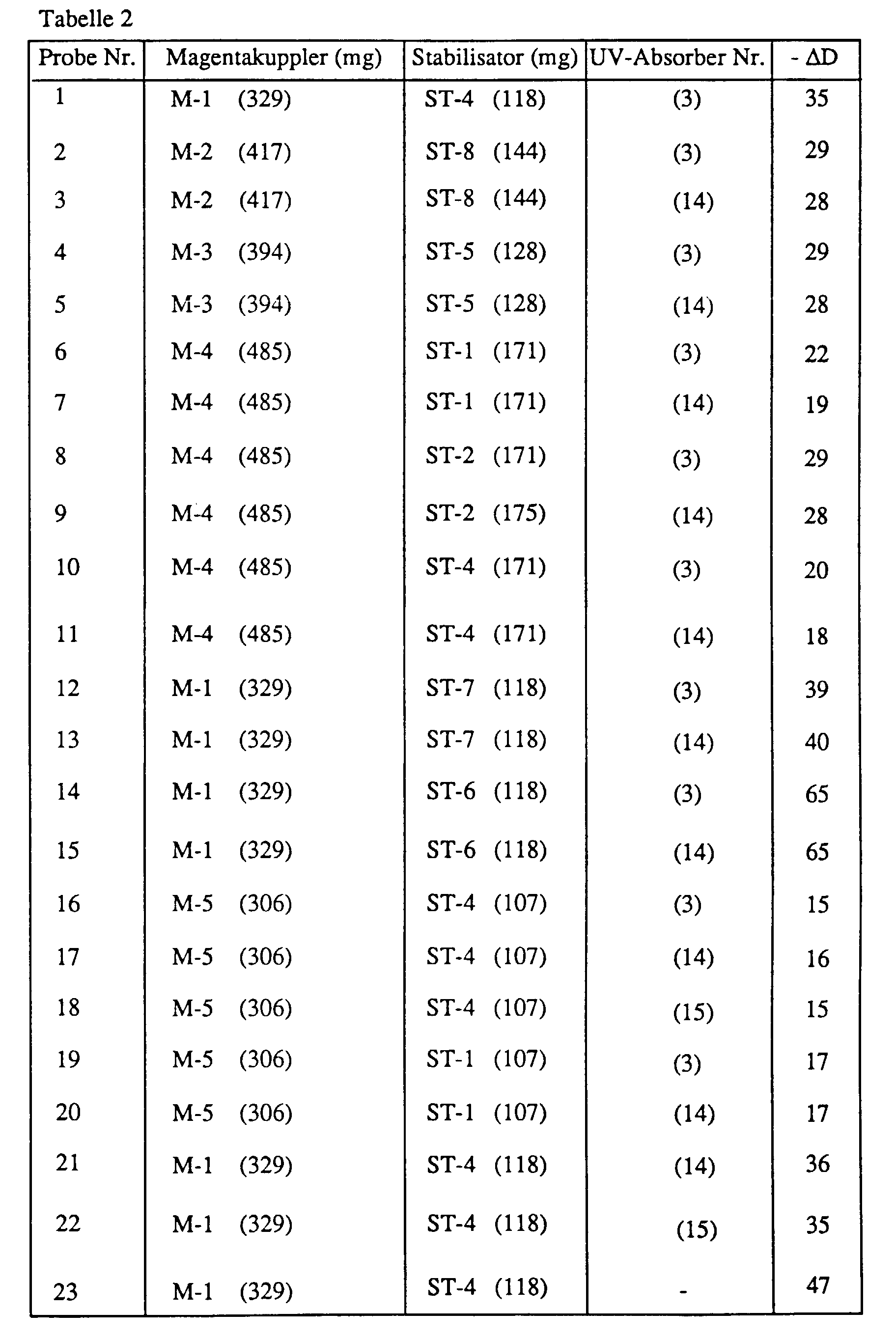

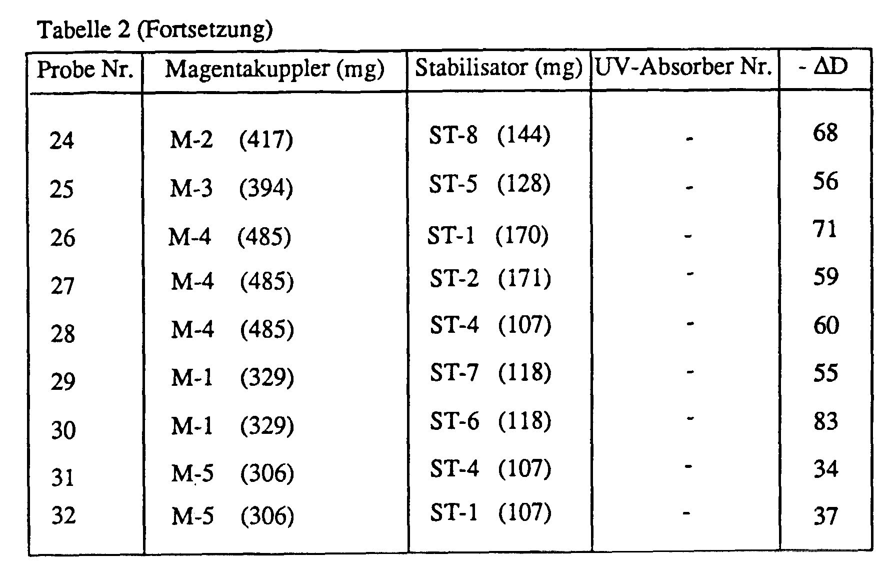

Beispiel 2: Wiederholt man Beispiel 1, nimmt aber 150 mg UV-Absorber sowie 150 mg Hydroxybentriazol, so erhält man die in Tabelle 3 angegebenen Werte für den Farstoffverlust (-ΔD) in %.

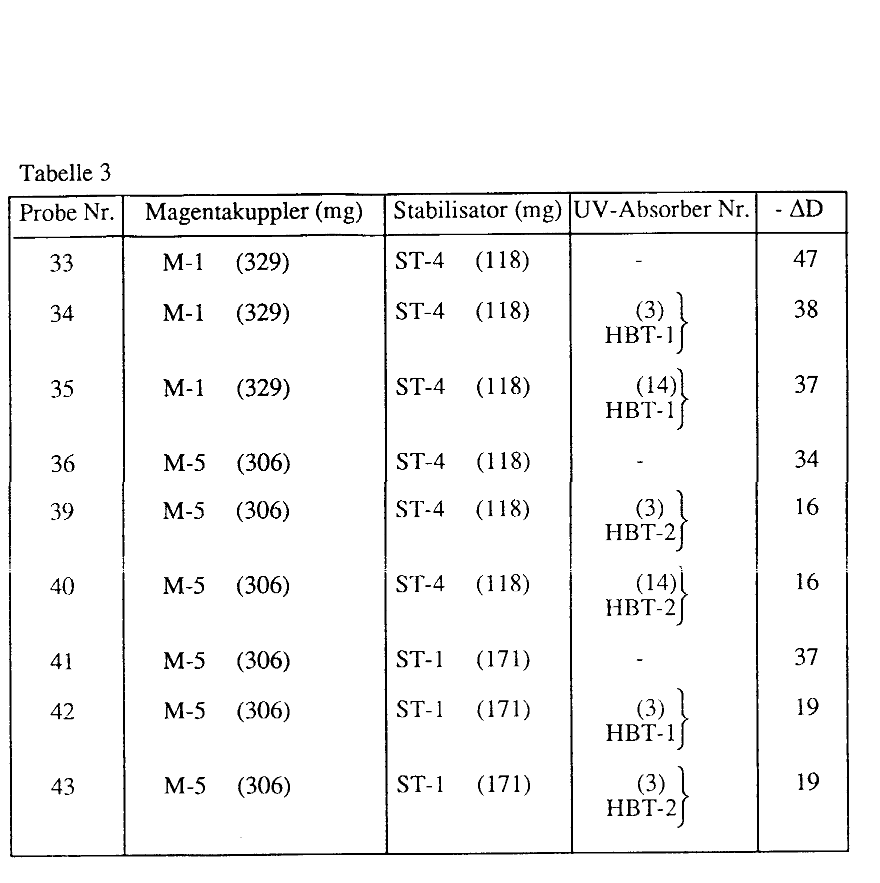

Beispiel 3: Wiederholt man Beispiel 1, nimmt aber je 150 mg von zwei UV-Absorbern so erhält man die in Tabelle 4 angegebenen Werte für den Farstoffverlust (-ΔD) in %.

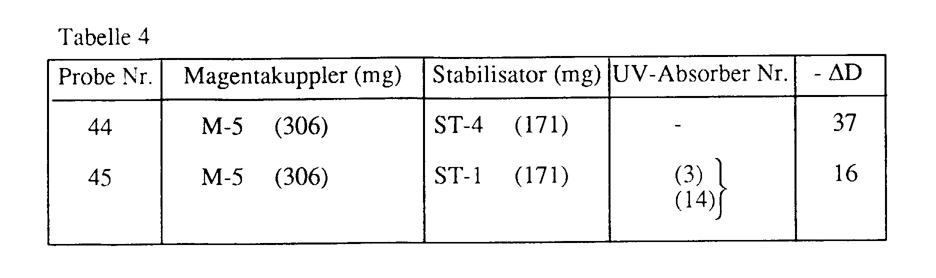

Beispiel 4: Wiederholt man Beispiel 1, nimmt aber je 100 mg von drei UV-Absorbern so erhält man die in Tabelle 5 angegebenen Werte für den Farstoffverlust (-ΔD) in %.

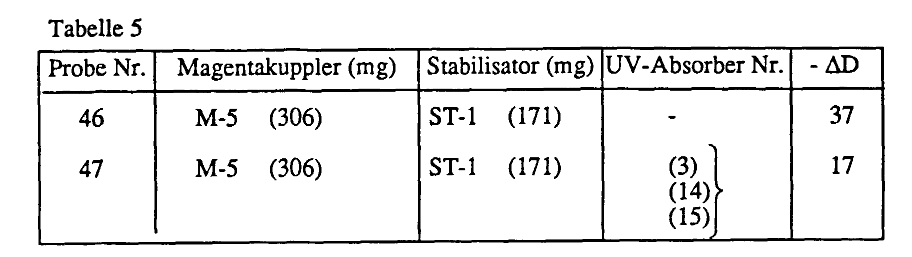

In den Proben, die einen erfindungsgemässen UV-Absorber enthalten, wird eine geringere Abnahme der Magentadichte festgestellt.

Beispiel 5: Es wird wie in Beispiel 1 vorgegangen, jedoch ohne Stabilisator und unter Verwendung eines Cyankupplers. Die Zusammensetzung der Gelatineschichten (pro m²) ist folgende:

| Komponente | AgBr-Schicht | Deckschicht |
|---|---|---|
| Gelatine | 5.15 g | 1.2 g |
| Härter | 300 mg | 40 mg |
| Netzmittel | 170 mg | 100 mg |
| Silberbromid | 260 mg | -- |
| Trikresylphosphat | A | 510 mg |
| Cyankuppler | 0.535 mM | -- |
| UV-Absorber | -- | 300 mg |

| | | |
|---|---|---|
| A (Oelmenge) = 1,5 x Cyankupplermenge | | |

Die Mengen am Cyankuppler sind in Tabelle 6 angegeben:

Nach Belichtung und Verarbeitung wie in Beispiel 1 beschrieben, wird die Remissionsdichte im Rot für die Cyanstufe mit einer Dichte zwischen 0,9 und 1,1 des Keils gemessen. Dann wird der Keil in einem Atlas-Belichtungsgerät mit total 45 KJ/cm² belichtet und erneut die Remissionsdichte gemessen. Der Farbstoffverlust (-ΔD) in % ist in Tabelle 6 angegeben.

**Tabelle 6**

| Probe Nr. | Cyankuppler | (mg) | UV-Absorber Nr. | -ΔD (%) |
|---|---|---|---|---|
| 48 | E-1 | (264) | (3) | 16 |
| 49 | E-2 | (272) | (3) | 23 |
| 50 | E-3 | (272) | (3) | 22 |
| 51 | E-5 | (358) | (3) | 31 |
| 52 | E-6 | (331) | (3) | 32 |
| 53 | E-1 | (264) | (14) | 16 |
| 54 | E-3 | (272) | (14) | 21 |
| 55 | E-5 | (358) | (14) | 30 |
| 56 | E-2 | (272) | (14) | 23 |
| 57 | E-6 | (331) | (14) | 33 |
| 58 | E-1 | (264) | - | 28 |
| 59 | E-2 | (272) | - | 31 |
| 60 | E-3 | (272) | - | 28 |
| 61 | E-5 | (358) | - | 54 |
| 62 | E-6 | (331) | - | 50 |

In den Proben, die einen erfindungsgemässen UV-Absorber enthalten, ist eine geringere Abnahme in der Dichte des Cyanfarbstoffs festzustellen.

Beispiel 6: Auf ein mit Polyethylen beschichtetes Trägermaterial wird eine Gelatineschicht aufgetragen, die Silberbrimid, einen Cyankuppler und einen UV-Absorber der Formel (1) enthält.

Die Gelatineschicht enthält folgende Komponenten (je m² Trägermaterial).

| Komponente | AgBr-Schicht |
|---|---|
| Gelatine | 5,15 g |
| Härtungsmittel | 300 mg |
| Netzmittel (anionisch) | 170 mg |
| Silberbromid | 260 mg |
| Trikresylphosphat | A |
| Cyankuppler | 0,535 mM |
| UV-Absorber | siehe Tabelle 7 |

| | |
|---|---|
| A (Oelmenge) = 1,5 Cyankuppler | |

Nach Belichtung und Verarbeitung wie in Beispiel 1 beschrieben, wird die Remissionsdichte im rot für die Cyanstufe mit einer Dichte zwischen 0,9 und 1,1 des Keils gemessen. Dann wird der Keil in einem Atlas-Belichtungsgerät mit 30 kJ/cm² belichtet und erneut die Remissionsdichte gemessen. Der Farbstoffverlust (-ΔD) in % ist in Tabelle 7 angegeben.

**Tabelle 7**

| Probe Nr. | Cyankuppler | (mg) | UV-Absorber Nr. | - ΔD (%) |
|---|---|---|---|---|
| 63 | E-5 | (358) | - | 54 |
| 64 | E-5 | (358) | (3) | 36 |
| 65 | E-5 | (358) | (14) | 40 |
| 66 | E-6 | (331) | - | 50 |
| 67 | E-6 | (331) | (3) | 42 |
| 68 | E-6 | (331) | (14) | 45 |

Beispiel 7: Es wird wie in Beispiel 1 vorgegangen, jedoch ohne Stabilisator und unter Verwendung eines Gelbkupplers.

Die Zusammensetzung der Gelatineschichten (pro m²) ist folgende:

| Komponente | AgBr-Schicht | Deckschicht |
|---|---|---|
| Gelatine | 5,15 g | 1,2 g |
| Härtungsmittel | 300 mg | 40 mg |
| Netzmittel (anionisch) | 340 mg | 100 mg |
| Silberbromid | 520 mg | -- |
| Trikresylphosphat | A | 510 mg |
| Gelbkuppler | 1,07 mM | -- |
| UV-Absorber | -- | 300 mg |

| | | |
|---|---|---|
| A (Oelmenge) = 33 % der Gelbkuppler-Menge | | |

Die Menge an Gelbkuppler ist in Tabelle 8 angegeben.

Nach Belichtung und Verarbeitung wie in Beispiel 1 beschrieben, wird die Remissionsdichte im Blau für die Gelbstufe mit einer Dichte zwischen 0,9 und 1,1 des Keils gemessen. Dann wird der Keil in einem Atlas-Belichtungsgerät mit total 30 KJ/cm² belichtet und erneut die Remissionsdichte gemessen. Der Farbstoffverlust (-ΔD) in % ist in Tabelle 8 angegeben.

**Tabelle 8**

| Probe Nr. | Gelbkuppler | (mg) | UV-Absorber Nr. | -ΔD (%) |
|---|---|---|---|---|
| 69 | Y-1 | (819) | (3) | 21 |
| 70 | Y-2 | (859) | (3) | 14 |
| 71 | Y-3 | (973) | (3) | 16 |
| 72 | Y-4 | (812) | (3) | 22 |
| 73 | Y-6 | (813) | (3) | 26 |
| 74 | Y-8 | (927) | (3) | 24 |
| 75 | Y-1 | (819) | (14) | 21 |
| 76 | Y-2 | (859) | (14) | 14 |
| 78 | Y-4 | (812) | (4) | 27 |
| 79 | Y-6 | (813) | (4) | 26 |
| 80 | Y-8 | (927) | (14) | 25 |
| 81 | Y-8 | (927) | (15) | 26 |
| 82 | Y-1 | (819) | - | 46 |
| 83 | Y-2 | (859) | - | 33 |
| 84 | Y-3 | (973) | - | 50 |
| 85 | Y-4 | (812) | - | 43 |
| 86 | Y-6 | (813) | - | 48 |
| 87 | Y-8 | (927) | - | 62 |

In den Proben, die einen erfindungsgemässen UV-Absorber enthalten, ist eine geringere Abnahme in der Gelbfarbstoffdichte festzustellen.

Beispiel 8: Es wird wie in Beispiel 1 vorgegangen.

Die Mengen an Magentakuppler und Stabilisator sind in Tabelle 9 angegeben.

Es wird die Remissionsdichte im Blau für die Vergilbung gemessen. Dann wird der Keil in einem Atlas-Belichtungsgerät mit total 30 KJ/cm² belichtet, erneut die Remissionsdichte (in Blau) gemessen und die Gelbfarbstoffzunahme (-ΔD_{B}) berechnet. Die Vergilbung ist in Tabelle 9 angegeben.

**Tabelle 9**

| Probe Nr. | Magentakuppler (mg) | Stabilisator (mg) | UV-Absorber Nr. | -ΔD_{B} (%) |
|---|---|---|---|---|
| 88 | M-1 (329) | ST-4 (118) | (3) | 3 |
| 89 | M-1 (329) | ST-4 (118) | (14) | 22 |
| 90 | M-1 (329) | ST-4 (118) | - | 38 |
| 91 | M-1 (329) | ST-7 (118) | (3) | 14 |
| 92 | M-1 (329) | ST-7 (118) | (14) | 14 |
| 93 | M-1 (329) | ST-7 (118) | - | 32 |
| 94 | M-1 (329) | ST-6 (118) | (3) | 10 |
| 95 | M-1 (329) | ST-6 (118) | - | 20 |
| 96 | M-2 (417) | ST-8 (144) | (3) | 18 |
| 97 | M-2 (417) | ST-8 (144) | - | 24 |
| 98 | M-3 (394) | ST-5 (128) | (3) | 13 |
| 99 | M-3 (394) | ST-5 (128) | (14) | 12 |
| 100 | M-3 (394) | ST-5 (128) | - | 25 |
| 101 | M-4 (485) | ST-1 (171) | (3) | 21 |
| 102 | M-4 (485) | ST-1 (171) | - | 29 |
| 103 | M-4 (485) | ST-2 (171) | (3) | 10 |
| 104 | M-4 (485) | ST-2 (171) | (14) | 11 |
| 105 | M-4 (485) | ST-2 (171) | - | 14 |
| 106 | M-4 (485) | ST-4 (107) | (3) | 22 |
| 107 | M-4 (485) | ST-4 (107) | - | 26 |

In den Proben, die einen erfindungsgemässen UV-Absorber enthalten, ist eine geringere Vergilbung festzustellen.

Beispiel 9: Wiederholt man Beispiel 8 gibt aber zusätzlich einen Stabilisator der folgenden Formel zu 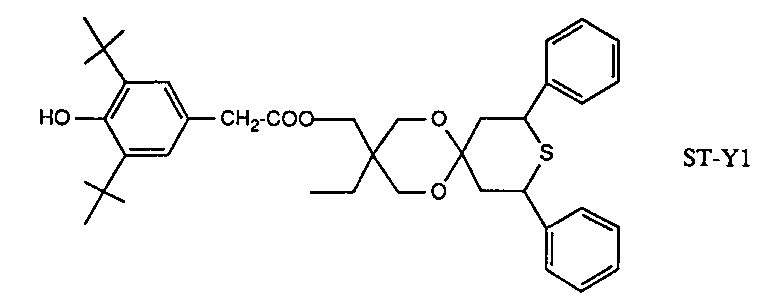 so erhält man die in Tabelle 10 angegebenen Werte für den Farbstoffverlust (-ΔD) in %.

**Tabelle 10**

| Probe Nr. | Gelbkuppler | (mg) | Stabilisator (mg) | UV-Absorber Nr. | -ΔD (%) |
|---|---|---|---|---|---|
| 108 | Y-8 | (927) | ST-Y1 (278) | - | 23 |
| 109 | Y-8 | (927) | ST-Y1 (278) | (3) | 8 |
| 110 | Y-8 | (927) | ST-Y1 (278) | (14) | 8 |
| 111 | Y-8 | (927) | ST-Y1 (278) | (15) | 9 |

Beispiel 10: Wiederholt man Beispiel 9 verwendet aber einen UV-Absorber (150 mg) zusammen mit einem Hydroxybenztriazol (150 mg), so erhält man die in Tabelle 11 angegebenen Werte für den Farbstoffverlust (-ΔD) in %.

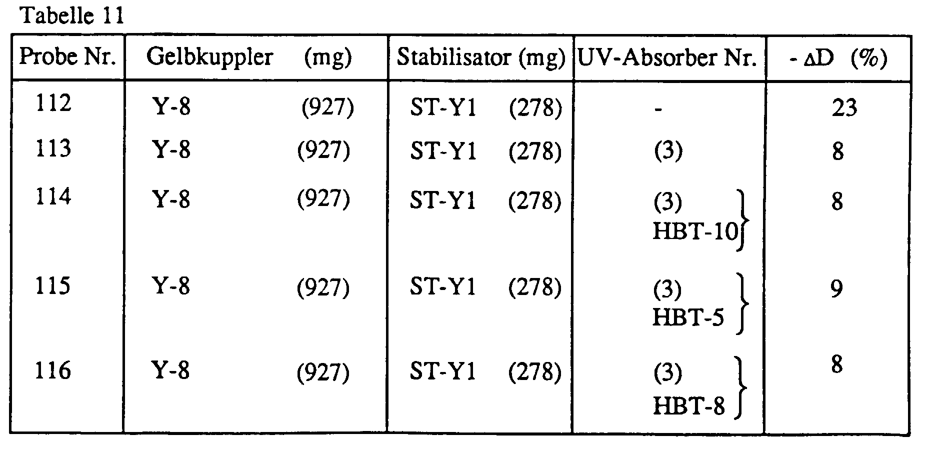

Beispiel 11: Wiederholt man wie in Beispiel 9 verwendet aber zwei UV-Absorber (je 150 mg), so erhält man die in Tabelle 12 angegebenen Werte für den Farbstoffverlust (-ΔD) in %.

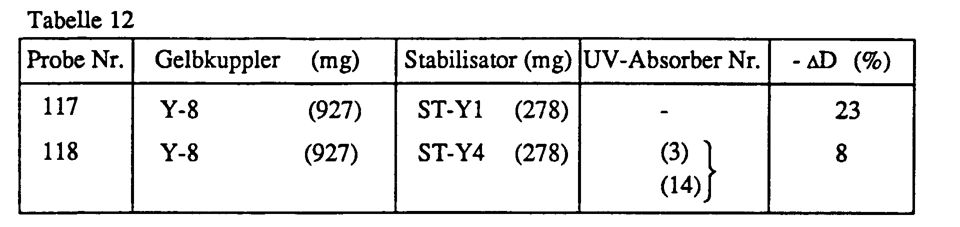

Beispiel 12: Die in der nachstehenden Tabelle aufgeführte Menge von UV-Absorber wird in 2 ml Essigester gelöst. 1 ml von dieser Lösung wird mit 9 ml einer wässrigen Gelatinelösung (welche 27,6 g/l Gelatine und 6,8 g/l einer 8%igen wässrigen Lösung von 4,8-Diisobutylnaphthalen-2-sulfonsäure (Natriumsalz) als Netzmittel enthält) gemischt. Diese Mischung wird 3 Minuten mit Ultraschall emulgiert. 7,5 ml dieser UV-Absorber Emulsion wird mit 4,5 ml einer wässrigen Härterlösung (bestehend aus 0,24 % von 2-Hydroxy-4,6-dichlor-1,3,5-triazin, Kaliumsalz) gemischt. 8 ml dieser Emulsion werden auf einen Polyesterträger (13x18 cm) gegossen. Der Guss wird 7 Tage bei Raumtemperatur gehärtet. Mit einem UV-Spektrometer werden nun Werte für die maximale Dichte im Bereich von 330-380 nm erfasst. Dann wird die Probe in einem Atlas-Belichtungsgerät mit insgesamt 60 kJ/cm² belichtet, erneut die maximale Dichte bestimmt und die Differenz (-DD in %) zwischen den entsprechenden Werten berechnet:

**Tabelle 13**

| Probe Nr. | UV-Absorber | (mg) | UV-Absorberverlust -DD (%) Atlas 60 kJ/cm² |
|---|---|---|---|
| 119 | (3) | (27) | 1 |
| 120 | (4) | (33) | 0 |
| 121 | (5) | (25) | 1 |
| 122 | (12) | (25) | 0 |
| 123 | (7) | (34) | 4 |
| 124 | (6) | (21) | 2 |
| 125 | (14) | (21) | 3 |
| 126 | (15) | (21) | 3 |
| 127 | (16) | (21) | 3 |
| 128 | (17) | (21) | 3 |

Beispiel 13: Es wird ein photographisches Material mit folgendem Schichtbau hergestellt:

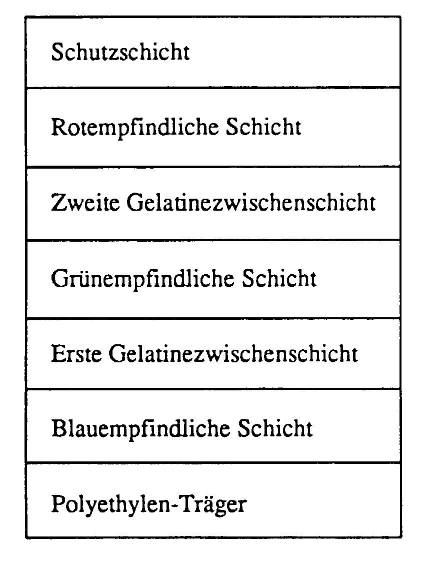

Die Gelatineschichten bestehen aus folgenden Komponenten (je m² Trägermaterial):

| Blauempfindliche Schicht | |
|---|---|
| Gelbkuppler Y-2 | 859 mg |
| Trikresylphosphat | 286 mg |
| Gelatine | 5,15 g |
| Härter | 300 mg |
| Netzmittel | 340 mg |
| AgBr | 520 mg |

| Erste Gelatinezwischenschicht | |
|---|---|
| Gelatine | 3,90 g |
| Härter | 230 mg |
| Netzmittel | 65 mg |

| Grünempfindliche Schicht | |
|---|---|
| Magentakuppler M-5 | 306 mg |
| Trikresylphosphat | 153 mg |
| Gelatine | 5,15 g |
| Härter | 300 mg |
| Netzmittel | 85 mg |
| AgBr | 260 mg |
| Stabilisator | 107 mg |

| Zweite Gelatinezwischenschicht | |
|---|---|
| Gelatine | 3,90 g |
| Härter | 230 mg |
| Netzmittel | 65 mg |

| Rotempfindliche Schicht | |
|---|---|
| Cyankuppler E-6 | 331 mg |
| Trikresylphosphat | 496 mg |
| Gelatine | 5,15 g |
| Härter | 300 mg |
| Netzmittel | 170 mg |
| AgBr | 260 mg |

Eine Schutzschicht wird mit und ohne UV-Absorber hergestellt

| | mit UV-Absorber | ohne UV-Absorber |
|---|---|---|
| Gelatine | 1,2 g | 2,4 g |
| UV-Absorber | 300 mg | --- |
| Trikresylphosphat | 510 mg | --- |
| Härtungsmittel | 40 mg | 80 mg |
| Netzmittel | 100 mg | 200 mg |

| Probe Nr. | UV-Absorber |
|---|---|
| 85 | - |
| 86 | (3) |
| 87 | (4) |

Als Härter und Netzmittel werden die entsprechenden Verbindungen gemäss Beispiel 1 verwendet.

Auf die 3 Proben 75-77 werden (mit blauem, grünem bzw. rotem Licht) jeweils drei Stufenkeile mit einem Dichteunterschied von 0,15 kJ pro Stufe aufbelichtet.

Anschliessend wird gemäss Verarbeitungsprozess EP2 (Kodak) für Negativ-Farbpapiere verfahren.

Nach Belichtung und Verarbeitung werden die Remissionsdichten im Rot für die Cyanstufe, im Grün für die Magentastufe und im Blau für die Gelbstufe bei einer Dichte zwischen 0,9 und 1,1 der Keile gemessen. Dann werden die Keile in einem Atlas-Belichtungsgerät mit insgesamt 15 kJ/cm² belichtet und es werden erneut die Remissionsdichten gemessen.

Auch bei dem Magentakeil wird die Remissionsdichte vor und nach der Belichtung im Blau für die Vergilbung gemessen.

Die Anwesenheit der UV-Absorber reduziert den Farbstoffdichteverlust des Cyan-, Magenta- und Gelbbildfarbstoffs sowie die Vergilbung.

Beispiel 14: Es wird ein photographisches Material mit folgendem Schichtbau hergestellt:

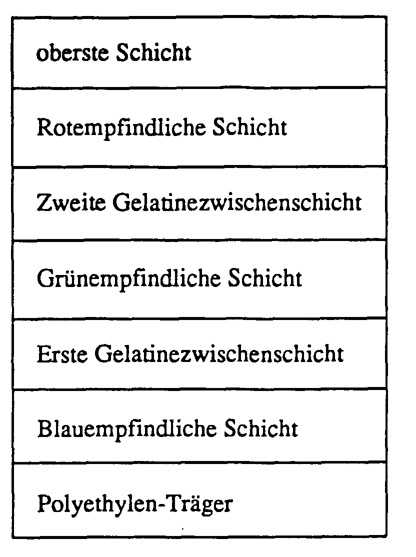

Die Gelatineschichten bestehen aus folgenden Komponenten (je m² Trägermaterial):

### Blauempfindliche Schicht

α-(3-Benzyl-4-ethoxyhydantoin-1-yl)-α-pivaloyl-2-chloro-5-[α-(2,4-di-t-amylphenoxy)butanamido]acetanilid (400 mg)
α-(1-Butyl-phenylurazol-4-yl)-α-pivaloyl-5-(3-dodecan-sulfonyl-2-methylpropanamido)-2-methoxyacetamid (400 mg)
Dibutylphthalat (130 mg)
Dinonylphthalat (130 mg)
Gelatine (1200 mg) 1,5-Dioxa-3-ethyl-3-[β-(3,5-di-t-butyl-4-hydroxyphenyl)-propionyloxymethyl]-8,10-diphenyl-9-thia-[5,5]spiroundecan (150 mg)
Bis(1-acryloyl-2,2,6,6-tetramethyl-4-piperidyl)2,2-bis-(3,5-di-t-butyl-4-hydroxybenzyl)malonate (150 mg)
3,5-Di-t-butyl-4-hydroxy-(2,4-di-t-amylphenyl)-benzoate (150 mg)
Poly(N-t-butylacrylamid) (50 mg)
blauempfindliche Silberchlorobromid-emulsion (240 mg)

### Erste Gelatinezwischenschicht

Gelatine (1000 mg)
2,5-Di-t-octylhydrochinon (100 mg)
5-[2,5-Dihydroxy-4-(4-hexyloxycarbonyl-1,1-dimethylbutyl)-phenyl]-5-methylhexansäurehexylester (100 mg)
Dibutylphthalat (200 mg)
Diisodecylphthalat (200 mg)

### Grünempfindliche Schicht

7-Chloro-2-{2-[2-(2,4-di-t-amylphenoxy) octanamido]-1-methylethyl}-6-methyl-1H-pyrazolo[1,5-b][1,2,4] triazol (100 mg)
6-t-Butyl-7-chloro-3-(3-dodecansulfonylpropyl)-1H-pyrazolo[5,1-o][1,2,4]triazol (100 mg)
Dibutylphthalat (100 mg)
Dikresylphosphat (100 mg)
Trioctylphosphat (100 mg)
Gelatine (1400 mg)
3,3,3',3'-Tetramethyl-5,5',6,6'-tetrapropoxy-1,1'-spirobiindane (100 mg)
4-(i-Tridecyloxyphenyl)thiomorpholine-1,1-dioxide (100 mg)
4,4'-Butyliden-bis(3-methyl-6-t-butylphenol) (50 mg)
2,2'-Isobutyliden-bis(4,6-dimethylphenol) (10 mg)
3,5-Dichloro-4-(hexadecyloxycarbonyloxy)ethylbenzoat (20 mg)
3,5-Bis[3-(2,4-di-t-amylphenoxy)propylcarbamoyl]natriumbenzolsulfinat (20 mg)
grünempfindliche Silberchlorobromid-emulsion (150 mg)

### Zweite Gelatinezwischenschicht

Gelatine (1000 mg)
5-Chloro-2-(3,5-di-t-butyl-2-hydroxyphenyl)benz-1,2,3-triazol (200 mg)
2-(3-Dodecyl-2-hydroxy-5-methylphenyl)benz-1,2,3-triazol (200 mg)
Trinonylphosphat (300 mg)
2,5-Di-t-octylhydrochinon (50 mg)
5-[2,5-Dihydroxy-4-(4-hexyloxycarbonyl-1,1-dimethylbutyl)-phenyl]-5-methylhexansäurehexylester (50 mg)

### Rotempfindliche Schicht

2-[α-(2,4-Di-t-amylphenoxy)butanamido]-4,6-di-chloro-5-ethylphenol (150 mg)
2,4-Dichloro-3-ethyl-6-hexadecanamidophenol (150 mg)
4-Chloro-2-(1,2,3,4,5-pentafluorobenzamido)-5-[2-(2,4-di-t-amylphenoxy)-3-methylbutanamido]phenol (100 mg)
Dioctylphthalat (100 mg)
Dicyclohexylphthalat (100 mg)
Gelatine (1200 mg)
5-Chloro-2- (3,5-di-t-butyl-2-hydroxyphenyl) benz-1,2,3-triazol (100 mg)
2-(3-Dodecyl-2 -hydroxy-5-methylphenyl)benz-1,2,3-triazol(100 mg)
3,5-Di-t-butyl-4-hydroxy-(2,4-di-t-amylphenyl)-benzoate (50 mg)
Poly (N-t-butylacrylamid) (300 mg) N,N-Diethyl-2,4-di-t-amylphenoxyacetamid (100 mg)
2,5-Di-t-octylhydrochinon (50 mg)
rotempfindliche Silberchlorobromid-emulsion (200 mg)

Die oberste Schicht wird mit und ohne UV-Absorber hergestellt mit UV-Absorber:
2,5-Di-t-octylhydrochinon (20 mg)
5-[2,5-Dihydroxy-4-(4-hexyloxycarbonyl-1,1-dimethylbutyl)-phenyl]-5-methylhexansäurehexylester (20 mg)
Gelatine (400 mg)
Trinonylphosphat (120 mg)
UV-Absorber Verb. Nr. (4) (200 mg)
ohne UV-Absorber:
Gelatine (800 mg)

Als Härter wird 2,4-Dichlor-6-hydroxytriazin verwendet, als Netzmittel das Natriumsalz der Diisobutylnaphthalinsulfonsäure.

Auf die 2 Proben werden (mit blauem, grünem bzw. rotem Licht) jeweils drei Stufenkeile mit einem Dichteunterschied von 0,15 kJ pro Stufe aufbelichtet.

Anschliessend wird gemäss Verarbeitungsprozess RA-4 (Kodak) für Farbpapiere verfahren.

Nach Belichtung und Verarbeitung werden die Remissionsdichten im Rot für die Cyanstufe, im Grün für die Magentastufe und im Blau für die Gelbstufe bei einer Dichte zwischen 0,9 und 1,1 der Keile gemessen. Dann werden die Keile in einem Atlas-Belichtungsgerät mit insgesamt 15 kJ/cm² belichtet und es werden erneut die Remissionsdichten gemessen.

Auch bei dem Magentakeil wird die Remissionsdichte vor und nach der Belichtung im Blau für die Vergilbung gemessen.

Die Anwesenheit der UV-Absorber reduziert den Farbstoffdichteverlust des Cyan-, Magenta- und Gelbbildfarbstoffs.

### Beispiel 15: 2,4,6-Tris-[2-hydroxy-4-(3'(n-butoxy)- oder -3'-(2-ethyl-hexyloxy)-2'-hydroxy-propoxy)-phenyl]-1,3,5-triazin

Eine Mischung von 20,0 g (49,3 mmol) 2,4,6-Tris-(2,4-dihydroxy-phenyl)- 1,3,5-triazin, 14,7 g (79,0 mmol) 2-Ethylhexylglycidylether, 10,3 g (79,0 mmol) n-Butylglycidylether, 1,8 g (4,9 mmol) Ethyltriphenylphosphoniumbromid wird in 100 ml Mesitylen bei 150°C während 20 Stunden erhitzt, währenddessen wird die gelbe Suspension eine klare Lösung. Das Lösungsmittel wird entfernt (Rotavapor) und das Rohprodukt wird in 50 ml warmen Ethylacetat gelöst und auf einen Glasbüchnerfilter (⌀=5 cm) enthaltend eine Schicht Kieselgel 60 (230-400 mesh) gegeben. Nach dem Eluieren mit 1000 ml Ethylacetat wird das Lösungsmittel entfernt und der Rückstand getrocknet bei 120°C/0,01 mm/3 Stunden. Man erhält 40,0 g (92 % Ausbeute) einer Mischung von 2,4,6-Tris-[2-hydroxy-4-(3'-(n-butoxy)- oder -3'-(2-ethyl-hexyloxy)-2'-hydroxy-propoxy)-phenyl-]1,3,5-triazin als ein hellgelbes Harz.

| | | | | | |
|---|---|---|---|---|---|
| Analyse: | C₄₈H₆₉N₃O₁₂ | Ber.: | C 65,51 | H 7,90 | N 4,77% |
| | (880,09) | Gef.: | C 65,07 | H 8,05 | N 4,43% |

Eine Probe dieser Mischung wird in Ethylacetat umkristallisiert, wobei man einen hellgelben Feststoff erhält Smp. 75-78°C. Das Dünnschichtchromatogram (Kieselgel, CH₂Cl₂-Methanol 95:5) zeigt, dass alle Komponenten der Ursprungsmischung auskristallisiert sind.

| | | | | | |
|---|---|---|---|---|---|
| Analyse: | C₄₈H₆₉N₃O₁₂ | Ber.: | C 65,51 | H 7,90 | N 4,77% |
| | (880,09) | Gef.: | C 65,35 | H 7,88 | N 4,61% |

### Beispiel 16: 2,4,6-Tris-[2-hydroxy-4-(3'-n-butoxy-2'-acetoxy-propoxy-phenyl]-1,3,5-triazin

Zu einer Suspension von 4,0 g (5,0 mmol) 2,4,6-Tris-[2-hydroxy-4-(3'-n-butoxy-2'-hydroxy-propoxy)-phenyl]-1,3,5-triazin und 1,6 g (20 mmol) Acetylchlorid in 50 ml Toluol werden bei 50°C 3 Tropfen Pyridin zugegeben. Die Mischung wird bei 60°C während 3 Stunden erhitzt; es entweicht HCl. Nach dem Entfernen des Lösungsmittels und des überschüssigen Acetylchlorids (Rotavapor) wird das Rohprodukt in 300 ml Ethylacetat gelöst und durch eine dünne Schicht (1 cm) Kieselgel 60 (230-400 mesh) filtriert. Nach dem Abdampfen des Lösungsmittels erhält man 4,5 g (97 % Ausbeute) 2,4,6-Tris-[2-hydroxy-4-(3'-n-butoxy-2'-acetoxy-propoxy)-phenyl]-1,3,5-triazin als gelbes halbkristallines Harz.

| | | | | | |
|---|---|---|---|---|---|
| Analyse: | C₄₈H₆₃O₁₅N₃ | Ber.: | C 62,53 | H 6,89 | N 4,56% |
| | (922,04) | Gef.: | C 62,25 | H 6,91 | N 4,37% |

### Beispiel 17: 2,4,6-Tris-[2-hydroxy-4(3'-n-butoxy-2'-valeroyloxy-propoxy)-phenyl]-1,3,5-triazin

Eine Mischung von 6,0 g (7,5 mmol) 2,4,6-Tris-[2-hydroxy-4-(3'-n-butoxy-2'-hydroxy-propoxy)-phenyl]-1,3,5-triazin, 3,2 g (26,5 mmol) Valeroylchlorid und 5 Tropfen Pyridin in 50 ml Toluol wird bei 90°C während 5 Stunden erhitzt. Das Lösungsmittel wird entfernt (Rotavapor) und das Rohprodukt (9,3 g) wird einer Säulenchromatographie [Kieselgel 60 (230-400 mesh) unterworfen; Laufmittel: Petrolether-Ethylacetat (4:1)]. Die Hauptfraktion, nach dem Trocknen, besteht aus 6,9 g (87,3 % Ausbeute) 2,4,6-Tris-[2-hydroxy-4(3'-n-butoxy-2'-valeroyloxy-propoxy)-phenyl]-1,3,5-triazin in Form eines zähen hellgelben Harzes.

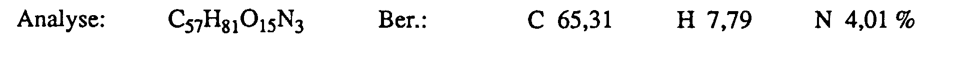

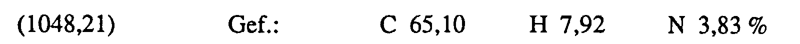

### Beispiel 18: 2,4,6-Tris-[2-hydroxy-4-(3'(-n-butoxy)- oder -3'-(2-ethyl-hexyloxy)-2'-hydroxy-propoxy)-phenyl]-1,3,5-triazin

Eine Mischung von 10,0 g (24,7 mmol) 2,4,6-Tris-(2,4-dihydroxy-phenyl)-1,3,5-triazin, 2,80 g (27,4 mmol) Ethylglycidylether, 3,50 g (26,8 mmol) n-Butylglycidylether, 5,10 g (27,3 mmol) (2-Ethylhexyl)-glycidylether und 0,9 g (2,4 mmol) Ethyltriphenylphosphoniumbromid in 100 ml Mesitylen wird bei 140°C unter Rühren während 24 Stunden erhitzt; die gelbe Suspension wird eine klare gelbe Lösung. Das Lösungsmittel wird entfernt (Rotavapor) und das Rohprodukt wird in 50 ml warmen Ethylacetat gelöst. Diese Lösung wird auf eine Glasbüchnerfilter (⌀ = 8 cm) enthaltend eine dünne Schicht (3 cm) Kieselgel 60 (230-400 mesh) gegeben und mit 1500 ml Ethylacetat eluiert. Das Filtrat wird eingeengt, der Rückstand bei 130°C/0,1 mm/3 Stunden getrocknet; man erhält 15,6 g (76,7 % Ausbeute) einer Mischung von 2,4,6-tris-[2-hydroxy-4-(3'(-n-butoxy)- oder -3'-(ethoxy)- oder -3'-(2-ethyl-hexyloxy)-2'-hydroxy-propoxy)-phenyl] 1,3,5-triazin als ein zähes gelbes Harz.

| | | | | | |
|---|---|---|---|---|---|
| Analyse: | C₄₄H₆₁N₃O₁₂ | Ber.: | C 64,14 | H 7,46 | N 5,10% |
| | (823,99) | Gef.: | C 64,07 | H 7,64 | N 4,96% |

### Beispiel 19: 2,4,6-Tris-[2-hydroxy-4-(3'(-n-butoxy)- oder -3'-(ethoxy)- oder -3'-(isopropyloxy)-2'-hydroxy-propoxy)-phenyl]-1,3,5-triazin

Eine Mischung von 10,0 g (24,7 mmol) 2,4,6-Tris(2,4-dihydroxy-phenyl)- 1,3,5-triazin, 2,80 g (27,4 mmol) Ethylglycidylether, 3,20 g (27,5 mmol) Glycidylisopropylether, 3,5 g (26,8 mmol) n-Butylglycidylether und 0,9 g (2,4 mmol) Ethyltriphenylphosphoniumbromid in 100 ml Mesitylen wird bei 140°C unter Rühren während 24 Stunden erhitzt. Die anfänglich gelbe Suspension wird eine klare gelbe Lösung. Mesitylen wird entfernt (Rotavapor) und das Rohprodukt wird in 50 ml warmen Ethylacetat gelöst. Diese Lösung wird auf einen Glasbüchnerfilter (⌀=8 cm) enthaltend eine dünne Schicht (3 cm) Kieselgel 60 (230-400 mesh) gegeben. Nach dem Eluieren mit 1500 ml Ethylacetat wird das Filtrat eingedampft und der Rückstand wird bei 130°C/0,1 mm/3 Stunden getrocknet. Man erhält 15,5 g (83,5 % Ausbeute) einer Mischung von 2,4,6-tris-[2-hydroxy-4-(3'(-n-butoxy)- oder -3'-(ethoxy)- oder -3'-(isopropyloxy)-2'-hydroxy-propoxy)-phenyl]-1,3,5-triazin als ein zähes dunkelgelbes Harz.

| | | | | | |
|---|---|---|---|---|---|
| Analyse: | C₃₉H₅₁N₃O₁₂ | Ber.: | C 62,14 | H 6,82 | N 5,57% |
| | (753,85) | Gef.: | C 62,14 | H 7,03 | N 5,32% |

### Beispiel 20: 2,4,6-Tris-[2-hydroxy-4-(3'-allyloxy- oder -3'-n-butyloxy-2'-hydroxy-propoxy)-phenyl]-1,3,5-triazin

Eine Mischung von 10,0 g (24,7 mmol) 2,4,6-Tris-(2,4-dihydroxy-phenyl)- 1,3,5-triazin, 5,14 g (39,5 mmol) n-Butylglycidylether, 4,51 g (39,5 mmol) Allylglycidylether und 0,9 g (2,4 mmol) Ethyltriphenylphosphoniumbromid in 100 ml Mesitylen wird unter Rühren bei 140°C während 24 Stunden erhitzt. Die anfänglich gelbe Suspension wird eine klare gelbe Lösung. Das Lösungsmittel wird entfernt (Rotavapor) und das Rohprodukt wird in 50 ml warmen Ethylacetat gelöst. Diese Lösung wird auf einen Glasbüchnerfilter (⌀ = 8 cm) enthaltend eine dünne Schicht (3 cm) Kieselgel 60 (230-400 mesh) gegeben. Nach dem Eluieren mit 1500 ml Ethylacetat wird das Filtrat eingedampft und der Rückstand wird bei 130°C/0,1 mm/3 Stunden getrocknet. Man erhält 12,6 g (66,2 % Ausbeute) einer Mischung von 2,4,6-Tris-[2-hydroxy-4-(3'-allyloxy- oder -3'-n-butyloxy-2'-hydroxy-propoxy)-phenyl]-1,3,5-triazin als ein zähes gelbes Harz.

| | | | | | |
|---|---|---|---|---|---|
| Analyse: | C_{40,5}H₅₁N₃O₁₂ | Ber.: | C 63,02 | H 6,66 | N 5,44% |
| | (771,87) | Gef.: | C 62,84 | H 6,73 | N 5,38% |

### Beispiel 21: 2,4,6-Tris-[2-hydroxy-4-(3'-(ethyloxy)- oder -3'-(2-ethyl-hexyloxy)-2'-hydroxy-propoxy)-phenyl]-1,3,5-triazin

Eine Mischung von 10,0 g (23,7 mmol) 2,4,6-Tris-(2,4-dihydroxy-phenyl)-1,3,5-triazin, 7,40 g (39,7 mmol) (2-Ethylhexyl)-glycidylether, 4,0 g (39,5 mmol) Ethylglycidylether und 0,9 g (2,4 mmol) Ethyltriphenylphosphoniumbromid in 100 ml Mesitylen wird bei 140°C unter Rühren während 24 Stunden erhitzt. Die anfänglich gelbe Suspension wird eine klare gelbe Lösung. Mesitylen wird entfernt (Rotavapor). Das Rohprodukt, gelöst in 50 ml Ethylacetat wird auf einen Glasbüchnerfilter (⌀ = 8 cm) enthaltend eine dünne Schicht (2 cm) Kieselgel 60 (230-400 mesh) gegeben. Nach dem Eluieren mit 1000 ml Ethylacetat wird das Filtrat eingedampft und der Rückstand bei 130°C/0,1 mm/3 Stunden getrocknet. Man erhält 16,2 g (78,4 % Ausbeute) einer Mischung von 2,4,6-Tris-[2-hydroxy-4-(3'-(ethyloxy)- oder -3'-(2-ethyl-hexyloxy)-2'-hydroxy-propoxy)-phenyl]-1,3,5-triazin als ein zähes gelbes Harz.

| | | | | | |
|---|---|---|---|---|---|
| Analyse: | C₄₅H₆₃N₃O₁₂ | Ber.: | C 64,50 | H 7,58 | N 5,01% |
| | (838,02) | Gef.: | C 64,75 | H 7,81 | N 4,76% |

### Beispiel 22: 2,4,6-Tris-[2-hydroxy-4-(3'-(tert-butoxy)- oder -3'-(2-ethyl-hexyloxy)-2'-hydroxy-propoxy)-phenyl]-1,3,5-triazin

Eine Mischung von 10,0 g (24,7 mmol) 2,4,6-Tris-(2,4-dihydroxy-phenyl)- 1,3,5-triazin, 7,35 g (39,5 mmol) (2-Ethylhexyl)-glycidylether, 5,14 g (39,5 mmol) tert-Butylglycidylether und 0,9 g (2,4 mmol) Ethyltriphenylphosphoniumbromid in 100 ml Mesitylen wird bei 140°C unter Rühren während 24 Stunden erhitzt; die anfänglich gelbe Suspension wird eine klare gelbe Lösung. Das Lösungsmittel wird entfernt (Rotavapor). Das Rohprodukt wird in 50 ml warmen Ethylacetat gelöst und auf einen Glasbüchnerfilter (⌀=8 cm) enthaltend eine dünne Schicht (h=3 cm) Kieselgel 60 (230-400 mesh) gegeben. Das Produkt wird mit 1000 ml Ethylacetat eluiert. Nach Entfernen des Lösungsmittels und Trocknung des Rückstandes bei 130°C/0,1 mm/3 Stunden erhält man 17,6 g (81,0 % Ausbeute) einer Mischung von 2,4,6-Tris-[2-hydroxy-4-(3'-(tert.-butoxy)- oder -3'-(2-ethyl-hexyloxy)-2'-hydroxy-propoxy)-phenyl]-1,3,5-triazin als ein zähes braunes Harz.

| | | | | | |
|---|---|---|---|---|---|
| Analyse: | C₄₈H₆₉N₃O₁₂ | Ber.: | C 65,51 | H 7,90 | N 4,77 % |
| | (880,09) | Gef.: | C 65,25 | H 8,07 | N 4,58 % |

### Beispiel 23: 2,4,6-Tris-[2-hydroxy-4-(3'(-n-butoxy)- oder -3'(tert.-butoxy)- oder -3'-(2-ethyl-hexyloxy)-2'-hydroxy-propoxy)-phenyl]-1,3,5-triazin

Eine Mischung von 10,0 g (24,7 mmol) 2,4,6-Tris-(2,4-dihydroxy-phenyl)-1,3,5-triazin, 3,53 g (27,1 mmol) n-Butylglycidylether, 3,53 g (27,1 mmol) tert.-Butylglycidylether, 5,10 g (27,3 mmol) (2-Ethylhexyl)-glycidylether und 0,9 g (2,4 mmol) Ethyltriphenylphosphoniumbromid in 100 ml Mesitylen wird bei 140°C unter Rühren während 24 Stunden erhitzt. Die anfänglich gelbe Suspension wird eine klare braune Lösung. Mesitylen wird entfernt (Rotavapor) und das Rohprodukt wird in 50 ml warmen Ethylacetat gelöst. Diese Lösung wird auf einen Glasbüchnerfilter (⌀=8 cm) enthaltend eine dünne Schicht (3 cm) Kieselgel 60 (230-400 mesh) gegeben. Nach dem Eluieren mit 1500 ml Ethylacetat wird das Filtrat eingedampft und der Rückstand getrocknet bei 130°C/0,1 mm/3 Stunden. Man erhält 17,6 g (83,7 % Ausbeute) einer Mischung von 2,4,6-Tris-[2-hydroxy-4-(3'(-n-butoxy)- oder 3'-(tert.-butoxy)- oder -3'-(2-ethyl-hexyloxy)-2'-hydroxy-propoxy)-phenyl]-1,3,5-triazin als ein zähes gelbes Harz.

| | | | | | |
|---|---|---|---|---|---|
| Analyse: | C₄₆H₆₅N₃O₁₂ | Ber.: | C 64,85 | H 7,69 | N 4,93% |
| | (852,04) | Gef.: | C 64,94 | H 7,80 | N 4,84% |

Beispiel 24: Zu einer Lösung von 15,0 g 2,4,6-Tris-[2-hydroxy-4-(2'-hydroxy-3'-butoxypropyloxy)phenyl]-1,3,5-triazin und 8,47 g Imidazol in 112 ml N,N'-Dimethylacetamid gibt man tropfenweise 11,12 g tert.-Hexyl-dimethylchlorsilan unter einer Stickstoffatmosphäre zu. Nach 20 Stunden bei Raumtemperatur wird die Reaktionsmischung eingedampft (Rotavapor). Der Rückstand wird durch eine Kieselgelschicht (Laufmittel: Hexan/Ethylacetat 30:1) filtriert. Man erhält 14,1 g der Verbindung der Formel 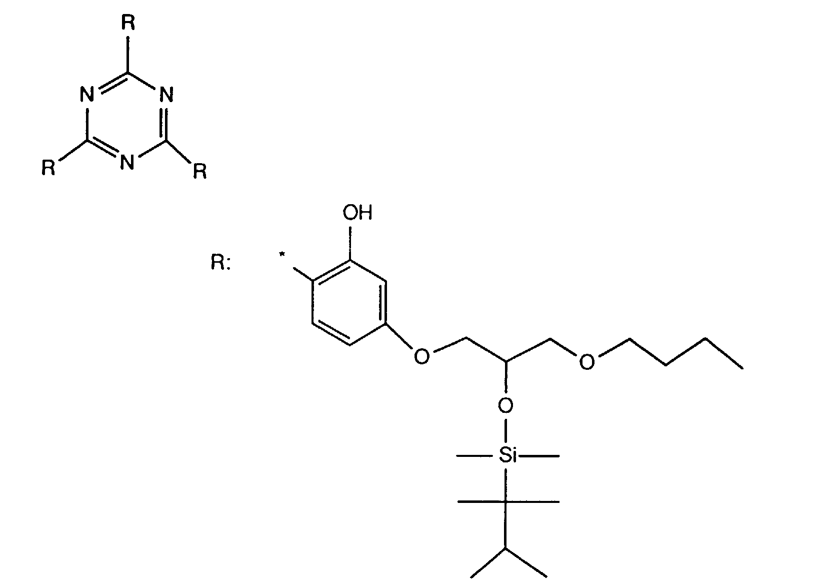 als ein gelbes Harz.

| | | | | | |
|---|---|---|---|---|---|
| Analyse: | C₆₆H₁₁₁N₃O₁₂Si₃ | Ber.: | C 64,82 | H 9,15 | N 3,44% |
| | | Gef.: | C 65,00 | H 9,38 | N 3,05% |

## Patentansprüche

1. Photographisches Material enthaltend auf einem Träger eine blauempfindliche, eine grünempfindliche und/oder eine rotempfindliche Silberhalogenidemulsionsschicht sowie gegebenenfalls eine Protektionsschicht, wobei zwischen der obersten Silberhalogenidemulsionsschicht und der Protektionsschicht, beziehungsweise oberhalb der obersten Silberhalogenidschicht, eine Schicht mit einem UV-Absorber angeordnet ist, dadurch gekennzeichnet, dass der UV-Absorber der Formel 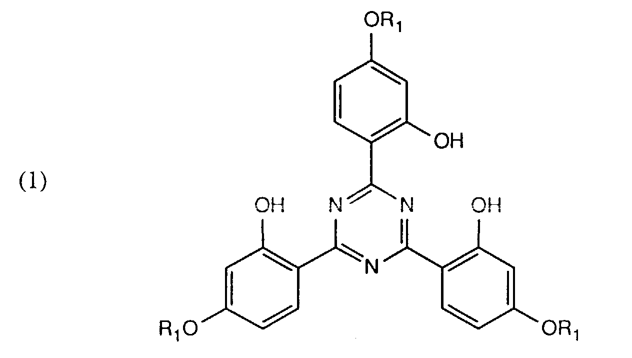 entspricht, worin
die Reste R₁ unabhängig voneinander Alkyl mit 1 bis 18 Kohlenstoffatomen substituiert mit Hydroxyl, Alkenoxy mit 2 bis 18 Kohlenstoffatomen, -CO₂H, -CO₂R₂ und/oder -O-COR₃, durch Sauerstoff unterbrochenes Alkyl oder Hydroxyalkyl oder Glycidyloxyalkyl mit 3 bis 50 Kohlenstoffatomen, Glycidyl, eine Gruppe der Formel 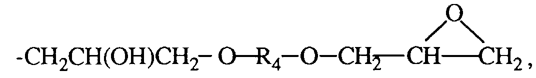 Phenylalkyl mit 1 bis 5 Kohlenstoffatomen im Alkylteil oder -CH₂CH(OH)R₇ sind, wobei
R₂ Alkyl mit 1 bis 18 Kohlenstoffatomen oder Sauerstoff, Schwefel oder Stickstoff unterbrochenes Alkyl oder Hydroxyalkyl mit 3 bis 30 Kohlenstoffatomen, Hydroxyalkyl mit 2 bis 18 Kohlenstoffatomen, Alkenyl mit 3 bis 18 Kohlenstoffatomen, Glycidyl, Cycloalkyl mit 5 bis 8 Kohlenstoffatomen, Benzyl, Alkylphenyl mit 1 bis 12 Kohlenstoffatomen im Alkylteil, Phenyl, Furfuryl oder ein Rest der Formel -CH₂CH(OH)R₇ ist,
R₃ Alkyl mit 1 bis 18 Kohlenstoffatomen, Alkenyl mit 2 bis 18 Kohlenstoffatomen oder Phenyl ist,
R₄ Alkylen mit 2 bis 10 Kohlenstoffatomen, Phenylen oder eine Gruppe der Formel 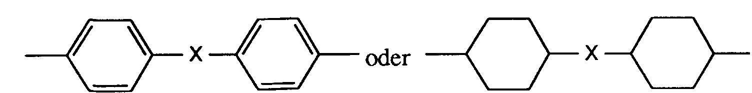 ist und
R₇ Phenylalkyl mit 1 bis 6 Kohlenstoffatomen im Alkylteil oder ein Rest der Formel -CH₂OR₈ ist, wobei
X -O-, -S-, -SO₂-, -CH₂- oder -C(CH₃)₂- ist und
R₈ Cyclohexyl, Benzyl, Phenyl oder Tolyl ist;
oder die Reste R₁ unabhängig voneinander ein Rest der Formel -CH₂-CH(ORₓ)R_{y}, -CH₂CH(ORₓ)CH₂OR_{z}, 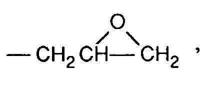 -CH₂COR_{y} oder -CH₂COCH₂OR_{z} sind, wobei
Rₓ H, -CORₛ, -COOR_{w} oder -SiRₚR_{q}Rᵣ,
R_{y} C₁-C₁₈-Alkyl oder Phenyl-C₁-C₄-Alkyl,
R_{z} C₁-C₁₈-Alkyl, C₂-C₁₈-Alkenyl, Phenyl-C₁-C₄-Alkyl, -CORₛ oder durch Sauerstoff unterbrochenes C₂-C₂₄-Alkyl oder C₂-C₂₄-Hydroxyalkyl,
Rₛ C₁-C₁₈-Alkyl, C₂-C₁₈-Alkenyl oder Phenyl.
R_{w} C₁-C₄-Alkyl und
Rₚ, R_{q} und Rᵣ unabhängig voneinander C₁-C₆-Alkyl oder Phenyl
bedeuten; oder
die Reste R₁ unabhängig voneinander eine Gruppe G-II sind,
wobei II eine Gruppe der Formel 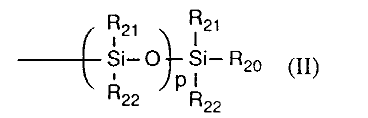 ist und
G eine direkte Bindung oder eine zweiwertige Gruppe einer der folgenden Formeln ist: -(CH₂)_{q}-, -(CH₂)_{q}-O-, -(CH₂)_{q}-O-R₂₆-, -(CH₂)_{q}-CO-X-(CH₂)ᵣ-, -(CH₂)_{q}-CO-X-(CH₂)ᵣ-O-, 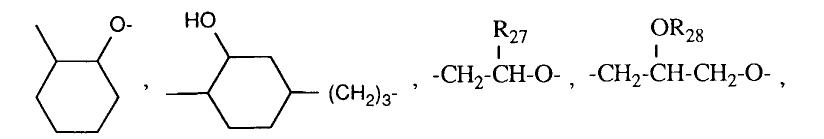 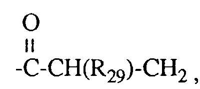 -CH₂-CH(OH)-CH₂-Y-(CH₂)_{q}-, worin q und r unabhängig voneinander 1-4 und p 0-50 sind,
R₂₆ C₁-C₁₂-Alkylen, Cyclohexylen oder Phenylen bedeutet,
R₂₇ C₁-C₁₂-Alkyl, C₅-C₈-Cycloalkyl, Phenyl, C₂-C₁₃-Alkoxymethyl, C₆-C₉-Cycloalkoxymethyl oder Phenoxymethyl bedeutet,
R₂₈ eine Gruppe der Formel G-II bedeutet,
R₂₉ Wasserstoff oder Methyl ist,
X -O- oder -NR₂₃- bedeutet, worin R₂₃ Wasserstoff, C₁-C₁₂-Alkyl oder eine Gruppe -(CH₂)₃-G-II oder -(CH₂)₃-O-G-II bedeutet,
Y -O- oder -NH- bedeutet,
R₂₀, R₂₁ und R₂₂ unabhängig voneinander C₁-C₁₈-Alkyl, Cyclohexyl, Phenyl oder C₁-C₁₈-Alkoxy bedeuten.

2. Photographisches Material nach Anspruch 1, dadurch gekennzeichnet, dass die Reste R₁ unabhängig voneinander ein Rest der Formel -CH₂-CH(ORₓ)R_{y}, -CH₂CH(ORₓ)CH₂OR_{z}, 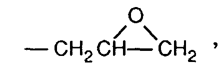 -CH₂COR_{y} oder -CH₂COCH₂OR_{z} sind, wobei
Rₓ H, -CORₛ, -COOR_{w} oder -SiRₚR_{q}Rᵣ,
R_{y} C₁-C₁₈-Alkyl oder Phenyl-C₁-C₄-Alkyl,
R_{z} C₁-C₁₈-Alkyl, C₂-C₁₈-Alkenyl, Phenyl-C₁-C₄-Alkyl, -CORₛ oder durch Sauerstoff unterbrochenes C₂-C₂₄-Alkyl oder C₂-C₂₄-Hydroxyalkyl,
Rₛ C₁-C₁₈-Alkyl, C₂-C₁₈-Alkenyl oder Phenyl,
R_{w} C₁-C₄-Alkyl und
Rₚ, R_{q} und Rᵣ unabhängig voneinander C₁-C₆-Alkyl oder Phenyl
bedeuten; oder
die Reste R₁ unabhängig voneinander eine Gruppe G-II sind,
wobei II eine Gruppe der Formel 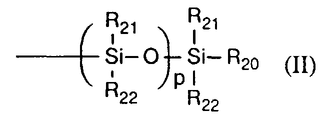 ist und
G eine direkte Bindung oder eine zweiwertige Gruppe einer der folgenden Formeln ist:
-(CH₂)_{q}-_{,} -(CH₂)_{q}-O-, -(CH₂)_{q}-O-R₂₆-, -(CH₂)_{q}-CO-X-(CH₂)ᵣ-, -(CH₂)_{q}-CO-X-(CH₂)ᵣ-O-, 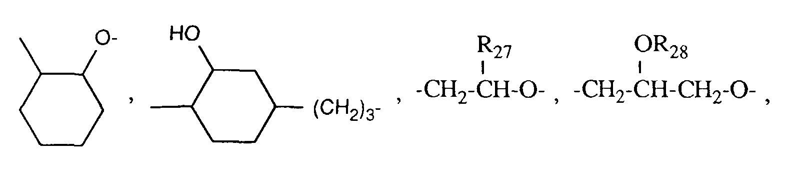 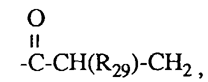
-CH₂-CH(OH)-CH₂-Y-(CH₂)_{q}-,
worin q und r unabhängig voneinander 1-4 und p 0-50 sind,
R₂₆ C₁-C₁₂-Alkylen, Cyclohexylen oder Phenylen bedeutet,
R₂₇ C₁-C₁₂-Alkyl, C₅-C₈-Cycloalkyl, Phenyl, C₂-C₁₃-Alkoxymethyl, C₆-C₉-Cycloalkoxymethyl oder Phenoxymethyl bedeutet,
R₂₈ eine Gruppe der Formel G-II bedeutet,
R₂₉ Wasserstoff oder Methyl ist,
X -O- oder -NR₂₃- bedeutet, worin R₂₃ Wasserstoff, C₁-C₁₂-Alkyl oder eine Gruppe -(CH₂)₃-G-II oder -(CH₂)₃-O-G-II bedeutet,
Y -O- oder -NH- bedeutet,
R₂₀, R₂₁ und R₂₂ unabhängig voneinander C₁-C₁₈-Alkyl, Cyclohexyl, Phenyl oder C₁-C₁₈-Alkoxy bedeuten.

3. Photographisches Material nach Anspruch 1, dadurch gekennzeichnet, dass die Reste R₁ unabhängig voneinander Reste der Formel -CH₂-CH(ORₓ)R_{y}, -CH₂CH(ORₓ)CH₂OR_{z}, -CH₂COR_{y} oder -CH₂COCH₂OR_{z} bedeuten, wobei
Rₓ H, -CORₛ, -COOR_{w} oder -SiRₚR_{q}Rᵣ,
R_{y} C₁-C₈-Alkyl,
R_{z} C₁-C₁₈-Alkyl, C₂-C₁₈-Alkenyl, Benzyl, -CORₛ oder durch Sauerstoff unterbrochenes C₂-C₂₄-Alkyl oder C₂-C₂₄-Hydroxyalkyl,
Rₛ C₁-C₁₈-Alkyl, C₂-C₁₈-Alkenyl oder Phenyl,
R_{w} C₁-C₄-Alkyl und
Rₚ, R_{q} und Rᵣ unabhängig voneinander C₁-C₆-Alkyl
bedeuten; oder
R₁ eine Gruppe G-II bedeuten,
wobei II eine Gruppe der Formel 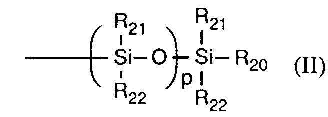 ist und
G eine direkte Bindung oder eine zweiwertige Gruppe einer der folgenden Formeln ist: -(CH₂)_{q}-, -(CH₂)_{q}-O-, -(CH₂)_{q}-CO-X-(CH₂)ᵣ-, 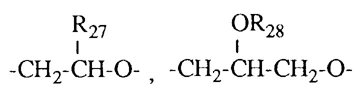 oder -CH₂-CH(OH)-CH₂-Y-(CH₂)_{q}-,
worin q und r unabhängig voneinander 1, 2 oder 3 und p 0-50 sind,
R₂₇ Methyl, Phenyl, C₃-C₉-Alkoxymethyl oder Phenoxymethyl bedeutet,
R₂₈ eine Gruppe der Formel G-II bedeutet,
X und Y -O- bedeuten,
R₂₀, R₂₁ und R₂₂ unabhängig voneinander C₁-C₈-Alkyl, Phenyl oder C₁-C₈-Alkoxy bedeuten.

4. Photographisches Material nach Anspruch 1, dadurch gekennzeichnet, dass es in der weiteren Schicht und/oder in der rotempfindlichen Silberhalogenidemulsionsschicht anstelle des UV-Absorbers der Formel (1) einen UV-Absorber vom Benztriazoltyp enthält, insbesondere der Formel 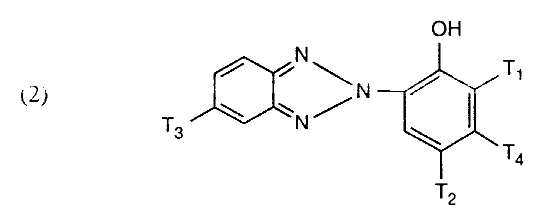 worin T₁, T₂ und T₃ unabhängig voneinander Wasserstoff, Halogen, Alkyl, Alkyl substituiert mit einer Carbonsäureestergruppe, Alkoxy, Aryloxy, Hydroxyl oder Acyloxy sind und T₄ Wasserstoff, Alkoxy, Aryloxy oder Acyloxy ist.

5. Photographisches Material, enthaltend auf einem Träger eine blauempfindliche, eine grünempfindliche und/oder eine rotempfindliche Silberhalogenidemulsionsschicht sowie eine Protektionsschicht, wobei zwischen der obersten Silberhalogenidemulsionsschicht und der Protektionsschicht eine Schicht mit einem UV-Absorber angeordnet ist, dadurch gekennzeichnet, dass (a) der UV-Absorber der Formel 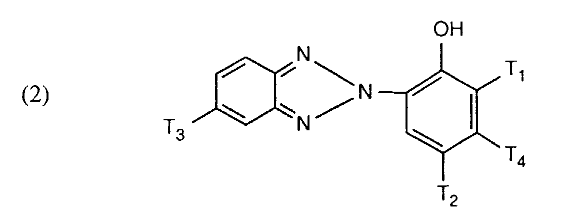 entspricht, worin T₁, T₂ und T₃ unabhängig voneinander Wasserstoff, Halogen, Alkyl, Alkyl substituiert mit einer Carbonsäureestergruppe, Alkoxy, Aryloxy, Hydroxyl oder Acyloxy sind und T₄ Wasserstoff, Alkoxy, Aryloxy oder Acyloxy ist, und (b) das Material mindestens eine weitere Schicht aufweist, welche einen UV-Absorber der Formel (1) enthält.

6. Photographisches Material, enthaltend auf einem Träger mindestens 2 Silberhalogenidemulsionsschichten mit einer zwischen diesen Schichten liegenden Schicht mit einem UV-Absorber, dadurch gekennzeichnet, dass der UV-Absorber der Formel (1) entspricht.

7. Photographisches Material, enthaltend auf einem Träger eine rotempfindliche Silberhalogenidemulsionsschicht sowie gegebenenfalls eine blauempfindliche und/oder grünempfindliche Silberhalogenidemulsionsschicht, dadurch gekennzeichnet, dass die rotempfindliche Silberhalogenidemulsionsschicht einen UV-Absorber der Formel (1) enthält.

8. Photographisches Material nach einem der Ansprüche 1 bis 7, dadurch gekennzeichnet, dass in den Schichten, die einen UV-Absorber enthalten können, eine Mischung aus den UV-Absorbern der Formeln (1) und (2) vorliegt.

9. Photographisches Material nach Anspruch 1, 5, 6 oder 7, dadurch gekennzeichnet, dass die rotempfindliche Silberhalogenidemulsionsschicht einen Cyankuppler der Formel 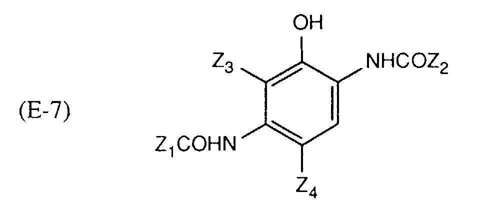 und/oder der Formel 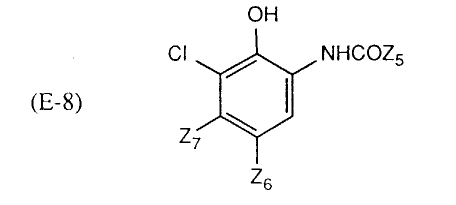 enthält, worin
Z₁ Alkyl, Aryl, Z₂ Alkyl, Cycloalkyl, Aryl, eine heterocyclische Gruppe, oder eine Ballastgruppe, Z₃ Wasserstoff oder Halogen ist, Z₁ und Z₃ zusammen einen Ring bilden können, und Z₄ Wasserstoff oder eine Abgangsgruppe ist, und Z₅ eine Ballastgruppe, Z₆ Wasserstoff oder eine Abgangsgruppe und Z₇ Alkyl ist.

10. Photographisches Material nach Anspruch 1, 5, 6 oder 7, dadurch gekennzeichnet, dass die grünempfindliche Silberhalogenidemulsionsschicht einen Magentakuppler der Formel 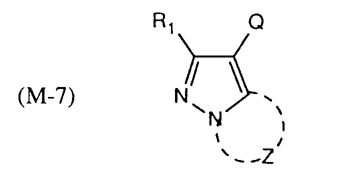 enthält, worin R₁ Wasserstoff oder ein Substituent ist, Z die zur Vervollständigung eines 5-gliedrigen Ringes mit 2 oder 3 Stickstoffatomen notwendigen nichtmetallischen Atome darstellt, wobei dieser Ring substituiert sein kann, und Q Wasserstoff oder eine Abgangsgruppe ist.

11. Photographisches Material nach Anspruch 1, 5, 6 oder 7, dadurch gekennzeichnet, dass die grünempfindliche Silberhalogenidemulsionsschicht einen Magentakuppler der Formel 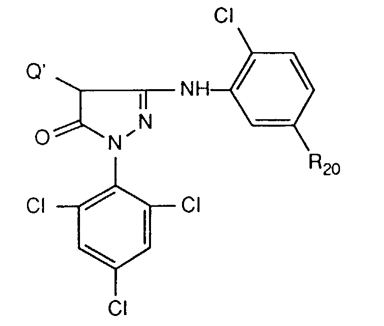 enthält, worin R₂₀ Wasserstoff, Alkyl, Acylamino, Carbamoyl, Sulfamoyl, Sulfonamido, Alkoxycarbonyl, Acyloxy oder eine Urethangruppe und Q' eine Abgangsgruppe ist.

12. Verbindungen der Formel 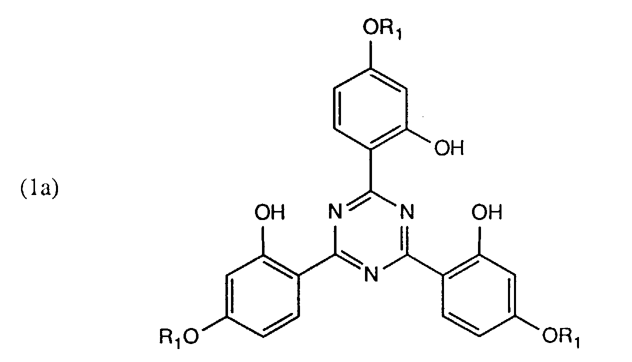 worin R₁ unabhängig voneinander einen Rest der Formel -CH₂-CH(ORₓ)R_{y} oder -CH₂CH(ORₓ)CH₂OR_{z} bedeuten, wobei
Rₓ -CORₛ, -COOR_{w} oder -SiRₚR_{q}Rᵣ,
R_{y} C₁-C₁₈-Alkyl oder Phenyl-C₁-C₄-Alkyl,
R_{z} C₁-C₁₈-Alkyl, C₂-C₁₈-Alkenyl, Phenyl-C₁-C₄-Alkyl, -CORₛ oder durch Sauerstoff unterbrochenes C₁-C₂₄-Alkyl oder C₂-C₂₄-Hydroxyalkyl,
Rₛ C₁-C₁₈-Alkyl, C₂-C₁₈-Alkenyl oder Phenyl,
R_{w} C₁-C₄-Alkyl und
Rₚ, R_{q} und Rᵣ unabhängig voneinander C₁-C₆-Alkyl oder Phenyl
bedeuten; oder
die Reste R₁ unabhängig voneinander eine Gruppe G-II bedeuten,
wobei II eine Gruppe der Formel 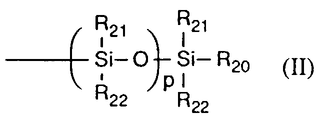 ist und
G eine direkte Bindung oder eine zweiwertige Gruppe einer der folgenden Formeln ist:
-(CH₂)_{q}-, -(CH₂)_{q}-O-, -(CH₂)_{q}-O-R₂₆-, -(CH₂)_{q}-CO-X-(CH₂)ᵣ-, -(CH₂)_{q}-CO-X-(CH₂)ᵣ-O-, 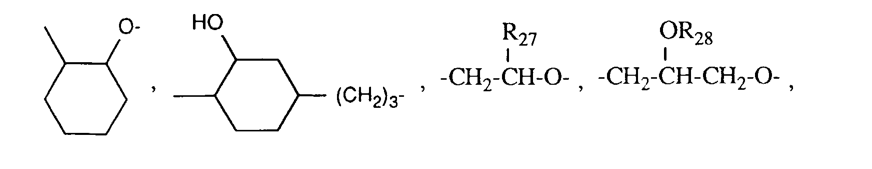 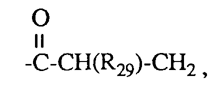
-CH₂-CH(OH)-CH₂-Y-(CH₂)_{q}-, worin q und r unabhängig voneinander 1-4 und p 0-50 sind,
R₂₆ C₁-C₁₂-Alkylen, Cyclohexylen oder Phenylen bedeutet,
R₂₇ C₁-C₁₂-Alkyl, C₅-C₈-Cycloalkyl, Phenyl, C₂-C₁₃-Alkoxymethyl, C₆-C₉-Cycloalkoxymethyl oder Phenoxymethyl bedeutet,
R₂₈ eine Gruppe der Formel G-II bedeutet,
R₂₉ Waserstoff oder Methyl ist,
X -O- oder -NR₂₃- bedeutet, worin R₂₃ Wasserstoff, C₁-C₁₂-Alkyl oder eine Gruppe -(CH₂)₃-G-II oder -(CH₂)₃-O-G-II bedeutet,
Y -O- oder -NH- bedeutet,
R₂₀, R₂₁ und R₂₂ unabhängig voneinander C₁-C₁₈-Alkyl, Cyclohexyl, Phenyl oder C₁-C₁₈-Alkoxy bedeuten.

## Claims

1. A photographic material comprising, on a base, blue-sensitive, green-sensitive and/or red-sensitive silver-halide emulsion layers and, if desired, a protection layer, a layer containing a UV absorber being arranged between the uppermost silver-halide emulsion layer and the protection layer, or on top of the uppermost silver-halide layer, wherein the UV absorber conforms to the formula 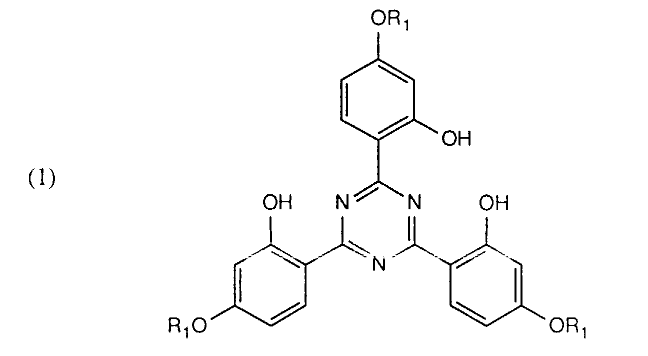 in which the radicals R₁, independently of one another, are alkyl having 1 to 18 carbon atoms and substituted by hydroxyl, alkenoxy having 2 to 18 carbon atoms, -CO₂H, -CO₂R₂ and/or -O-COR₃, oxygen-interrupted alkyl or hydroxyalkyl or glycidyloxyalkyl having 3 to 50 carbon atoms, glycidyl, a group of the formula 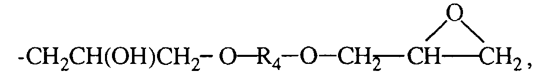 phenylalkyl having 1 to 5 carbon atoms in the alkyl moiety or -CH₂CH(OH)R₇, where R₂ is alkyl having 1 to 18 carbon atoms, or oxygen-, sulfur- or nitrogen-interrupted alkyl or hydroxyalkyl having 3 to 30 carbon atoms, hydroxyalkyl having 2 to 18 carbon atoms, alkenyl having 3 to 18 carbon atoms, glycidyl, cycloalkyl having 5 to 8 carbon atoms, benzyl, alkylphenyl having 1 to 12 carbon atoms in the alkyl moiety, phenyl, furfuryl or a radical of the formula -CH₂CH(OH)R₇, R₃ is alkyl having 1 to 18 carbon atoms, alkenyl having 2 to 18 carbon atoms or phenyl, R₄ is alkylene having 2 to 10 carbon atoms, phenylene or a group of the formula 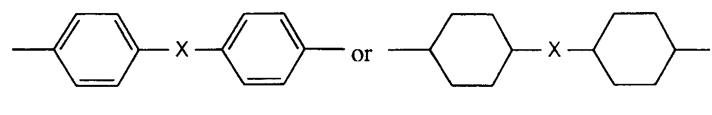 and R₇ is phenylalkyl having 1 to 6 carbon atoms in the alkyl moiety or a radical of the formula -CH₂OR₈, where X is -O-, -S-, -SO₂-, -CH₂- or -C(CH₃)₂- and R₈ is cyclohexyl, benzyl, phenyl or tolyl; or the radicals R₁, independently of one another, are radicals of the formula -CH₂-CH(ORₓ)R_{y}, -CH₂CH(ORₓ)CH₂OR_{z}, 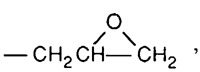 -CH₂COR_{y} or -CH₂COCH₂OR_{z}, where Rₓ is H, -CORₛ, -COOR_{w} or -SiRₚR_{q}Rᵣ, R_{y} is C₁-C₁₈alkyl or phenyl-C₁-C₄alkyl, R_{z} is C₁-C₁₈alkyl, C₂-C₁₈alkenyl, phenyl-C₁-C₄alkyl, -CORₛ or oxygen-interrupted C₂-C₂₄alkyl or C₂-C₂₄hydroxyalkyl, Rₛ is C₁-C₁₈alkyl, C₂-C₁₈alkenyl or phenyl, R_{w} is C₁-C₄alkyl and Rₚ, R_{q} and Rᵣ, independently of one another, are C₁-C₆alkyl or phenyl;
or the radicals R₁, independently of one another, are G-II groups, where II is a group of the formula 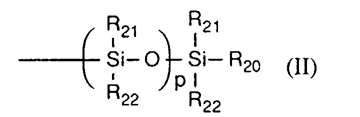 and G is a direct bond or a divalent group of one of the following formulae: -(CH₂)_{q}-, -(CH₂)_{q}-O-, -(CH₂)_{q}-O-R₂₆-, -(CH₂)_{q}-CO-X-(CH₂)ᵣ-, -(CH₂)_{q}-CO-X-(CH₂)ᵣ-O-, 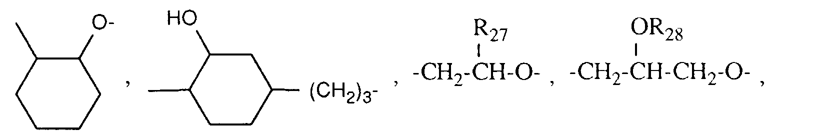 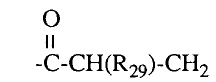 or -CH₂-CH(OH)-CH₂-Y-(CH₂)_{q}-, in which q and r, independently of one another, are 1-4 and p is 0-50, R₂₆ is C₁-C₁₂alkylene, cyclohexylene or phenylene, R₂₇ is C₁-C₁₂alkyl, C₅-C₈cycloalkyl, phenyl, C₂-C₁₃alkoxymethyl, C₆-C₉cycloalkoxymethyl or phenoxymethyl, R₂₈ is a group of the formula G-II, R₂₉ is hydrogen or methyl, X is -O- or -NR₂₃-, in which R₂₃ is hydrogen, C₁-C₁₂alkyl or a -(CH₂)₃-G-II or -(CH₂)₃-O-G-II group, Y is -O- or -NH-, and R₂₀, R₂₁ and R₂₂, independently of one another, are C₁-C₁₈alkyl, cyclohexyl, phenyl or C₁-C₁₈alkoxy.

2. A photographic material according to claim 1, wherein the radicals R₁, independently of one another, are radicals of the formula -CH₂-CH(ORₓ)R_{y}, -CH₂CH(ORₓ)CH₂OR_{z}, 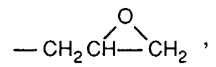 -CH₂COR_{y} or -CH₂COCH₂OR_{z}, where Rₓ is H, -CORₛ, -COOR_{w} or -SiRₚR_{q}Rᵣ, R_{y} is C₁-C₁₈alkyl or phenyl-C₁-C₄alkyl, R_{z} is C₁-C₁₈alkyl, C₂-C₁₈alkenyl, phenyl-C₁-C₄alkyl, -CORₛ or oxygen-interrupted C₂-C₂₄alkyl or C₂-C₂₄hydroxyalkyl, Rₛ is C₁-C₁₈alkyl, C₂-C₁₈alkenyl or phenyl, R_{w} is C₁-C₄alkyl and Rₚ, R_{q} and Rᵣ, independently of one another, are C₁-C₆alkyl or phenyl;
or the radicals R₁, independently of one another, are G-II groups, where II is a group of the formula 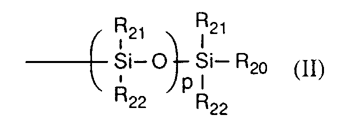 and G is a direct bond or a divalent group of one of the following formulae: -(CH₂)_{q}-, -(CH₂)_{q}-O-, -(CH₂)_{q}-O-R₂₆-, -(CH₂)_{q}-CO-X-(CH₂)ᵣ-, -(CH₂)_{q}-CO-X-(CH₂)ᵣ-O-, 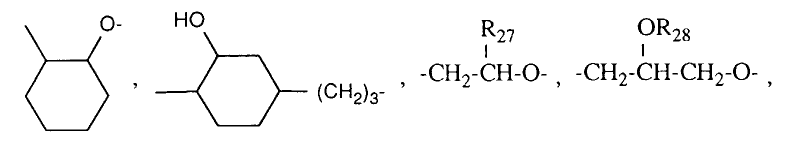 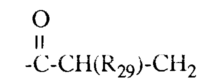 or -CH₂-CH(OH)-CH₂-Y-(CH₂)_{q}-, in which q and r, independently of one another, are 1-4 and p is 0-50, R₂₆ is C₁-C₁₂alkylene, cyclohexylene or phenylene, R₂₇ is C₁-C₁₂alkyl, C₅-C₈cycloalkyl, phenyl, C₂-C₁₃alkoxymethyl, C₆-C₉cycloalkoxymethyl or phenoxymethyl, R₂₈ is a group of the formula G-II, R₂₉ is hydrogen or methyl, X is -O- or -NR₂₃-, in which R₂₃ is hydrogen, C₁-C₁₂alkyl or a -(CH₂)₃-G-II or -(CH₂)₃-O-G-II group, Y is -O- or -NH-, and R₂₀, R₂₁ and R₂₂, independently of one another, are C₁-C₁₈alkyl, cyclohexyl, phenyl or C₁-C₁₈alkoxy.

3. A photographic material according to claim 1, wherein the radicals R₁, independently of one another, are radicals of the formula -CH₂-CH(ORₓ)R_{y}, -CH₂CH(ORₓ)CH₂OR_{z}, -CH₂COR_{y} or -CH₂COCH₂OR_{z}, where Rₓ is H, -CORₛ, -COOR_{w} or -SiRₚR_{q}Rᵣ, R_{y} is C₁-C₈alkyl, R_{z} is C₁-C₁₈alkyl, C₂-C₁₈alkenyl, benzyl, -CORₛ or oxygen-interrupted C₂-C₂₄alkyl or C₂-C₂₄hydroxyalkyl, Rₛ is C₁-C₁₈alkyl, C₂-C₁₈alkenyl or phenyl, R_{w} is C₁-C₄alkyl, and Rₚ, R_{q} and Rᵣ, independently of one another, are C₁-C₆alkyl; or R₁ is a G-II group, where II is a group of the formula 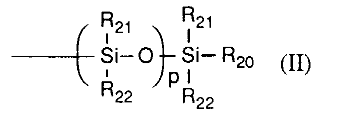 and G is a direct bond or a divalent group of one of the following formulae: -(CH₂)_{q}-, -(CH₂)_{q}-O-, -(CH₂)_{q}-CO-X-(CH₂)ᵣ-, 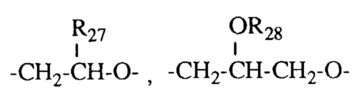 or -CH₂-CH(OH)-CH₂-Y-(CH₂)_{q}-, in which q and r, independently of one another, are 1, 2 or 3 and p is 0-50, R₂₇ is methyl, phenyl, C₃-C₉alkoxymethyl or phenoxymethyl, R₂₈ is a group of the formula G-II, X and Y are -O-, R₂₀, R₂₁ and R₂₂, independently of one another, are C₁-C₈alkyl, phenyl or C₁-C₈alkoxy.

4. A photographic material according to claim 1, wherein a UV absorber of the benzotriazole type, in particular of the formula 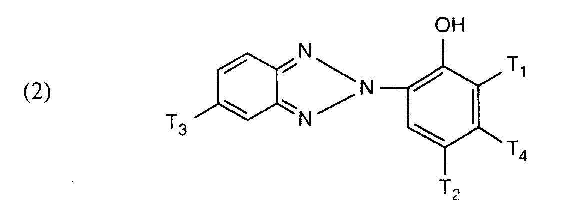 in which T₁, T₂ and T₃, independently of one another, are hydrogen, halogen, alkyl, carboxylate-substituted alkyl, alkoxy, aryloxy, hydroxyl or acyloxy, and T₄ is hydrogen, alkoxy, aryloxy or acyloxy,
replaces the UV absorber of the formula (1) in the further layer and/or in the red-sensitive silver-halide emulsion layer.

5. A photographic material comprising, on a base, blue-sensitive, green-sensitive and/or red-sensitive silver-halide emulsion layers and a protection layer, a layer containing a UV absorber being arranged between the uppermost silver-halide emulsion layer and the protection layer, wherein (a) the UV absorber conforms to the formula 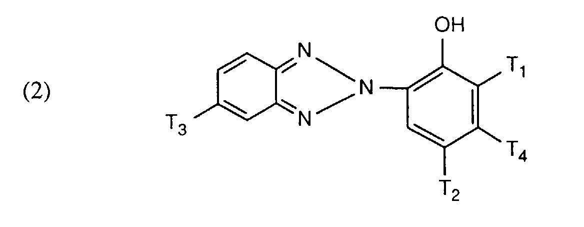 in which T₁, T₂ and T₃, independently of one another, are hydrogen, halogen, alkyl, carboxylate-substituted alkyl, alkoxy, aryloxy, hydroxyl or acyloxy, and T₄ is hydrogen, alkoxy, aryloxy or acyloxy, and (b) the material contains at least one further layer containing a UV absorber of the formula (1).

6. A photographic material comprising, on a base, at least two silver-halide emulsion layers with a UV absorber-containing layer between these layers, wherein the UV absorber conforms to the formula (1).

7. A photographic material comprising, on a base, a red-sensitive silver-halide emulsion layer and, if desired, blue-sensitive and/or green-sensitive silver-halide emulsion layers, wherein the red-sensitive silver-halide emulsion layer contains a UV absorber of the formula (1).

8. A photographic material according to any one of claims 1 to 7, wherein a mixture of the UV absorbers of the formulae (1) and (2) is present in the layers which may contain a UV absorber.

9. A photographic material according to claim 1, 5, 6 or 7, wherein the red-sensitive silver-halide emulsion layer contains a cyan coupler of the formula 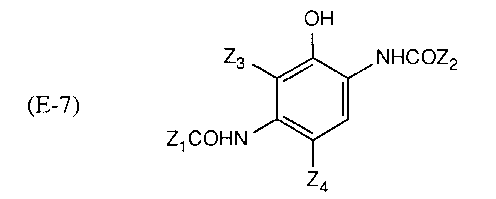 and/or of the formula 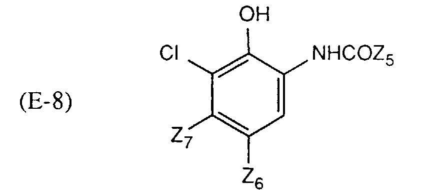 in which Z₁ is alkyl or aryl, Z₂ is alkyl, cycloalkyl, aryl, a heterocyclic group or a ballast group, Z₃ is hydrogen or halogen, Z₁ and Z₃ together can form a ring, and Z₄ is hydrogen or a leaving group, and Z₅ is a ballast group, Z₆ is hydrogen or a leaving group, and Z₇ is alkyl.

10. A photographic material according to claim 1, 5, 6 or 7, wherein the green-sensitive silver-halide emulsion layer contains a magenta coupler of the formula 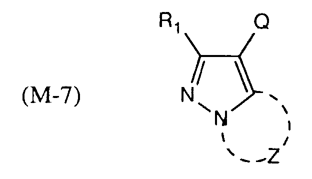 in which R₁ is hydrogen or a substituent, Z represents the non-metallic atoms necessary for completion of a 5-membered ring containing 2 or 3 nitrogen atoms, it being possible for this ring to be substituted, and Q is hydrogen or a leaving group.

11. A photographic material according to claim 1, 5, 6 or 7, wherein the green-sensitive silver-halide emulsion layer contains a magenta coupler of the formula 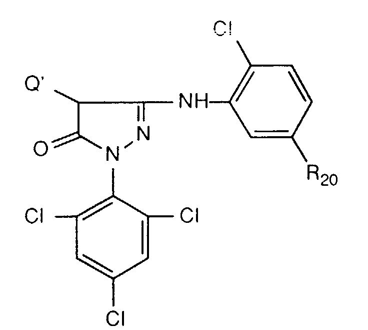 in which R₂₀ is hydrogen, alkyl, acylamino, carbamoyl, sulfamoyl, sulfonamido, alkoxycarbonyl, acyloxy or a urethane group, and Q' is a leaving group.

12. A compound of the formula 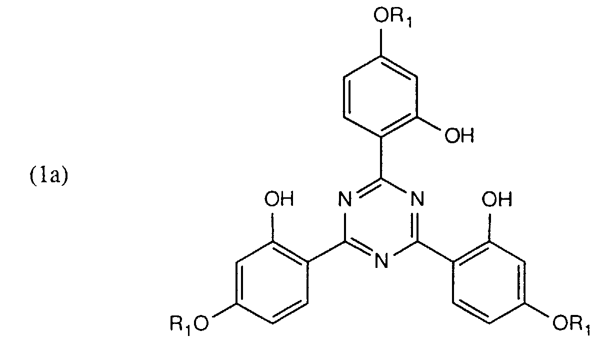 in which the radicals R₁, independently of one another, are radicals of the formula -CH₂-CH(ORₓ)R_{y}, or -CH₂CH(ORₓ)CH₂OR_{z}, where Rₓ is -CORₛ, -COOR_{w} or -SiRₚR_{q}Rᵣ, R_{y} is C₁-C₁₈alkyl or phenyl-C₁-C₄alkyl, R_{z} is C₁-C₁₈alkyl, C₂-C₁₈alkenyl, phenyl-C₁-C₄alkyl, -CORₛ or oxygen-interrupted C₁-C₂₄alkyl or C₂-C₂₄hydroxyalkyl, Rₛ is C₁-C₁₈alkyl, C₂-C₁₈alkenyl or phenyl, R_{w} is C₁-C₄alkyl and Rₚ, R_{q} and Rᵣ, independently of one another, are C₁-C₆alkyl or phenyl;
or the radicals R₁, independently of one another, are G-II groups, where II is a group of the formula 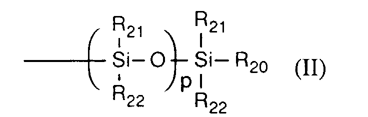 and G is a direct bond or a divalent group of one of the following formulae: -(CH₂)_{q}-, -(CH₂)_{q}-O-, -(CH₂)_{q}-O-R₂₆-, -(CH₂)_{q}-CO-X-(CH₂)ᵣ-, -(CH₂)_{q}-CO-X-(CH₂)ᵣ-O-, 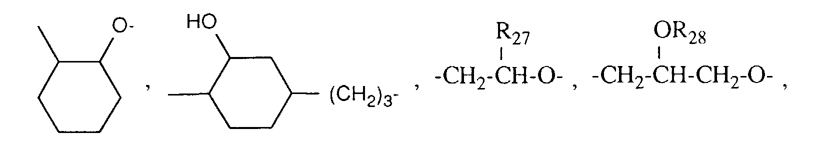 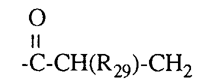 or -CH₂-CH(OH)-CH₂-Y-(CH₂)_{q}-, in which q and r, independently of one another, are 1-4 and p is 0-50, R₂₆ is C₁-C₁₂alkylene, cyclohexylene or phenylene, R₂₇ is C₁-C₁₂alkyl, C₅-C₈cycloalkyl, phenyl, C₂-C₁₃alkoxymethyl, C₆-C₉cycloalkoxymethyl or phenoxymethyl, R₂₈ is a group of the formula G-II, R₂₉ is hydrogen or methyl, X is -O- or -NR₂₃-, in which R₂₃ is hydrogen, C₁-C₁₂alkyl or a -(CH₂)₃-G-II or -(CH₂)₃-O-G-II group, Y is -O- or -NH-, and R₂₀, R₂₁ and R₂₂, independently of one another, are C₁-C₁₈alkyl, cyclohexyl, phenyl or C₁-C₁₈alkoxy.

## Revendications

1. Matériau photographique contenant sur un support une couche d'émulsion à l'halogénure d'argent sensible au bleu, une couche d'émulsion à l'halogénure d'argent sensible au vert et/ou une couche d'émulsion à l'halogénure d'argent sensible au rouge, et éventuellement une couche de protection, où une couche comportant un absorbant UV est disposée entre la couche d'émulsion à l'halogénure d'argent situé le plus haut et la couche de protection, ou encore au-dessus de la couche d'halogénure d'argent située le plus haut, caractérisé en ce que l'absorbant UV correspond à la formule : 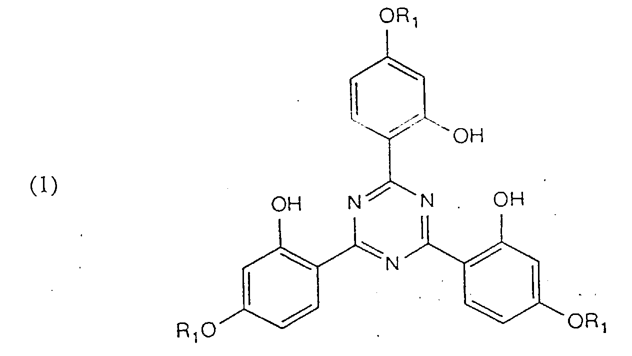 dans laquelle :
les radicaux R₁ sont, indépendamment les uns des autres, chacun un groupe alkyle ayant de 1 à 18 atomes de carbone, substitué par des substituants hydroxyle, alcényloxy ayant de 2 à 18 atomes de carbone, -CO₂H, -CO₂R₂, et/ou -O-COR₃, alkyle ou hydroxyalkyle interrompu par des oxygènes, ou glycidyloxyalkyle ayant de 3 à 50 atomes de carbone, glycidyle, un groupe de formule : 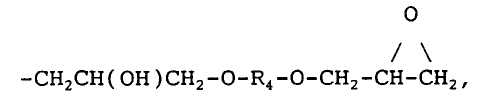 un groupe phénylalkyle ayant de 1 à 5 atomes de carbone dans le fragment alkyle, ou encore -CH₂CH(OH)R₇, où
R₂ est un groupe alkyle ayant de 1 à 18 atomes de carbone, ou un groupe alkyle ou hydroxyalkyle ayant de 3 à 30 atomes de carbone et interrompu par des oxygènes, des soufres ou des azotes, hydroxyalkyle ayant de 2 à 18 atomes de carbone, alcényle ayant de 3 à 18 atomes de carbone, glycidyle, cycloalkyle ayant de 5 à 8 atomes de carbone, benzyle, alkylphényle ayant de 1 à 12 atomes de carbone dans le fragment alkyle, phényle, furfuryle, ou un radical de formule -CH₂CH(OH)R₇,
R₃ est un groupe alkyle ayant de 1 à 18 atomes de carbone, alcényle ayant de 2 à 18 atomes de carbone ou le groupe phényle,
R₄ est un groupe alkylène ayant de 2 à 10 atomes de carbone, le groupe phénylène ou un groupe de formule : 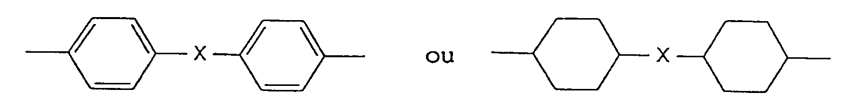
R₇ est un groupe phénylalkyle ayant de 1 à 6 atomes de carbone dans le fragment alkyle ou un radical de formule -CH₂OR₈, où
X est -O-, -S-, -SO₂-, -CH₂- ou -C(CH₃)₂-, et
R₈ est le groupe cyclohexyle, benzyle, phényle ou tolyle ;
ou encore les radicaux R₁ représentent chacun indépendamment des autres un radical de formule :
-CH₂-CH(ORₓ)R_{y}, -CH₂CH(ORₓ)CH₂OR_{z}, 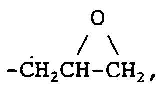
-CH₂COR_{y} ou -CH₂COCH₂OR_{z}, où
Rₓ est H, -CORₛ, -COOR_{w} ou -SiRₚR_{q}Rᵣ,
R_{y} est un groupe alkyle en C₁-C₁₈, ou phényl(alkyle en C₁-C₄),
R_{z} est un groupe alkyle en C₁-C₁₈, alcényle en C₂-C₁₈, phényl(alkyle en C₁-C₄), -COR₅, ou encore alkyle en C₂-C₂₄ ou hydroxyalkyle en C₂-C₂₄ interrompu par des oxygènes,
Rₛ est un groupe alkyle en C₁-C₁₈, alcényle en C₂-C₁₈ ou le groupe phényle,
R_{w} est un groupe alkyle en C₁-C₄, et
Rₚ, R_{q} et Rᵣ représentent chacun indépendamment des autres un groupe alkyle en C₁-C₆, ou le groupe phényle ;
ou bien les radicaux R₁, indépendamment les uns des autres représentent des groupes G-II où II est un groupe de formule : 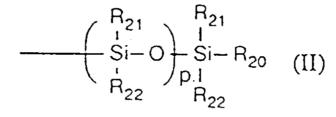 et
G est une liaison directe ou un groupe divalent ayant l'une des formules suivantes :
-(CH₂)_{q}-, -(CH₂)_{q}-O-, -(CH₂)_{q}-O-R₂₆-, -(CH₂)_{q}-CO-X-(CH₂)ᵣ-, -(CH₂)_{q}-CO-X-(CH₂)ᵣ-O-, 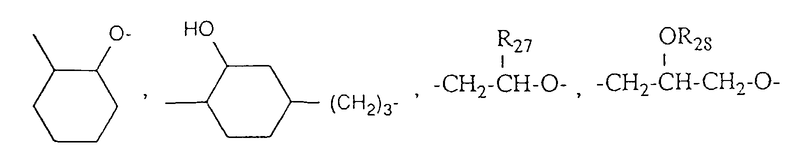 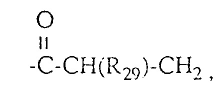
-CH₂-CH(OH)-CH₂-Y-(CH₂)_{q}-,
où :
q et r, indépendamment l'un de l'autre, valent de 1 à 4 et p vaut de 0 à 50,
R₂₆ est un groupe alkylène en C₁-C₁₂ ou le groupe cyclohexylène ou phénylène,
R₂₇ est un groupe alkyle en C₁-C₁₂, cycloalkyle en C₅-C₈, le groupe phényle, un groupe alcoxyméthyle en C₂-C₁₃, cycloalcoxyméthyle en C₆-C₉, ou le groupe phénoxyméthyle,
R₂₈ est un groupe de formule -G-II,
R₂₉ est un hydrogène ou le groupe méthyle,
X est -O- ou -NR₂₃-, où R₂₃ est un hydrogène ou un groupe alkyle en C₁-C₁₂, ou encore un groupe -(CH₂)₃-G-II ou -(CH₂)₃-O-G-II,
Y est -O- ou -NH-,
R₂₀, R₂₁ et R₂₂ sont chacun indépendamment des autres un groupe alkyle en C₁-C₁₈, le groupe cyclohexyle ou phényle, ou un groupe alcoxy en C₁-C₁₈.

2. Matériau photographique selon la revendication 1, caractérisé en ce que les radicaux R₁ représentent chacun indépendamment des autres un radical de formule :
-CH₂-CH(ORₓ)R_{y}, -CH₂CH(ORₓ)CH₂OR_{z}, 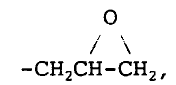
-CH₂COR_{y} ou -CH₂COCH₂OR_{z}, où
Rₓ est H, -CORₛ, -COOR_{w} ou -SiRₚR_{q}Rᵣ,
R_{y} est un groupe alkyle en C₁-C₁₈, ou phényl(alkyle en C₁-C₄),
R_{z} est un groupe alkyle en C₁-C₁₈, alcényle en C₂-C₁₈, phényl(alkyle en C₁-C₄), -COR₅, ou encore alkyle en C₂-C₂₄ ou hydroxyalkyle en C₂-C₂₄ interrompu par des oxygènes,
Rₛ est un groupe alkyle en C₁-C₁₈, alcényle en C₂-C₁₈ ou le groupe phényle,
R_{w} est un groupe alkyle en C₁-C₄, et
Rₚ, R_{q} et Rᵣ représentent chacun indépendamment des autres un groupe alkyle en C₁-C₆, ou le groupe phényle ;
ou bien les radicaux R₁, indépendamment les uns des autres représentent des groupes G-II où II est un groupe de formule : 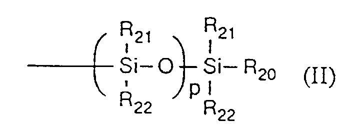 et
G est une liaison directe ou un groupe divalent ayant l'une des formules suivantes :
-(CH₂)_{q}-, -(CH₂)_{q}-O-, -(CH₂)_{q}-O-R₂₆-, -(CH₂)_{q}-CO-X-(CH₂)ᵣ-, -(CH₂)_{q}-CO-X-(CH₂)ᵣ-O-, 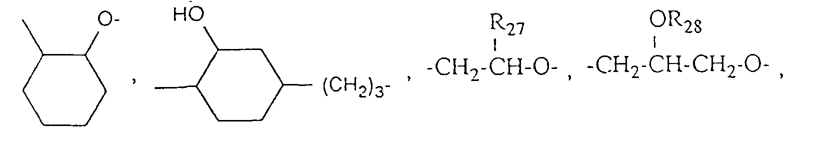 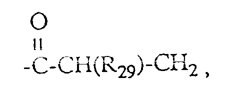
-CH₂-CH(OH)-CH₂-Y-(CH₂)_{q}-,
où :
q et r, indépendamment l'un de l'autre, valent de 1 à 4 et p vaut de 0 à 50,
R₂₆ est un groupe alkylène en C₁-C₁₂ ou le groupe cyclohexylène ou phénylène,
R₂₇ est un groupe alkyle en C₁-C₁₂, cycloalkyle en C₅-C₈, le groupe phényle, un groupe alcoxyméthyle en C₂-C₁₃, cycloalcoxyméthyle en C₆-C₉, ou le groupe phénoxyméthyle,
R₂₈ est un groupe de formule -G-II,
R₂₉ est un hydrogène ou le groupe méthyle,
X est -O- ou -NR₂₃-, où R₂₃ est un hydrogène ou un groupe alkyle en C₁-C₁₂, ou encore un groupe -(CH₂)₃-G-II ou -(CH₂)₃-O-G-II,
Y est -O- ou -NH-,
R₂₀, R₂₁ et R₂₂ sont chacun indépendamment des autres un groupe alkyle en C₁-C₁₈, le groupe cyclohexyle ou phényle, ou un groupe alcoxy en C₁-C₁₈.

3. Matériau photographique selon la revendication 1, caractérisé en ce que les radicaux R₁, indépendamment les uns des autres, sont des radicaux de formule -CH₂-CH(ORₓ)R_{y}, -CH₂CH(ORₓ)CH₂OR_{z}, -CH₂COR_{y} ou -CH₂COCH₂OR_{z}, où :
Rₓ est H, -CORₛ, -COOR_{w} ou -SiRₚR_{q}Rᵣ,
R_{y} est un groupe alkyle en C₁-C₈,
R_{z} est un groupe alkyle en C₁-C₁₈, alcényle en C₂-C₁₈, le groupe benzyle, -COR₅ ou un groupe alkyle en C₂-C₂₄ ou hydroxyalkyle en C₂-C₂₄ interrompu par des oxygènes,
Rₛ est un groupe alkyle en C₁-C₁₈, alcényle en C₂-C₁₈, ou le groupe phényle,
R_{w} est un groupe alkyle en C₁-C₄, et
Rₚ, R_{q} et Rᵣ sont chacun indépendamment des autres des groupes alkyle en C₁-C₆ ; ou encore
R₁ est un groupe G-II, où II est un groupe de formule : 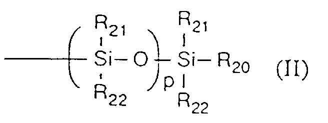 et
G est une liaison directe ou un groupe divalent ayant l'une des formules suivantes :
-(CH₂)_{q}-, -(CH₂)_{q}-O-, -(CH₂)_{q}-CO-X-(CH₂)ᵣ-, 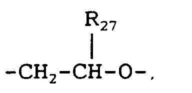 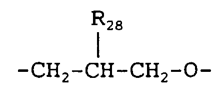
ou -CH₂-CH(OH)-CH₂-Y-(CH₂)_{q}-,
où :
q et r, indépendamment l'un de l'autre, valent chacun 1, 2 ou 3, et p vaut de 0 à 50,
R₂₇ est le groupe méthyle, phényle, un groupe alcoxyméthyle en C₃-C₉, ou le groupe phénoxyméthyle,
R₂₈ est un groupe de formule G-II, et
X et Y sont -O-,
R₂₀, R₂₁ et R₂₂, indépendamment les uns des autres, représentent chacun un groupe alkyle en C₁-C₈, phényle ou alcoxy en C₁-C₈.

4. Matériau photographique selon la revendication 1, caractérisé en ce que, dans les autres couches et/ou dans la couche d'émulsion à l'halogénure d'argent sensible au rouge, il contient au lieu de l'absorbant UV de formule (1) un absorbant UV du type benzotriazole, en particulier ayant la formule suivante : 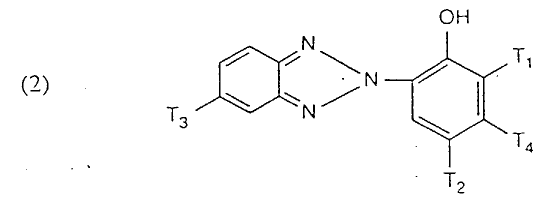 dans laquelle T₁, T₂ et T₃ sont chacun indépendamment des autres un hydrogène ou un groupe halogéno, alkyle, alkyle substitué par un groupe carboxylate ou alcoxy, aryloxy, hydroxyle ou acyloxy, et T₄ est un hydrogène ou un groupe alcoxy, aryloxy ou acyloxy.

5. Matériau photographique contenant sur un support une couche d'émulsion à l'halogénure d'argent sensible au bleu, une telle couche sensible au vert et/ou une telle couche sensible au rouge, ainsi qu'une couche de protection, où une couche comportant un absorbant UV est disposée entre la couche supérieure d'émulsion à l'halogénure d'argent et la couche de protection, caractérisé en ce que (a) l'absorbant UV correspond à la formule suivante : 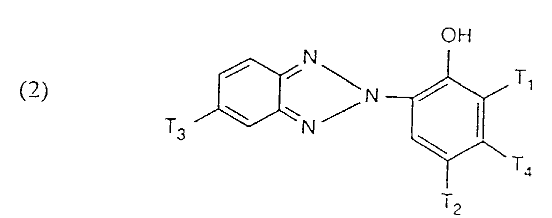 dans laquelle :
T₁, T₂ et T₃, indépendamment des autres, sont chacun un hydrogène ou un groupe halogéno, alkyle, alkyle substitué par un groupe carboxylate ou encore alcoxy, aryloxy, hydroxyle ou acyloxy, et T₄ est un hydrogène ou un groupe alcoxy, aryloxy ou acyloxy, et
(b) le matériau comporte au moins une couche supplémentaire, qui contient un absorbant UV de formule (1).

6. Matériau photographique contenant sur un support au moins deux couches d'émulsion à l'halogénure d'argent, avec une couche, disposée entre ces couches, comportant un absorbant UV, caractérisé en ce que l'absorbant UV correspond à la formule (1).

7. Matériau photographique contenant sur un support une couche d'émulsion à l'halogénure d'argent sensible au rouge, et éventuellement une couche d'émulsion à l'halogénure d'argent sensible au bleu et/ou sensible au vert, caractérisé en ce que la couche d'émulsion à l'halogénure d'argent sensible au rouge contient un absorbant UV ayant la formule (1).

8. Matériau photographique selon l'une des revendications 1 à 7, caractérisé en ce que l'on a dans les couches pouvant contenir un absorbant UV un mélange des absorbants UV ayant les formules (1) et (2).

9. Matériau photographique selon la revendication 1, 5, 6 ou 7, caractérisé en ce que la couche d'émulsion à l'halogénure d'argent sensible au rouge contient un copulant cyan de formule : 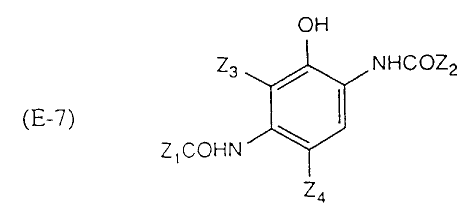 et/ou de formule : 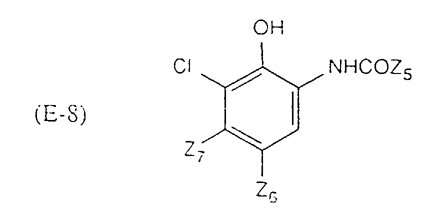 où :
Z₁ est un groupe alkyle ou aryle, Z₂ est un groupe alkyle, cycloalkyle, aryle, un groupe hétérocyclique ou un groupe ballast, Z₃ est un hydrogène ou un halogène, Z₁ et Z₃ peuvent former ensemble un noyau, et Z₄ est un hydrogène ou un groupe éliminable, et Z₅ est un groupe ballast, Z₆ est un hydrogène ou un groupe éliminable, et Z₇ est un groupe alkyle.

10. Matériau photographique selon la revendication 1, 5, 6 ou 7, caractérisé en ce que la couche d'émulsion à l'halogénure d'argent sensible au vert contient un copulant magenta de formule : 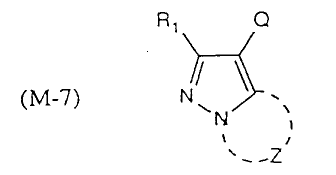 dans laquelle :
R₁ est un hydrogène ou un substituant, Z représente les atomes non métalliques nécessaires pour compléter un noyau à 5 chaînons avec 2 ou 3 atomes d'azote, ce noyau pouvant être substitué, et Q est un hydrogène ou un groupe éliminable.

11. Matériau photographique selon la revendication 1, 5, 6 ou 7, caractérisé en ce que la couche d'émulsion à l'halogénure d'argent sensible au vert contient un copulant magenta de formule : 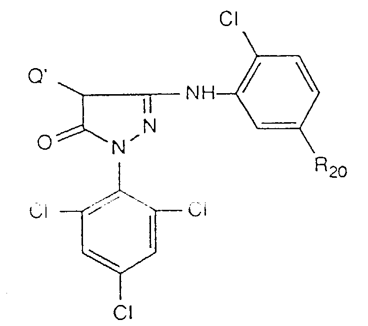 dans laquelle :
R₂₀ est un hydrogène ou un groupe alkyle, acylamino, carbamoyle, sulfamoyle, sulfonamido, alcoxycarbonyle, acyl-oxy, ou un groupe uréthanne, et Q' est un groupe éliminable.

12. Composés de formule : 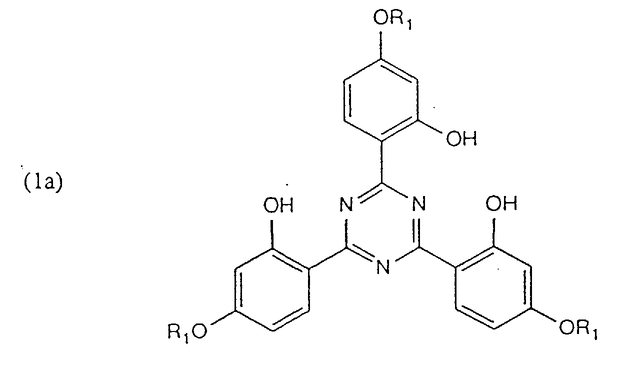 dans laquelle :
les radicaux R₁, indépendamment des autres, représentent chacun un groupe de formule -CH₂-CH(ORₓ)R_{y} ou -CH₂CH(ORₓ)CH₂OR_{z}, où
Rₓ est -CORₛ, -COOR_{w} ou -SiRₚR_{q}Rᵣ,
R_{y} est un groupe alkyle en C₁-C₁₈, ou phényl(alkyle en C₁-C₄),
R_{z} est un groupe alkyle en C₁-C₁₈, alcényle en C₂-C₁₈, phényl(alkyle en C₁-C₄), -CORₛ, ou encore alkyle en C₁-C₂₄, ou hydroxyalkyle en C₂-C₂₄, interrompu par des oxygènes,
Rₛ est un groupe alkyle en C₁-C₁₈, alcényle en C₂-C₁₈ ou phényle,
R_{w} est un groupe alkyle en C₁-C₄, et
Rₚ, R_{q} et Rᵣ sont chacun indépendamment des autres un groupe alkyle en C₁-C₆ ou phényle ; ou encore
les radicaux R₁, indépendamment les uns des autres, représentent chacun un groupe G-II, où II représente un groupe de formule : 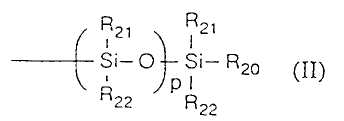 et
G est une liaison directe ou un groupe divalent ayant l'une des formules suivantes : 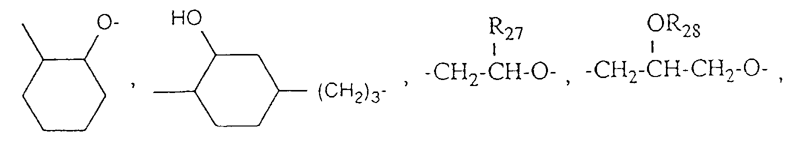 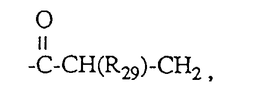 -CH₂-CH(OH)-CH₂-Y-(CH₂)_{q}-,
où :
q et r, indépendamment l'un de l'autre, valent chacun de 1 à 4, et p vaut de 0 à 50,
R₂₆ est un groupe alkylène en C₁-C₁₂, cyclohexylène ou phénylène,
R₂₇ est un groupe alkyle en C₁-C₁₂, cycloalkyle en C₅-C₈, phényle, alcoxyméthyle en C₂-C₁₃, cycloalcoxyméthyle en C₆-C₉, ou phénoxyméthyle,
R₂₈ est un groupe de formule G-II,
R₂₉ est un hydrogène ou un groupe méthyle,
X est -O- ou -NR₂₃-, où R₂₃ est un hydrogène ou un groupe alkyle en C₁-C₁₂ ou -(CH₂)₃-G-II ou -(CH₂)₃-O-G-II,
Y est -O- ou -NH-,
R₂₀, R₂₁, R₂₂, indépendamment les uns des autres, sont chacun un groupe alkyle en C₁-C₁₈, cyclohexyle, phényle ou alcoxy en C₁-C₁₈.
